# EUROPÄISCHE PATENTANMELDUNG

(11) **EP 4 524 617 A1**
(43) Veröffentlichungstag der Anmeldung: **19.03.2025**
(21) Anmeldenummer: 23197782.8
(22) Anmeldetag: 15.09.2023
(51) Int. Cl.: G01T 1/169, G21C 17/013, G21C 17/017

(54) **VERFAHREN ZUR STRAHLENBELASTUNGSÜBERPRÜFUNG INNERHALB VON INNENVOLUMINA SOWIE DAFÜR EINGERICHTETE MESSVORRICHTUNG SOWIE COMPUTERPROGRAMMPRODUKT SOWIE VERWENDUNG**

(71) Anmelder: Aachen Institute for Nuclear Training GmbH, 52222 Stolberg, NRW (DE)
(72) Erfinder: Havenith, Dr. Andreas, verstorben (DE); Hirsch, Marius, 52072 Aachen (DE); FU, Dr. Bo, 50858 Köln (DE)
(74) Vertreter: Tanner, Lukas

(57) **Zusammenfassung**

Bei der Erfassung von Aktivitätsinventaren potentiell radioaktiver Materialien müssen Messeinrichtungen innerhalb von Innenvolumina wie z.B. solchen von Rohrleitungen positioniert werden. Bereitgestellt wird ein Verfahren zur Strahlungsdetektion innerhalb eines Innenvolumens mittels wenigstens einer Strahlungsdetektionseinheit, welche mittels einer Trageinrichtung innerhalb des Innenvolumens positioniert und verlagert wird, wobei positionsbezogen Strahlungsmessdaten bezüglich einer Messfläche erfasst werden. Erfindungsgemäß erfolgt die Strahlungsdetektion mittels der Strahlungsdetektionseinheit in einer bevorzugt koaxial an der Trageinrichtung befestigten/gekuppelten Anordnung durch Szintillationsmessung, wobei das Verfahren das Vorgeben einer vordefinierbaren Verlagerung der Strahlungsdetektionseinheit mittels der Trageinrichtung in Abhängigkeit von wenigstens einem auf den erfassten Strahlungsmessdaten basierenden Steuerungs-/Regelungsparameter umfasst. Hierdurch kann einerseits eine vorteilhafte und insbesondere auch zeiteffiziente Art und Weise der messtechnischen Überprüfung bereitgestellt werden, andererseits kann auch eine exakte Korrelation von potentiellen Strahlungsquellen und deren Position erfolgen. Die Erfindung betrifft ferner eine entsprechend ausgestaltete/ausgestatte Messvorrichtung aufweisend die Trageinrichtung und eine bevorzugt stirnseitig daran gekuppelte Strahlungsdetektionseinheit umfassend wenigstens einer Szintillationsdetektoreinheit.

## Beschreibung

### TECHNISCHES GEBIET

Die vorliegende Erfindung betrifft ein Verfahren zur Strahlungsdetektion (Strahlenbelastungsüberprüfung bzw. Aktivitätsdetektion) innerhalb eines Innenvolumens insbesondere eines Rohres oder einer Leitung, insbesondere zwecks so genannter Entscheidungsmessung, wobei eine Strahlungsdetektion mittels wenigstens einer Strahlungsdetektionseinheit erfolgt, wobei die Strahlungsdetektionseinheit mittels einer Trageinrichtung innerhalb des Innenvolumens positioniert wird qund verlagert wird, wobei positionsbezogen Strahlungsmessdaten bezüglich einer vordefinierbaren Messfläche erfasst werden. Ferner betrifft die vorliegende Erfindung eine Messvorrichtung zum Ausführen eines solchen Verfahrens, also eine entsprechend eingerichtete messtechnische Vorrichtung, vorteilhaft aufweisend eine/die Trageinrichtung und wenigstens eine insbesondere mittels einer Kupplung stirnseitig daran befestigte Strahlungsdetektionseinheit. Nicht zuletzt betrifft die vorliegende Erfindung auch die Verwendung wenigstens einer bevorzugt stirnseitig kuppelbaren Szintillationsdetektoreinheit an einer basierend auf geregeltem Vorschub verlagerbaren und im Innenvolumen abstützbaren Trageinrichtung. Insbesondere betrifft die Erfindung Verfahren und Vorrichtungen gemäß dem Oberbegriff des jeweiligen unabhängigen Anspruchs.

### HINTERGRUND DER ERFINDUNG

Insbesondere bei kerntechnischen Anlagen, insbesondere im Zusammenhang mit deren Rückbau, stellt sich die Frage, ob/wie die jeweiligen potentiell strahlenbelasteten Komponenten momentan oder in der Zukunft entsorgt, recycelt oder weiterverwendet werden können, beispielsweise auch Rohrleitungen oder Behälter, die jeweils ein mehr oder weniger langgestrecktes Innenvolumen umschließen. Dafür sind in den meisten Ländern gesetzlich vorgegebene Freigabewerte betreffend zulässige Schwellwerte für Radioaktivität beachtlich. Nur solche Komponenten, die eindeutig nachweisbar unter diese Freigabewerte fallen, können vergleichsweise kostengünstig entsorgt oder für Weiterverwendungen freigegeben werden.

Es versteht sich, dass eine Messung betreffend eine/die Radioaktivität bzw. potentielle Kernstrahlung ausgehend vom Material der zu untersuchenden Komponenten so exakt wie möglich durchgeführt werden muss; gleichzeitig geht es jedoch auch um Effizienz und vertretbare messtechnisch begründete Kosten, insbesondere dann, wenn besonders langgestreckte Innenvolumina wie z.B. lange Rohrleitungen überprüft bzw. zwecks Freigabe strahlungstechnisch untersucht werden müssen.

Insbesondere bei Rohrleitungen kann ein Zugang von außen in vielen Situationen nicht realisiert werden, oder wäre einfach zu aufwändig. Bisher mussten insbesondere Rohrleitungen entlang der Längsachse aufgeschnitten werden, um eine Nachweisführung dann unter Bezugnahme auf die jeweilige Rohrhälfte bzw. innere Oberfläche vornehmen zu können. Ausgehend davon ist von Interesse, für Rohrleitungen und dergleichen von durch Roboter begehbare oder durch messtechnische Einrichtungen befahrbare Innenvolumina einen messtechnischen Ansatz zu implementieren, bei welchem ein Molch oder dergleichen Innenmanipulator mit einer messtechnischen Ausstattung versehen wird, welche für den jeweiligen Anwendungsfall eine zielführende Überprüfung des entsprechenden Innenvolumens bzw. umgebender Wandbereiche ermöglicht, insbesondere zerstörungsfrei. Beispielsweise bei besonders langgestreckten Rohrleitungen kann es jedoch sehr herausfordernd werden, eine robuste und gleichzeitig effiziente und vor allem auch ausreichend exakte messtechnische Anordnung bereitzustellen.

Gemäß dem Stand der Technik wird eine Strahlungsmessung durch Molche oder dergleichen Innenmanipulatoren z.B. mittels Zugmitteln bewerkstelligt, mittels welchen der Molch durch ein Rohr gezogen werden kann. Beispielhaft kann die Veröffentlichung US 5,371,363 A genannt werden, welche eine axial verlagerbare Messvorrichtung beschreibt, an welcher entlang einer Längserstreckungsachse eine Vielzahl von Strahlungsmesseinheiten in mehreren Axial- und Umfangspositionen montiert sind. Davon ausgehend besteht Interesse an einer verbesserten Messvorrichtung und einem strahlungsmesstechnischen Verfahren, mittels welchem die Messung insbesondere ionisierender Strahlung exakter und effizienter insbesondere auch in langgestreckten Rohren durchgeführt werden kann.

Ausgehend vom Stand der Technik ist ein Bedarf an einfacher, robuster, exakter und effizient einsetzbarer Messtechnik für eine Strahlungsmessung bzw. Strahlenbelastungsüberprüfung in Innenvolumina und deren Auswertung zu spüren. Nicht zuletzt besteht insbesondere hinsichtlich guter Praxistauglichkeit und einfacher Handhabung im Feld auch Interesse an vorteilhaft kostengünstigen Lösungen, die möglichst variabel für zahlreiche Anwendungen implementiert werden können.

### ZUSAMMENFASSUNG DER ERFINDUNG

Aufgabe ist, eine strahlungsmesstechnische Anordnung bereitzustellen, womit auch vergleichsweise langgestreckte Innenvolumina auf besonders flexible und effiziente Weise hinsichtlich potentieller Kernstrahlung überprüft werden können (Strahlenbelastungstest), insbesondere auf möglichst exakte Art und Weise hinsichtlich einer so genannten Entscheidungsmessung. Auch ist es Aufgabe, strahlungsmesstechnische Verfahren und Vorrichtungen für eine Strahlungsdetektion in Innenvolumina derart auszugestalten, dass eine positionsbezogene Überprüfung von Innenvolumina bzw. von das entsprechende Innenvolumen umgebenden Wandungen hinsichtlich etwaiger Radioaktivität bei vorteilhafter Anordnung, Ausrichtung, Abstützung und Positionierung der verwendeten Messtechnik erfolgen kann, insbesondere auch bei variierender Größe oder Geometrie der Innenvolumina. Nicht zuletzt ist es Aufgabe, eine exakte Auswertung von in einem Innenvolumen akquirierten Strahlungsmessdaten derart auszugestalten, dass die Überprüfung auch von vergleichsweise großen oder langgestreckten Innenvolumina effizient und mit großer Sicherheit auch lückenlos flächig bei möglichst hohem Automatisierungsgrad und hoher Datengüte erfolgen kann und dabei wahlweise auch entsprechend dokumentiert werden kann.

Diese Aufgabe wird durch ein Verfahren gemäß Anspruch 1 sowie durch eine Vorrichtung gemäß dem nebengeordneten Vorrichtungsanspruch sowie durch ein Computerprogrammprodukt zum Ausführen von computerimplementierbaren Schritten eines Verfahrens gemäß der vorliegenden Offenbarung sowie durch Verwendungen gemäß dem jeweiligen nebengeordneten Verwendungsanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird ein Verfahren zur Strahlungsdetektion innerhalb eines Innenvolumens insbesondere eines Rohres, eines Wanddurchbruchs oder einer Leitung, wobei die Strahlungsdetektion mittels wenigstens einer Strahlungsdetektionseinheit erfolgt, wobei die Strahlungsdetektionseinheit mittels einer Trageinrichtung innerhalb des Innenvolumens verlagerbar positioniert wird und wahlweise auch automatisiert verlagert wird (und wahlweise auch räumlich ausgerichtet wird), wobei positionsbezogen Strahlungsmessdaten bezüglich einer vordefinierten/vordefinierbaren Messfläche einer (momentanen) Messanordnung erfasst werden (und wahlweise aus dem Innenvolumen heraus transmittiert werden);
Erfindungsgemäß wird vorgeschlagen, dass die Strahlungsdetektion bezüglich eines geometrisch vordefinierten/vordefinierbaren (Längs-)Abschnitts des Innenvolumens durch Szintillationsmessung erfolgt (insbesondere mit der Strahlungsdetektionseinheit in einer koaxial an der Trageinrichtung befestigten/gekuppelten Anordnung), wobei das Verfahren das Vorgeben einer vordefinierbaren Verlagerung (insbesondere mittels der Trageinrichtung) oder Position der Strahlungsdetektionseinheit in Abhängigkeit von wenigstens einem auf den erfassten Strahlungsmessdaten basierenden Steuerungs-/Regelungsparameter umfasst (Korrelation Detektion und Position/Vorschub bzw. Verortungssystemkomponente), insbesondere relativ zum geometrisch vordefinierten und messtechnisch bereits erfassten (Axial-)Abschnitt (also konsekutiv unter Bezugnahme auf eine unmittelbar zurückliegende messtechnische Erfassung eines benachbarten Abschnitts), insbesondere derart, dass die Verlagerung oder Position in einen entsprechenden vordefinierbaren Abschnitt oder um einen entsprechenden Abschnitt in Abhängigkeit vom Überschreiten eines für die jeweilige Detektion (bzw. für die jeweilige Messfläche) vordefinierten/vordefinierbaren Sensitivitätsschwellwerts vorgegeben wird. Dies liefert eine vergleichsweise einfache, robuste, exakte und auch effizient einsetzbare strahlungsmesstechnische Überprüfungsmöglichkeit insbesondere in Verbindung mit den Merkmalen der hier beschriebenen erfindungsgemäßen Trageinrichtung, insbesondere dahingehend, dass die Detektion bzw. der damit verbundene Messvorgang positionsbezogen bzw. messflächenbezogen selbstregulierend nur so lange durchgeführt wird, dass die entsprechende erforderliche Nachweisführung unter Bezugnahme auf Sensitivitätsschwellwerte sichergestellt werden kann; denn in den meisten Fällen wird es erwartungsgemäß darum gehen, eine Freigabe für das untersuchte Messobjekt zu erhalten, in Erwartung dessen, dass eine Strahlenbelastung nicht vorliegt. Dabei beruht die Erfindung auch auf dem Konzept, Antriebs- und/oder Abstützrobotik für die Trageinrichtung mit der Strahlungsdetektionseinheit steuerungs-/regelungstechnisch derart miteinander zu koppeln, dass insbesondere der Vorschub der Trageinrichtung steuerungs/regelungstechnisch als Funktion von momentanen Detektionssignalen der Strahlungsdetektionseinheit vorgegeben wird. Dies erleichtert die Anwendung im Feld beträchtlich, auch bei Gesamtbetrachtung einer z.B. sehr komplexen kerntechnischen Anlage bei nicht im Detail bekannter Strahlenbelastung. Beispielsweise werden mehrere der hier beschriebenen Messvorrichtungen an einem ersten Tag jeweils in einem Rohr positioniert und einem autarken Messvorgang entlang einer vordefinierbaren Messlänge überlassen, um diese Messvorrichtungen dann nach erfolgter vollständiger (Freigabe-)Messung (z.B. entsprechend einem Rohrabschnitt von 10m, messtechnisch untersucht mittels einer Detektionslänge von z.B. 10cm, entsprechend einem Axialabschnitt, für welchen jeweils ca. einige Minuten Detektionszeit zu veranschlagen sind) aus dem jeweiligen Rohr zu entwenden und einer weiteren Messaufgabe zuzuführen. Für das Detektieren als solches (bzw. für den Messvorgang) ist demnach kaum Arbeitsaufwand erforderlich, insbesondere wenn der Messvorrichtung bzw. der Trageinrichtung eine Endposition vorgebeben wird, in welcher diese entweder verweilen soll oder sich von dort autark zurück in die Ausgangsposition verlagern soll. Vorteilhaft ist dabei auch die Art und Weise der Abstützung bzw. Ausrichtung der Trageinrichtung innerhalb des Innenvolumens selbstregulierend ausgestaltet, beispielsweise durch federmechanische Vorspannung und/oder pneumatisch generierte Vorspannung.

Zur Vorgabe einer Endposition kann die Messvorrichtung auch eine Benutzerschnittstelle aufweisen, welche in Verbindung mit einer Verortungssystemkomponente steht, und wahlweise können Soll-Endpositionsdaten manuell vorgegeben/eingegeben werden, und/oder der Messvorrichtung kann diese Soll-Endposition durch automatische Übernahme der dort momentan erfassten Positionsdaten vorgegeben werden (beispielsweise durch manuelles Halten der Messvorrichtung bzw. Trageinrichtung in der Soll-Endposition, sofern diese Position für eine Person zugänglich ist). Dies erleichtert nicht zuletzt auch den Einsatz im Feld, insbesondere dann, wenn im Vorfeld die exakten Einsatzbedingungen und die realisierbaren Bewegungspfade, zumindest die unter autarker/automatisierter Betriebsweise überwindbaren Bewegungspfade, noch nicht abschließend definiert werden können. Gleiches gilt für eine Soll-Startposition.

Als Innenvolumen ist insbesondere ein zumindest annähernd zylindrisches Innenvolumen von Rohren oder Leitungen zu verstehen, oder auch ein entsprechend gekrümmt verlaufendes Innenvolumen einer gekrümmt verlaufenden Leitung (zumindest einseitig offen), oder auch das Innenvolumen eines Behälters oder Tanks (in sich geschlossen), oder auch das durch eine Durchführung oder einen Durchbruch umgrenzte Innenvolumen (dann z.B. in Ausgestaltung als Kavität). Im Folgenden wird allgemein auf Innenvolumina und eine das jeweilige Innenvolumen zumindest abschnittsweise umgrenzende (geometrisch vordefinierte) Wandung Bezug genommen.

Als Durchmesser bzw. Radius ist hier allgemein ein Maß oder Parameter für eine radiale Entfernung zwischen Detektor und Messobjekt zu verstehen, also nicht notwendigerweise ein Längenmaß eines durch eine rotationssymmetrische Wandung umgebenen Innenvolumens, sondern eine allgemeine Streckenangabe in radialer Richtung orthogonal zur axialen Längserstreckung/Ausrichtung des Detektors bzw. des Innenvolumens oder dessen Längserstreckungsachse/Mittenlängsachse.

Als verlagerbare Trageinrichtung ist insbesondere eine Einrichtung zur Aufnahme bzw. zum Tragen und zur Anordnung und wahlweise auch zur Ausrichtung wenigstens einer Strahlungsdetektionseinheit zu verstehen, welche verlagerbar in einem Innenvolumen in vordefinierten (Axial-)Positionen abgestützt und positioniert werden kann, insbesondere in der Art eines (Rohr-)Innenmanipulators auch mit eigener positionsbezogener Vortriebsfunktion im Zusammenhang mit der Messung/Strahlungsdetektion als solcher, jedoch ohne dass mittels der Trageinrichtung notwendigerweise irgendeine Manipulation oder Handhabung betreffend die Wandung bzw. das zu untersuchende Material erfolgt (vielmehr ist wahlweise autarker Betriebsmodus implementierbar), und ohne dass mittels der Trageinrichtung notwendigerweise irgendeine Art von (Material-)Bearbeitung an einer das Innenvolumen umgebenden Wandung erfolgt, also eine abgesehen von den hier beschriebenen messtechnischen Funktionen (Halten des wenigstens einen Detektors, Datenverarbeitung, Vortrieb, wahlweise Korrektur der Ausrichtung/Position des Detektors) ansonsten in Bezug auf die das Innenvolumen umschließende Wandung passive und jedenfalls nicht-invasiv agierende Trageinrichtung. Anders ausgedrückt: Nach einem/dem Kuppeln des wenigstens einen Detektors mit einem Grundkörper der Trageinrichtung kann/soll der Detektor in dieser Relativposition an der Trageinrichtung verbleiben. Der Begriff "verlagerbar" ist in diesem Zusammenhang auch als autark ohne Einwirkung von außen verlagerbar zu verstehen, und zwar unter Bezugnahme auf eine vordefinierbare Relativposition bzw. einen vordefinierbaren Vorschub (Verlagerungsgeschwindigkeit oder betragsmäßig vordefinierbarer Verlagerungsweg).

Sofern gemäß der vorliegenden Offenbarung von Trageinrichtung gesprochen wird, ist darunter auch eine Trägersystemkomponente bzw. ein Trägersystem zu verstehen. Sofern gemäß der vorliegenden Offenbarung von Messvorrichtung gesprochen wird (Stichwort: Rohrsonde), so ist darunter auch eine Vorrichtung zu verstehen, in/mittels welcher die folgenden Systemkomponenten in Kombination miteinander realisiert sein/werden können: Abstützsystem(komponente), Antriebssystem(komponente), Detektionssystem(komponente), Verortungssystem(komponente). Anders ausgedrückt: die hier beschriebene Messvorrichtung kann wenigstens fünf Funktionen miteinander kombinieren bzw. vorrichtungs- und prozesstechnisch vereinen, nämlich die Tragfunktion für den Detektor, die Abstützfunktion innerhalb des jeweiligen Innenvolumens, eine/die Antriebs- bzw. Vortriebsfunktion zum automatisierbaren Positionieren des Detektors, sowie die Detektionsfunktion und auch eine Verortungsfunktion insbesondere zwecks Positionsbestimmung/- überprüfung, Korrelation von Messdaten und Messflächenabschnitt, Plausibilitätsprüfung.

Es ist zu verstehen, dass eine/die Positionsbestimmung/-überprüfung vorteilhaft redundant durch zwei unabhängige Methoden vorgenommen werden bzw. implementiert sein kann, insbesondere basierend auf einer Wegstrecken-/Rotationsmessung von Antriebskomponenten (Räder der dergleichen) und basierend auf Messwerten von Lage-Beschleunigungssensoren. Dies liefert nicht zuletzt eine noch höhere Datengüte bzw. eine noch größere messtechnische Sicherheit.

Als Strahlungsdetektionseinheit ist dabei insbesondere diejenige funktionale Einheit zu verstehen, welche für eine Detektion von Strahlung vorgesehen ist (und optional auch an die geometrische Ausgestaltung des Innenvolumens angepasst sein kann), messtechnisch gesehen sinngemäß also eine funktionale Einheit in der Art einer (Rohr)Sonde, jedoch mit den hier beschriebenen zusätzlichen Funktionen. Die Strahlungsdetektionseinheit ist bevorzugt mit der Trageinrichtung (kraft-/formschlüssig) kuppelbar und kann eine oder mehrere Szintillationsdetektoreinheiten aufnehmen, insbesondere auch in der Art eines Adapters oder einer Adapterfunktion für unterschiedlich große Szintillationsdetektoreinheiten, die jeweils allein oder auch in Kombination miteinander an der Strahlungsdetektionseinheit vorgesehen sein können.

Als Strahlung ist dabei insbesondere Kernstrahlung bzw. ionisierende Strahlung zu verstehen, insbesondere solche von radioaktiven Materialien, welche emittieren, ohne dass sie dafür energetisch aktiviert werden müssten.

Als (momentane) Messanordnung ist insbesondere die jeweilige momentan untersuchte Messfläche (bzw. deren geometrische Abmessungen) unter Berücksichtigung weiterer Randbedingungen wie z.B. die damit korrelierte Masse des Messobjekts (z.B. Rohrwandungssegment) und die Entfernung (insbesondere die radiale Entfernung) zwischen Messobjekt und Detektor zu verstehen. Die Messanordnung kann dabei auch durch wenigstens ein Messobjektmerkmal charakterisiert sein/werden, insbesondere durch wenigstens ein mittels der Trageinrichtung in situ erfasstes oder zumindest verifiziertes Messobjektmerkmal (z.B. den radialen Abstand zwischen Detektor und Wandung).

Als Verfahren zur Strahlungsdetektion ist hier insbesondere auch ein Verfahren zu verstehen, bei welchem detektierte Strahlung bzw. erfasste Strahlungsmesswerte auch dahingehend ausgewertet werden, dass eine Strahlungsverifikation bzw. eine Überprüfung hinsichtlich etwaiger Überschreitungen zulässiger Strahlungsschwellwerte vollzogen wird. Die vorliegende Erfindung betrifft einerseits die hier beschriebenen Vorgänge zur Strahlungsdetektion als solcher, andererseits auch nachgelagerte Schritte hinsichtlich der Auswertung etwaiger detektierter Strahlung(sintensität).

Sofern nicht anders konkretisiert, ist hier als "Strahlungsdetektor" allgemein eine messtechnisch wirksame Komponente oder ein messtechnisch wirksamer (Längen)Abschnitt der Strahlungsdetektionseinheit bzw. der Szintillationsdetektoreinheit zu verstehen.

Sofern gemäß der vorliegenden Offenbarung auf ein Rohr als Messobjekt bzw. auf eine durch die Rohrwandung bereitgestellte Innenmantelfläche Bezug genommen wird, gilt die entsprechende Offenbarung auch für andere Arten von Messobjekten, Wandungen oder Innenvolumina, und vice versa. Gleiches gilt für Bezugnahmen auf das Innenvolumen bzw. die Geometrie bzw. Ausdehnung des Innenvolumens; diese Bezugnahmen sind zunächst unabhängig von einer spezifischen Geometrie bzw. einem spezifischen Verlauf einer das Innenvolumen umgebenden Wandung. Beispielsweise wird das Messobjekt durch ein zumindest annähernd rotationssymmetrisches Rohr gebildet, oder durch ein Rohr mit zumindest annähernd quadratischem Querschnitt. Die geometrische Berücksichtigung kann insbesondere durch entsprechende Effizienzkalibrierung erfolgen. Durch unterschiedliche radiale Abstände wirkt sich eine Unsicherheit auf die Aktivitäten bzw. EG und NWG generell vergleichsweise stark aus, so dass insbesondere eine/die Kalibrierung eine zielführende Kompensation bietet.

Als Messung sind allgemein insbesondere die im Zusammenhang mit dem Erlangen einer belastbaren Datengrundlage für eine Freigabe (ja/nein) erforderlichen oder gemäß der vorliegenden Offenbarung zusätzlich implementierbaren messtechnischen Schritte zu verstehen, insbesondere einschließlich vorbereitender Schritte wie z.B. eine Kalibrierung, und nicht zuletzt auch etwaige handhabende oder automatisierte oder motorisch vorgegebene Schritte betreffend die Position oder Verlagerung der Trageinrichtung. Je nach messtechnischer Aufgabe kann "Messung" hier auch als "Einzelmessung" verstanden werden. Gegebenenfalls sind für eine bestimmte messtechnische Aufgabe mehrere Einzelmessungen mit jeweils spezifischer Kalibrierung erforderlich.

Als Messvorgang (im engeren Sinne) ist insbesondere die hier beschriebene Art und Weise der positionsspezifischen Detektion und des in Abhängigkeit davon gesteuerten/geregelten Vortriebs der Trageinrichtung zu verstehen, also das Positionieren/Verlagern der Trageinrichtung speziell im Zusammenhang mit oder zwecks (Szintillations-/Strahlungs-)Detektion. Ein Messen während des positionsspezifischen Messvorgangs kann dabei auch eine Bestimmung einer spektralen Verteilung von Kernstrahlung und/oder das Messen bzw. Bestimmen einer Gesamt-Impulsrate umfassen. Der Messvorgang umfasst eine/die entsprechende positionsspezifische (Szintillations-/Strahlungs-)Messung.

Als Detektion ist hier insbesondere das Bestimmung von Energie und Intensität von ionisierender Strahlung durch Szintillationsmessung zu verstehen, also die Erfassung von Strahlungsparametern mittels der hier beschriebenen wenigstens einen Szintillationsdetektoreinheit.

Sofern gemäß der vorliegenden Offenbarung von Messvorrichtung gesprochen wird, so kann darunter gemäß einer der Ausgestaltungen auch eine für die hier beschriebenen messtechnischen Aufgaben eingerichtete Rohrsonde mit entsprechenden Detektoren verstanden werden.

Es ist zu erwähnen, dass die hier beschriebene Art und Weise der (Szintillations-/Strahlungs-)Detektion eine Detektion unabhängig von der Raumrichtung ermöglicht, also insbesondere auch eine Detektion über den gesamten Umfang einer z.B. zylindrischen Innenmantelfläche. Insofern kann es auch ausreichend sein, lediglich eine einzige Szintillationsdetektoreinheit einzusetzen, z.B. mit einer axialen Länge im Bereich von 10 bis 15cm. Wahlweise können auch mehrere Szintillationsdetektoren bzw. Szintillationsdetektoreinheiten simultan eingesetzt werden, wie hier auch an anderer Stelle näher ausgeführt wird. Wahlweise umfasst die hier beschriebene Messvorrichtung auch mehrere Szintillationsdetektoreinheiten gleicher und/oder unterschiedlicher Größe, die jeweils einzeln oder auch in Kombination miteinander an die Trageinrichtung kuppelbar sind. Vorteilhaft ist der messtechnisch wirksame Durchmesser des Detektors im Vergleich zur (radialen) Innenerstreckung des Messobjekts bzw. Innenvolumens vergleichsweise groß, insbesondere ist der maximale Durchmesser des für die jeweilige messtechnische Aufgabe vorteilhaft gewählten Detektors nur etwas kleiner als Innenerstreckung (bzw. Rohrinnendurchmesser).

Die hier beschriebene Bezugnahme auf einen Sensitivitätsschwellwert insbesondere im Sinne eines Nachweiswahrscheinlichkeitsschwellwertes kann auch als zeitliche Abhängigkeit ausgedrückt werden; bei der hier als bevorzugt beschriebenen Bezugnahme nicht nur auf die Zeit, sondern direkt auf die Sensitivität kann die Regelung unter Bezugnahme auf umfangreichere Strahlungsmessdaten (insbesondere sowohl gemessenes Spektrum als auch Effizienz) vorgenommen werden und somit auch anwendungsspezifisch leichter optimiert werden, insbesondere möglichst effizient ausgestaltet werden. Gleichwohl versteht der Fachmann, dass die vorliegende Erfindung auch im Rahmen einer zeitlich vorgegebenen Regelung vorgenommen werden kann, zumindest insofern, als Mindest- und Maximalzeitfenster für eine entsprechende Messfläche bei der Regelung des Vorschubs berücksichtigt bzw. eingehalten werden. Die hier beschriebene Regelung kann auch insofern als zeitlich dynamische Regelung bezeichnet werden, als das Verfahren nicht nur in Abhängigkeit von der (Strahlungs-/Szintillations-)Detektion als solcher, sondern auch in Abhängigkeit von weiteren die jeweilige spezifische Messanordnung bzw. deren momentane Randbedingungen kennzeichnenden Messobjektmerkmalen erfolgen kann, insbesondere in Abhängigkeit von einem momentanen Abstand zwischen Messfläche und Detektor; dieser Abstand (insbesondere der jeweilige radiale Abstand) kann sich je nach Ausgestaltung des Innenvolumens in Abhängigkeit von der Zeit oder der Relativposition der Trageinrichtung ändern, z.B. auch bedingt durch Ablagerungen an einer das Innenvolumen umgebenden Wandung.

Als Messobjektmerkmal ist dabei ein von der Trageinrichtung bzw. von der Messvorrichtung erfasster Messwert bzw. eine entsprechende Kennzahl zu verstehen, welche/r das Messobjekt kennzeichnet/charakterisiert, also hier insbesondere eine/die den jeweiligen Abschnitt des Innenvolumens umgrenzende Wandung.

Dabei kann eine Auswertung etwaiger detektierter Strahlung insbesondere unter Bezugnahme auf im Rahmen der jeweiligen Messung bzw. unter Bezugnahme auf die jeweilige Messanordnung ermittelte Nettopeakflächen und/oder Photopeakeffizienz-Werte von ionisierender Strahlung erfolgen, insbesondere bei Szintillationssignalen entsprechend den detektierten Signalen bzw. ausgewerteten Zahlraten in Abhängigkeit von der Energie. Beispielsweise erfolgt dabei eine Detektion von Szintillationssignalen und seren Verstärkung durch einen Vervielfacher, z.B. mittels Silizium-Photomultiplier. Der Detektor bzw. ein nachgeschalteter Photomultiplier liefert ein analoges Signal (Rohdaten), welches wiederum durch nachgeschalteten ADC (Analog/Digital-Converter, Analog-Digital-Wandler) digitalisiert und durch einen MCA (Multi-Channel-Analyzer, Vielkanalzähler) in ein Spektrum umgewandelt wird. Dieses Spektrum wird anschließend ausgewertet. Insofern wird gemäß der vorliegenden Offenbarung bei Daten bis zum Spektrum von Rohdaten gesprochen.

Die Szintillationsmessung erfolgt dabei bevorzugt unter Verwendung wenigstens einer Szintillationsdetektoreinheit, bevorzugt mit Szintillations-Detektor-Kristall. Wahlweise kann eine Foto-Vervielfacher-Komponente (so genannter Photomultiplier) vorgesehen sein, für welche vorteilhaft ein Halbleiterdetektor vorgesehen wird, insbesondere in Ausgestaltung als SiPM. Wahlweise kann auch wenigstens ein Sekundäremissionsdetektor (photomultiplier tube) vorgesehen sein.

Vorteilhaft erfolgt ein Messen der spektralen Verteilung von Kernstrahlung (gammaspektrometrische Bestimmung, auch bezeichnet als Pulse-Height Analysis, PHA). Wahlweise erfolgt alternativ oder zusätzlich ein Messen bzw. Bestimmen der Gesamt-Impulsrate der auf den entsprechenden Detektor eintreffenden ionisierenden Strahlung (insbesondere gemäß einem so genannten Multichannel Scaling Mode, MCS). Beim MCS wird die Impulsrate über die Zeit bestimmt, oder die Impulszahl für einen vorgegebene Zeitraum. Im Gegensatz zur PHA unterscheidet MCS nicht zwischen Impulsen mit unterschiedlichen Amplituden. Stattdessen werden gemäß dem MCS alle gemessenen Zählungen in einem Kanal für ein bestimmtes Zeitintervall aufgezeichnet. Bei diesem Messmodus können keine Radionuklide identifiziert werden; das Impulsratensignal kann durch Alpha-, Beta- und Gammastrahlung induziert werden. Dieses Messverfahren misst keine spektrale Verteilung der Kernstrahlung, sondern integriert die Impulsratensignale in einem Kanal. MCS wird gemäß dem erfindungsgemäßen Ansatz als weniger vorteilhaft angesehen als der gammaspektrometrische Ansatz, PHA, jedoch kann es für bestimmte Einzelanwendungen von Interesse sein, den MCS-Ansatz zu implementierten, gegebenenfalls zusätzlich zu einer PHA-Bestimmung.

Sofern gemäß der vorliegenden Offenbarung von Trageinrichtung gesprochen wird, so ist darunter synonym eine entsprechend agierende Positionierungseinrichtung eingerichtet zum Halten und positionsbezogenen Verlagern des wenigstens einen Szintillationsdetektors zu verstehen.

Es ist zu verstehen, dass das "Vorgeben einer vordefinierbaren Verlagerung bzw. Position" nicht notwendiger Weise auch einen vordefinierten Vorschub umfasst; vielmehr kann dieser Schritt auch die Vorgabe von Axialpositionsdaten umfassen, ohne dass weiter definiert wird, auf welche Weise die entsprechende Axialposition von der Trageinrichtung eingenommen wird. Anders ausgedrückt: Das erfindungsgemäße Konzept beruht im Wesentlichen einerseits darauf, verfahrenstechnisch vorzugeben, wann eine Verlagerung bzw. Positionierung erfolgen kann, insbesondere um welchen Betrag - die Art und Weise der Verlagerung selbst kann dabei individuell realisiert werden (insbesondere basierend auf anwendungsspezifisch vordefiniertem Vorschub); und andererseits beruht das erfindungsgemäße Konzept im Wesentlichen auch darauf, vorrichtungstechnisch vorzugeben, auf welche Weise die jeweilige axiale Soll-Position insbesondere bei optimaler Zentrierung sichergestellt werden kann. Wahlweise kann das Anfahren bzw. Erreichen der jeweiligen axialen Soll-Position basierend auf vordefiniertem axialem Vorschub oder auch durch andere Bewegungs-/Verlagerungsmaßnahmen herbeigeführt werden, je nach messtechnischer Implementierung für den jeweiligen Anwendungsfall.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu synonym verwendete/verwendbare deutschsprachige Begriffe können hier der Vollständigkeit halber in (Klammern) angegeben werden, oder vice versa, beispielsweise bezüglich des Begriffs Pulse-Height Analysis (gammaspektrometrische Bestimmung).

Im Folgenden wird im Detail ein beispielhaftes Anwendungsfeld der vorliegenden Erfindung unter möglichst hohem/spezifischen Anwendungsbezug dargestellt, insbesondere unter Bezugnahme auf so genannte Entscheidungsmessungen.

Beim Rückbau von kerntechnischen Anlagen, wie z.B. von Kernkraftwerken oder Forschungsreaktoren, sowie in Laboren fallen zum Teil große Materialmengen an, von denen ein überwiegender Anteil während des Betriebs und der Stilllegung der Anlage nicht oder nur in sehr geringem Maße mit radioaktiven Stoffen in Berührung kam oder aktiviert wurde. Dennoch gelten die Materialien aus solchen Kontrollbereichen grundsätzlich als "potentiell radioaktiv" (vergleiche dazu z.B. nationale Definitionen zum Strahlenschutzbereich z.B. gemäß Strahlenschutzverordnungen). Für diese Stoffe/Materialien sieht der jeweilige nationale/regionale Gesetzgeber beispielsweise das so genannte Verfahren der Freigabe vor, für welches radionuklidspezifische Freigabewerte (FGW) für eine maximal zulässige Aktivität pro Masse (massenspezifisch) und pro Oberfläche (oberflächenspezifisch) festgelegt sind. Unterschreiten die Reststoffe diese massen- und oberflächenspezifischen Aktivitätswerte, so können diese Stoffe uneingeschränkt oder spezifisch freigegeben werden. Ziel ist es, diese Freigabe auf möglichst unkompliziertem Wege für die tatsächlich unbelasteten Materialien erhalten zu können.

Bei einer so genannten spezifischen Freigabe werden zusätzliche Anforderungen an das Material (z.B. metallisch oder mineralisch) und an die zweckgerichtete Entsorgung (z.B. Deponie oder Abfallverbrennungsanlage) bzw. an das Recycling gestellt. Wesentliches Ziel des für das Material verantwortlichen Genehmigungsinhabers (beispielsweise des Rückbauers kerntechnischer Einrichtungen) ist es jedoch, möglichst viel Material einer uneingeschränkten Freigabe zuzuführen. Zur Entlassung von Material aus Kontrollbereichen und damit insbesondere auch aus dem Geltungsbereich eines/des jeweils geltenden (Atom-)Gesetzes und/oder etwaiger damit verbundener Verordnungen ist der Genehmigungsinhaber bzw. der Antragssteller als Akteur im Rahmen des Freigabeverfahrens verpflichtet, den messtechnischen Nachweis zu erbringen, dass etwaige radioaktive Kontaminationen oder Aktivierungen die massenspezifischen und/oder oberflächenspezifischen Freigabewerte (FGW) unterschreiten. Diese Freigabewerte werden in messtechnischer Hinsicht z.B. radionuklidspezifisch in den Einheiten [Bq/g] oder [Bq/cm2] angegeben. Messungen, bei denen die massen- oder oberflächenspezifischen Aktivitäten von Stoffen/Materialen bestimmt werden, werden als Entscheidungsmessungen bezeichnet (zumindest in Deutschland). Das Ergebnis einer Division der messtechnisch bestimmten radionuklidspezifischen massen- oder oberflächenspezifischen Aktivitäten von Stoffen/Materialen durch die Freigabewerte wird als Ausschöpfung bezeichnet. Sind die über alle Radionuklide summierten Ausschöpfungen der FGW kleiner eins (1), so ist die Entscheidungsmessung positiv und das Material kann aus dem Geltungsbereich des Atomgesetzes und etwaiger nachgeordneter Verordnungen entlassen werden. Werden die zulässigen Ausschöpfungen der FGW jedoch überschritten, so ist das Material als radioaktiv auch (oder zumindest) in juristischem Sinne anzusehen, und darf also nicht freigegeben werden. Freigabeverfahren können weitere Anforderungen beispielsweise an die Mittelungsflächen und Mittelungsmassen einer Messung erheben; insoweit sind gegebenenfalls individuelle territoriale Verordnungen oder Anforderungen beachtlich.

Beispielsweise bestehen die Wandungen bzw. Umgebungen der Messobjekte aus wenigstens einem der folgenden Materialien: Metall (Stahl, Eisenguss), Kunststoff (PE, PVC, PP), Beton, Kalksandstein. Vorteilhaft sind die Innenoberflächen bzw. Innenmantelflächen des jeweiligen Messobjekts wenig bis kaum verunreinigt, und Rauhtiefen (strukturelle Unebenheiten) liegen vorteilhaft im Bereich von bis zu 1mm. Geringe Ovalität und geringe Restfeuchte können sich weiter vorteilhaft auf eine möglichst zielführende Implementierung der Messung auswirken. Der für den Einsatz zweckdienliche Temperaturbereich liegt z.B. zwischen -20°C und 50°C. Beispielsweise werden Messobjekte mit einer Mindestlängserstreckung von 500mm messtechnisch untersucht.

Für den Entsorgungspfad der uneingeschränkten Freigabe sind die FGW besonders gering, was vergleichsweise hohe Anforderungen an die Sensitivität der Messtechnik stellt und im Regelfall auch längere Messzeiten bedingt. Ein jeweiliges Freigabeverfahren bestehend aus umfangreichen Überprüfungen und Kontrollen stellt somit zusammenfassend sicher, dass Stoffe aus Kontrollbereichen diesen nur dann verlassen, wenn die Grenzwerte und Anforderungen der entsprechend geltenden Verordnungen bezüglich des zulässigen Aktivitätsinventars sowie die entsprechenden messtechnischen Anforderungen, die zur Nachweisführung an Entscheidungsmessungen gestellt werden, eingehalten werden.

Die Freigabe insbesondere von Rohrleitungen erforderte bisher üblicherweise, die Rohrleitungen aus der Einbaulage zu entnehmen und entlang der Längsachse aufzuschneiden, um daraufhin die messtechnische Nachweisführung an den Rohrhälften vorzunehmen, insbesondere da Detektionssysteme und Messverfahren zur Realisierung entsprechender Messvorgänge vor allem über lange Strecken im Inneren solcher Rohrleitungen bisher nicht verfügbar sind/waren. Anwendungsgebiete für ein Detektionsverfahren können beispielsweise Rohre aus Metall oder Kunststoff oder Beton oder Kalksandstein sein, in denen sich radioaktive Medien befanden, oder gewöhnliche Abwasserrohre in bzw. aus Kontrollbereichen, oder auch Rohrleitungen im nichtnuklearen Bereich, in denen sich Rückstände abgelagert haben (insbesondere solche Rückstände gemäß Definition nach dem jeweils geltenden Strahlenschutzgesetz und dadurch ermächtigten Verordnungen). Einbetonierte Rohrleitungen, wie sie z.B. in Fundamenten vorhanden sind, müssen üblicherweise sogar ausgebohrt oder ausgesägt werden, bevor diese dann aufgeschnitten werden können, um schlussendlich die jeweils erforderlichen messtechnischen Maßnahmen durchführen zu können; aus der Beschreibung dieser Vorgehensweise geht hervor, welcher immense nicht nur messtechnische Aufwand durch ordnungsgemäßen Rückbau kerntechnischer Anlagen begründet wird, was auch den großen Nutzwert zeiteffizienter und exakter Messverfahren verdeutlicht.

Beispielsweise auch Durchführungen in z.B. Wänden oder Wanddurchbrüchen, die zu klein sind für eine messtechnische Untersuchung der Innenflächen mittels gebräuchlicher Kontaminationsmonitore, stellen ebenfalls eine große messtechnische Herausforderung dar. Hierbei kann es sich um zylindrische, rechteckige oder anders ausgeartete Durchführungen bzw. Innenvolumina handeln, die Tiefen von z.B. ca. 50mm bis mehrere Meter aufweisen können. Der mittlere Innendurchmesser kann z.B. zwischen 40mm bis 300mm betragen. Dieses vergleichsweise breite Größenspektrum sowie die möglicherweise auch unvorhersehbar auftretenden geometrischen Variationen stellen zusätzliche Herausforderungen dar. Vorteilhaft erfolgt im Rahmen der vorliegenden Erfindung ein kontinuierliches Messen des Innendurchmessers des untersuchten Innenvolumens, wahlweise indirekt über eine/die Abstütz-Kinematik (insbesondere an einer/der Scherenkinematik der Trageinrichtung) und/oder mittels spezifisch für die Durchmessererfassung vorgesehener Sensoren. Der entsprechende Messwert kann dabei auch bei der Auswertung berücksichtig werden, insbesondere auch in der Art einer Plausibilitätsprüfung.

Die Durchführung von Entscheidungsmessungen speziell auch bei Rohrleitungen oder Wanddurchführungen bedarf demnach einerseits auf diese Situation angepasster innovativer Detektionssysteme (Vorrichtungen) sowie andererseits auch optimierter Messprozesse/Messverfahren. Adäquate Detektionssysteme und Messprozesse müssen die an das Freigabeverfahren gestellten hohen Anforderungen bezüglich Sensitivität erfüllen und sollen gleichwohl möglichst nur geringe Messzeiten erfordern, insbesondere um die jeweiligen Messungen auch auf wirtschaftliche Weise durchführen zu können. Da sich davon ausgehend im Rahmen der vorliegenden Erdfindung gezeigt hat, dass die Messzeiten für einen Rohrabschnitt einer Länge im Bereich von z.B. 10cm bis 15cm mittels der heute verfügbaren Messtechnik realistisch wohl auf einen Bereich von nur einigen Minuten reduziert werden können, ist des Weiteren eine Messvorrichtung von Interesse, welche entsprechende Messvorgänge möglichst autark im Inneren der Rohrleitungen bzw. Durchführungen durchführen und bevorzugt auch detailliert dokumentieren kann. Die vorliegende Erfindung liefert Verfahren und Vorrichtungen zur Erfüllung dieser Anforderungen.

Auch in Hinblick auf die bisherige Situation betreffend Entscheidungsmessungen liefert die vorliegende Erfindung ein Messverfahren zur Bestimmung der massen- und oberflächenspezifischen Radioaktivität sowie eine dafür eingerichtete Vorrichtung zur zumindest teilweise automatisierten Durchführung der Messung zur Bestimmung etwaiger Kontaminationen oder Aktivierungen in Innenvolumina bzw. in umgebenden Wandungen wie z.B. Rohrleitungen, womit jeweils auf vergleichsweise effiziente und exakte und möglichst auch robuste Weise eine Freigabe für das untersuchte Material erhalten werden kann. Mittels der vorliegenden Erfindung können die Messobjekte in Einbaulage analysiert werden, wodurch insbesondere Entscheidungsmessungen an der stehenden Struktur vor Ort realisierbar sind. Die Aktivitätsbestimmung basiert dabei bevorzugt auf einer gammaspektrometrischen Bestimmung und/oder einer Gesamt-Impulsraten-Bestimmung jeweils für spezifische Abschnitte des Innenvolumens bzw. des jeweiligen Rohrs oder Wanddurchbruchs.

Im Folgenden wird im Detail eine beispielhafte Ausgestaltung einzelner Schritte eines Messverfahrens gemäß Ausführungsbeispielen der vorliegenden Erfindung dargestellt, insbesondere unter Bezugnahme auf für eine jeweilige Entscheidungsmessung zweckdienlich vorgebbare Sensitivitätsschwellwerte. Der Messvorgang wird beispielsweise initiiert, nachdem die Trageinrichtung mit montierter Strahlungsdetektionseinheit in die Rohrleitung, den Durchbruch oder ein anderweitiges Innenvolumen eingesetzt wurde. Die Strahlungsdetektionseinheit beginnt mit der entsprechenden (Strahlungs-)Detektion, insbesondere mit der Trageinrichtung bzw. der Messvorrichtung im Stillstand (keine Verlagerung während des Detektionsvorgangs). Die Strahlungsdetektionseinheit bzw. wenigstens eine Szintillationsdetektoreinheit misst/detektiert positionsbezogen die ionisierende Strahlung, also unter positionsspezifischer Bezugnahme auf eine vordefinierte Messfläche, welche insbesondere durch die Relativposition und Längserstreckung der Szintillationsdetektoreinheit vordefiniert ist. Dabei kann der Messvorgang insbesondere basierend auf einer Gesamt-Impulsraten-Bestimmung beruhen (Multichannel Scaling Mode, abgekürzt MCS) und/oder auf gammaspektrometrische Weise erfolgen (Pulse-Height Analysis, abgekürzt PHA). Bei der gammaspektrometrischen Bestimmung wird ein Gammaspektrum aufgenommen; die Position der im aufgenommenen Gammaspektrum nachgewiesenen Photopeaks erlaubt eine eindeutige Identifizierung vorhandener Radionuklide. Basierend auf einer vorlaufenden oder ins jeweilige Auswerteverfahren integrierten Berechnung von energieabhängigen Photopeak-Effizienzen für eine jeweilige spezifische Messanordnung und von der erfassten Nettopeakfläche eines Gamma-Peaks kann eine quantitative Aktivitätsbestimmung erfolgen. Diese Auswerteschritte werden z.B. durch eine in die Trageinrichtung integrierte oder damit gekoppelte Rechen-/Logikeinheit vorgenommen.

Beim "Multichannel Scaling Mode" wird die Impulsrate über die Zeit gemessen oder die Impulszahl für einen vorgegebenen Zeitraum bestimmt. Im Gegensatz zu PHA unterscheidet MCS nicht zwischen Impulsen mit unterschiedlichen Amplituden. Stattdessen zeichnet die Recheneinheit (insbesondere MCA) alle gemessenen Zählungen in einem Kanal für ein bestimmtes Zeitintervall auf. Bei diesem Messmodus werden keine Radionuklide identifiziert; das Impulsratensignal kann durch Alpha-, Beta- und Gammastrahlung induziert werden. Anhand einer Kalibrierung, welche die Abhängigkeit zwischen dem Impulsratensignal für ein vorgegebenes Radionuklidspektrum bei einer spezifischen Messanordnung als Funktion von der Aktivität bestimmt, kann auch über diesen messtechnischen Ansatz (MCS) eine Entscheidungsmessung durchgeführt werden.

Sowohl für die Gesamt-Impulsraten-Bestimmung (MCS) als auch für die gammaspektrometrische Bestimmung (PHA) kann eine Photopeak-Effizienz-Kalibrierung für die jeweilige spezifische Messanordnung durchgeführt werden. Die spezifische Messanordnung kann insbesondere durch die Art der verwendeten Detektionseinheit (insbesondere Szintillationskristall charakterisiert durch geometrisches Kristallvolumen, Energieauflösung, gegebenenfalls auch Auswerteelektronik), durch die Innenabmessungen des Innenvolumens, durch die Wandstärke einer das Innenvolumen umgebenden Wandung als auch durch die Elementzusammensetzung des Wandungsmaterials sowie durch die Annahme einer bestimmten Eindringtiefe einer etwaigen Kontamination oder Aktivierung um die Wandung herum bei einer Messung spezifiziert werden (bzw. basierend auf einer Teilauswahl derartiger Messobjektmerkmale).

Das Messen bzw. der positionsspezifische Messvorgang wird mindestens so lange fortgesetzt, bis die erforderliche Sensitivität für die Entscheidungsmessung im Rahmen des Freigabeverfahrens erreicht wird. Die Schwellwerte für diese Zielsensitivität lassen sich insbesondere aus den radionuklidspezifischen FGW und dem Nuklidvektor einer etwaigen Kontamination oder Aktivierung ableiten; gemäß einer Ausgestaltung erfolgt dies während der Messung. Die hier beschriebene dynamische Anpassung der Messzeit kann dabei vorteilhaft mittels eines aktiven Regelkreislaufs (Regelung) im Auswerteverfahren erfolgen. Für diese aktive Regelung kann das Spektrum in vordefinierten RoI's (Regions of Interest) gemäß definierter Zeitintervalle (z.B. alle fünf Sekunden) ausgewertet werden, und die charakteristischen Grenzen (Erkennungsgrenze, Nachweisgrenze und Grenzen des Überdeckungsintervalls) können messbegleitend bestimmt werden, zumindest annähernd in Echtzeit. Die Bestimmung der charakteristischen Grenzen und/oder eines/des besten Schätzwerts der Aktivitätsmessung können durch Auswertung des akquirierten Gammaspektrums erfolgen. Für die Bestimmung eines/des besten Schätzwerts der Aktivitätsmessung und der Grenzen des Überdeckungsintervalls kann das Nettopeak-Signal eines detektierten Gamma-Peaks (z.B. bei 1.173,2keV und 1.332,5keV für Co-60) im Spektrum herangezogen werden. Für die Bestimmung der Erkennungs- und Nachweisgrenze kann das Untergrundsignal im Energiebereich des relevanten Radionuklids verwendet werden. Für die einzelnen Auswertungsprozesse wird die energieabhängige (also auch von der Messanordnung abhängig) Detektionseffizienz (Photopeak-Effizienz) vom verwendeten Strahlungsdetektor zu Grunde gelegt, insbesondere unabhängig davon, ob es sich um eine Sensitivitätsanalyse oder die Aktivitätsbestimmung mit einem bestimmten Überdeckungsintervall handelt.

Insbesondere der (Rohrinnen-)Durchmesser, die Wandstärke und das Material des Messobjekts (also des das Innenvolumen umgrenzenden Materials) sind für die hier beschriebene messtechnische Auswertung relevant oder zumindest von Interesse und können z.B. händisch im/beim Auswerteverfahren parametriert werden oder durch zusätzliche Sensoren, wie z.B. einem Metalldetektor, bestimmt werden. Da die Nachweisführung bezüglich der oberflächenspezifischen Aktivität für Kunststoffrohre erwartungsgemäß als messtechnisch schwieriger gilt als für Metallrohre, kann beim hier beschriebenen Messverfahren zunächst konservativ davon ausgegangen werden, dass die FGW für ein Kunststoffrohr im Auswerteverfahren angesetzt werden, und beispielsweise wird nur dann von diesem konservativen Ansatz abgewichen, falls ein Metallsensor den entsprechenden metallischen Materialbestandteil detektiert oder der Nutzer/Anwender die gesicherte Entscheidung trifft, dass es sich beim Messobjekt um ein Metallrohr handelt, insbesondere bei bekannter Materialzusammensetzung.

Die hier beschriebene Auswertung des hier beschriebenen Messvorgangs erlaubt die Nachweisfiihrung, ob die jeweilige Rohrleitung bzw. die entsprechende Messobjektkomponente freigegeben werden kann oder nicht (Entscheidungsmessung). Hierbei ist zu beachten, dass gemäß Stand der Technik (z.B. definiert gemäß DIN-Norm, z.B. in Deutschland DIN25457, DIN ISO 11929) für den Fall wenigstens einer gemessenen Aktivität diese Aktivitäten im messtechnischen Verfahren mit einem einseitigen Überdeckungsintervall von 95% angegeben werden müssen. Wird beim jeweiligen Messvorgang keine Aktivität erkannt, ist die Nachweisgrenze der jeweiligen Radionuklide den Freigabewerten gegenüberzustellen. Bei der Berechnung sowohl der Aktivitäten als auch der Erkennungs- und Nachweisgrenzen müssen dabei auch etwaige in den jeweiligen Messvorgang einfließende Unsicherheitsbeiträge berücksichtigt werden. Da die Aktivitätsverteilung auf der Messfläche üblicherweise nicht bekannt ist, wird im Rahmen der vorliegenden Erfindung empfohlen, für die Verortung einer/der jeweiligen Aktivität auf der Messfläche eine konservative Annahme bzw. eine Annahme mit einem Überdeckungsintervall von 95% zu treffen.

Der Messvorgang kann bei kontinuierlichem Vortrieb oder schrittweise je abdeckbarem Längenabschnitt erfolgen. Ein schrittweiser Vorschub mag bei vielen potentiellen Anwendungen hinsichtlich maximal exakter Auswertung besonders vorteilhaft sein. Sobald bei einem schrittweise geregelten Vorschub ein bestimmter Axialabschnitt abschließend untersucht/detektiert wurde, fährt die Trageinrichtung gesteuert/geregelt etwas weniger als die messtechnisch nutzbare (Detektions-)Länge des Strahlungsdetektors weiter (Vorschub) und beginnt einen weiteren Messvorgang, betreffend eine benachbarte Messflächenabschnitt mit leichter Überlappung zum vorhergehenden Messflächenabschnitt. Der dabei gesteuert/geregelt vorgebbare Vortrieb erfolgt z.B. durch angetriebene Rollen oder Ketten an den entsprechenden Kontaktpunkten, wobei der Vortrieb an den Rollen/Ketten bevorzugt synchron erfolgt, insbesondere in Hinblick auf eine möglichst konstante/gleichbleibende Ausrichtung der Trageinrichtung (bevorzugt orthogonal) relativ zur zu untersuchenden Messfläche bzw. relativ zur Rohrleitungsachse. Dabei kann die Trageinrichtung jeweils derart vorschubgesteuert positioniert werden, dass die Messflächen benachbarter Axialabschnitte geringfügig überlappen, wobei der Grad der Überlappung auch von der Genauigkeit des Messens beim Vortrieb abhängig eingestellt werden kann. Beispielsweise kann eine Überlappung von ca. 5% im Rahmen der vorliegenden Erfindung als sinnvoll bzw. empfehlenswert erachtet werden. Beträgt die Länge des Strahlungsdetektors z.B. 10cm, so fährt die Trageinrichtung nach jedem axialabschnittsbezogenen Messvorgang z.B. 9,5cm weiter. Vorteilhaft kann die Überlappung dabei anwendungsspezifisch durch den Nutzer implementiert sein/werden, insbesondere auch parametrisiert werden. Realistische Messzeiten einer gammaspektrometrische Bestimmung für einen jeweiligen Rohrabschnitt betragen erwartungsgemäß einen Sekunden- oder Minutenwert im Bereich von ca. 30 Sekunden bis zu wenigen Minuten. Dies ist insbesondere im Vergleich zu sonst gebräuchlichen Messverfahren mittels Proportionalzählern oder Detektionssystemen einer Gesamt-Gamma-Messung eine vergleichbare kurze Messzeit insbesondere für die hier betrachtete Aufgabenstellung, und kann daher zu einer noch höheren Effizienz der hier beschriebenen messtechnischen Untersuchungen beitragen und demnach gute Wirtschaftlichkeit auch bei sehr großen Längserstreckungen bzw. sehr großen kerntechnischen Anlagen begründen. Diese kurze Messzeit resultiert auch aus den hier beschriebenen Vorteilen eines/des Szintillationsdetektors und dessen Verwendung im Rahmen des hier beschriebenen messtechnischen Ansatzes.

Es ist zu erwähnen, dass beim hier beschriebenen Messvorgang auch eine Berücksichtigung oder Kompensation einer nicht exakt axial fluchtenden Ausrichtung der Mittenlängsachse der Detektoreinheit mit der Mittenlängsachse des Innenvolumens vorgesehen werden kann, insbesondere im Sinne einer Ausrichtungskompensation. Hierzu kann/können auch wenigstens ein Sensor und/oder wenigstens eine Kamera oder Entfernungsmesseinheit betreffend die relative Ausrichtung der Detektoreinheit relativ zur Messfläche vorgesehen und messtechnisch aktiv sein. Beispielsweise ist/wird als Sensor wenigstens ein zuvor kalibrierter Beschleunigungssensor und/oder ein Lagesensor implementiert, z.B. ein MEMS (mikroelektromechanisches System)-Gyroskop. Eine Abweichung von nur wenigen Grad kann je nach Aufgabenstellung auch z.B. als Unsicherheit in das Messverfahren eingehen, so dass der Fachmann die Komplexität der jeweiligen messtechnischen Bestimmung individuell anpassen kann. Eine Kompensation der Messdaten unter Bezugnahme auf die Ist-Ausrichtung kann insbesondere in Abhängigkeit von messtechnischen Besonderheiten des jeweiligen Detektors z.B. auf geometrischer Grundlage erfolgen und kann eine verbleibende Messunsicherheit weiter reduzieren.

Die sich wiederholenden positionsbezogenen Messvorgänge werden bevorzugt jeweils so lange automatisiert wiederholt, bis das gesamte jeweilige Innenvolumen gemessen/überprüft wurde. Sollten Schwellwerte bezüglich der gemessenen Aktivität überschritten werden (negative Entscheidungsmessung), so kann es auch sinnvoll sein, den Messvorgang schwellwertspezifisch abzubrechen, insbesondere um die Trageinrichtung in zeiteffizienztechnischer Hinsicht zusammen mit dem Strahlungsdetektor zur initialen Messposition zurückfahren zu lassen oder manuell oder robotergestützt zurückzuziehen. Kann eine Rohrleitung vollständig freigemessen werden (positive Entscheidungsmessung), so wird die Trageinrichtung mit montiertem Strahlungsdetektor daraufhin aus der Rohrleitung entnommen. Wahlweise kann die Trageinrichtung autonom in eine/die Ausgangsposition zurückfahren und eine Information transmittieren, insbesondere ein Signal betreffend den Abschluss der messtechnischen Aufgabe. Die Rohrleitung bzw. das jeweilige Innenvolumen kann daraufhin hinsichtlich potentiellen Eindringens externer Kontamination (Kontaminationsverschleppung) möglichst zeitnah verschlossen werden; vorteilhaft werden dafür z.B. ein Kunststoffdeckel mit Gummidichtung oder ein Kunststoffdeckel in Verbindung mit einem Übersprühen mit Flüssigfolie vorgesehen.

Es ist zu verstehen, dass die vorliegende Erfindung vornehmlich auf dem Konzept basiert, die jeweilige messtechnische Aufgabe durch einen möglichst hohen Automatisierungsgrad betreffend Verfahren und Vorrichtung zu erleichtern bzw. die jeweilige messtechnische Aufgabe darauf basierend möglichst zu großen Teilen autonom zu bewerkstelligen, bei guter Genauigkeit und guter zeitlicher Effizienz. Dies liefert insbesondere im Zusammenhang mit Strahlenbelastung und Dosisleistung freilich auch einen guten Arbeitsschutz. Gleichwohl sieht die vorliegende Erfindung dabei auch eine hohe Flexibilität und Variabilität in der Anwendung durch optimierte manuelle Handhabung/Handhabbarkeit vor, sei es bei Vor-/Nachbereitung der jeweiligen messtechnischen Aufgabe, sei es auch während der Durchführung der messtechnischen Aufgabe, insbesondere indem das Positionieren und Zentrieren der Trageinrichtung optional auch zumindest teilweise auf manuelle Weise erfolgen kann bzw. durchgeführt wird. Beispielsweise kann eine manuelle Intervention auf ein Positionieren der Messvorrichtung in einer Anfangsposition und wahlweise auch in einer Soll-Endposition (Ende der Messung) beschränkt sein, um basierend auf diesen Positionsinformationen alle weiteren Schritte der Messung automatisiert bzw. computerimplementiert durchführen zu lassen. So kann ein einzelner Anwender z.B. auch in wenigen Augenblicken zahlreiche Messvorrichtungen zeitlich parallel installieren bzw. in Betrieb nehmen und jeweils weitgehend autark die entsprechende messtechnische Aufgabe durchführen lassen. In diesem Zusammenhang etwaiger manueller Handhabungsschritte ist begrifflich zu unterscheiden zwischen Verlagern einerseits und Positionieren andererseits; sofern hier von Verlagern gesprochen wird, so ist darunter ein aktuatorisches bzw. motorisches bzw. automatisiertes Verlagern der Messvorrichtung zu verstehen (insbesondere basierend auf vordefinierbaren Vorschubparametern), und sofern von Positionieren oder Zentrieren gesprochen wird, so ist darunter nicht notwendigerweise ein automatisches Positionieren oder Zentrieren sondern optional auch ein manuell durchgeführtes Positionieren und/oder Zentrieren zu verstehen. Beispielsweise wird das Vorgeben einer Soll-Position (z.B. der nächsten einzunehmenden axialen Messposition) computergestützt ausgeführt, z.B. indem einem Anwender über eine/die Benutzerschnittstelle eine entsprechende Information zugeleitet wird, und das Einnehmen dieser Position kann dann wahlweise auch auf manuelle Art und Weise herbeigeführt werden.

Gemäß einem Ausführungsbeispiel wird das Verfahren auf geregelte Weise als positionsbezogene Entscheidungsmessung durchgeführt, indem messtechnisch bestimmte positionsbezogene massen- und/oder oberflächenspezifische Strahlungsaktivitäten erfasst bzw. ermittelt werden und insbesondere durch Bezugnahme auf Freigabewerte und einen Grad der so genannten Ausschöpfung (Entscheidungsmessung positiv oder negativ in Abhängigkeit von einem Schwellwert für die summierte Ausschöpfung der radionuklidspezifischen Freigabewerte, insbesondere mit Ausschöpfungsschwellwert gleich eins) als Regelungsparameter für eine zeitabhängige Positionierung der Trageinrichtung vorgegeben werden. Dies ermöglicht nicht zuletzt eine positionsbezogene summarische Berücksichtigung der/aller radionuklidspezifischen massen- oder oberflächenspezifischen Aktivitäten der das Innenvolumen umgebenden Strahler bzw. Stoffe/Materialien.

Gemäß einem Ausführungsbeispiel umfasst das Verfahren das Vorgeben eines vordefinierbaren axialen Vorschubs in Abhängigkeit von wenigstens einem Steuerungs-/Regelungsparameter betreffend radioaktive Kontaminations- oder Aktivierungsschwellwerte gemäß massenspezifischen und/oder oberflächenspezifischen Freigabewerten, insbesondere radionuklidspezifischen Freigabewerten in der Einheit [Bq/g] oder [Bq/cm²], wobei das Verfahren als Entscheidungsmessung durchgeführt wird, indem die positionsbezogenen Strahlungsmessdaten entweder als eine Ausschöpfung von 1 erreichend bzw. überschreitend (keine Freigabe) oder unterscheitend (Freigabe) ausgewertet werden, insbesondere schrittweise für aufeinanderfolgende Axialabschnitte (axiale Messflächenabschnitte) z.B. einer Rohrleitung. Dies liefert insbesondere in Verbindung mit einem vergleichsweise langgestreckten Detektor die Möglichkeit, auch bei einer zumindest teilweise belasteten Umgebung dennoch einzelne Axialabschnitte als "freigegeben" bzw. "freizugeben" zu vermessen, und kann somit auch den im Nachgang für die bestimmungsgemäße Entsorgung strahlenbelasteten Materials erforderlichen Aufwand senken. Eine axialabschnittspezifische Entscheidungsmessung kann dabei vorteilhaft auch basierend auf einer systemseitig vorteilhaft während der Messung generierten grafischen Darstellung, insbesondere visualisiert über eine/die Benutzerschnittstelle der Vorrichtung, durchgeführt werden, beispielsweise indem unmittelbar dargestellt bzw. ausgegeben wird, welcher Längsabschnitt freigegeben werden kann. Beispiel: "Längenabschnitt L1 von 50-70cm Rohrlänge wird freigegeben, Längenabschnitt L2 von 71-80cm Rohrlänge wird nicht freigegeben". Dabei kann/können die Ausschöpfung der Freigabewerte bzw. die radionuklidspezifischen Aktivitäten über die gemessene Weglänge bzw. über die Rohrleitungslänge visualisiert werden, insbesondere über eine drahtlos z.B. durch Nahkommunikationsprotokolle eingebundene Benutzerschnittstelle. Die Entscheidungen, auf welche Weise nach erfolgter Messung mit dem Messobjekt weiter zu verfahren ist, können vielfältig sein und werden im Wesentlichen durch den jeweiligen Anlagenbetreiber zu treffen sein; vorteilhaft kann die hier beschriebene grafische Benutzerschnittstelle daher auch anwendungsspezifisch adaptiert werden. Beispielsweise kann seitens des Betreibers dekontaminiert werden bzw. es kann versucht werden, zu dekontaminieren; dann ist es vorteilhaft, wenn über die grafische Benutzerschnittstelle unmittelbar eine Dekontaminationsmaßnahme vorgeschlagen wird, wodurch auch die der Messung als solcher nachgelagerte Logistik erleichtert wird. Anders ausgedrückt: Um dem Anwender/Nutzer zeitnah nach der Messung die jeweiligen Messwerte auf einfache und gut verständliche Weise veranschaulichen zu können, werden die Messwerte in der Steuerungs- und Auswertesoftware der Vorrichtung durch geeignete Visualisierung bezüglich der Messstrecke bzw. der gemessenen Rohrleitungslänge grafisch dargestellt, insbesondere indem ebenfalls auf die Höhe der Ausschöpfung hingewiesen wird. Dies erfolgt vorteilhaft in Ergänzung zu axialpositionsspezifisch generierten numerischen Angaben.

Gemäß einem Ausführungsbeispiel umfasst das Verfahren eine aktive zeitabhängige Regelung (dynamische Anpassung der positionsbezogenen Messzeit) eines/des axialen Vorschubs in Abhängigkeit vom Überschreiten eines/des entsprechenden Sensitivitätsschwellwerts, insbesondere eines/des von der Trageinrichtung bzw. einer Steuerungs-/Regelungseinheit bzw. eines Computerprogrammprodukts ausgeübten/vorgegebenen axialen Vorschubs. Die regelungstechnische Kopplung an wenigstens einen Sensitivitätsschwellwert ermöglicht dabei auch, die tatsächlich erforderliche Messzeit bzw. Detektionszeit möglichst niedrig zu halten, ohne dadurch die Exaktheit/Güte der Messdaten zu schwächen.

Gemäß einem Ausführungsbeispiel wird eine positionsspezifisch erforderliche Mindestdetektionszeit in Abhängigkeit von der Sensitivität während des Messvorgangs zumindest annähernd in Echtzeit (z.B. alle fünf Sekunden) berechnet, wobei ein/der Vorschub basierend auf der Sensitivität und der messtechnisch bestimmten Aktivitätsinventare gesteuert/geregelt wird. Dies ermöglicht nicht zuletzt auch, den Vorschub bzw. die axialabschnittsspezifische Verweildauer des/der Detektoren auf möglichst genaue Weise in Abhängigkeit von der Stärke etwaiger momentan tatsächlich detektierter Strahlung zu regeln. Dabei ist unter dem Aspekt "Vorschub bzw. Verlagerung basierend auf der Sensitivität" insbesondere zu verstehen, dass ein Verlagern in eine neue Messposition bzw. ein Vorgeben der neuen Messposition in Abhängigkeit vom momentanen Fortschreiten der Messung im jeweiligen Axialabschnitt realisiert wird. Anders ausgedrückt: Sofern ein Radionuklid detektiert wird und die Aktivität die Freigabewerte bereits überschreitet, wird die Messung beendet bzw. abgebrochen und die Ergebnisse werden dokumentiert und das Trägersystem wird zur nächsten axialen Messposition verfahren bzw. verlagert, oder es wird zumindest die nächste Axialposition vorgegeben. Sofern jedoch kein Signal gemessen wird, wird die Nachweisgrenze angegeben.

Gemäß einem Ausführungsbeispiel wird ein/der axiale Vorschub der Trageinrichtung bzw. der gesamten messtechnischen Vorrichtung schrittweise unter Bezugnahme auf eine/die insbesondere bauformbedingt vorgegebene axiale Detektionslänge der wenigstens einen Strahlungsdetektionseinheit bzw. Szintillationsdetektoreinheit in einen darauffolgenden vordefinierten/vordefinierbaren (Längs-)Abschnitt, welcher maximal so groß ist wie die axiale Detektionslänge, zeitlich und in Abhängigkeit vom Überschreiten des entsprechenden Sensitivitätsschwellwerts steuerungs-/regelungstechnisch vorgegeben, beispielsweise um jeweils 95% der axialen Detektionslänge der Strahlungsdetektionseinheit oder 95% der gesamten verfügbaren axialen Detektionslänge mehrerer Strahlungsdetektionseinheiten. Dies begünstigt auch ein lückenlose messtechnisches "Abtasten" einzelner (Axial-)Abschnitte des Innenvolumens, wobei bevorzugt eine Überlappung von z.B. 5% eingeplant wird, durch welche die lückenlose Überdeckung der einzelnen Messflächenabschnitte mit gutem Sicherheitsfaktor sichergestellt werden kann, ohne dabei einen zu nachteiligen Kompromiss hinsichtlich der Gesamtmesszeit eingehen zu müssen, also bei guter Ausnutzung der verfügbaren Detektionsfläche/-länge. Vorteilhaft ist (gegebenenfalls anwendungsspezifisch) eine maximale Messzeit implementiert, nach welcher jedenfalls weitergefahren wird bzw. zur Verlagerung bzw. Positionierung aufgefordert wird.

Gemäß einem Ausführungsbeispiel wird ein/der gewünschte Bewegungspfad durch das Innenvolumen (z.B. entlang einer Längserstreckungsachse einer Rohrleitung) im Start-Stopp-Betrieb von der Trageinrichtung abgefahren (automatisiert vorgegebener Vorschub), wobei der entsprechende schrittweise (Axial-)Abschnitt des Bewegungspfades vorteilhaft etwas weniger als die wirksame Detektionslänge der wenigstens einen Szintillationsdetektoreinheit beträgt (z.B. 95% der Detektionslänge), also bei leichter axialer Überlappung der axialen Messabschnitte. Dies begünstigt auch eine besonders exakte Messung/Detektion bezüglich des jeweiligen Axialabschnitts bzw. einer/der damit korrelierbaren Messfläche (insbesondere orthogonale Projektion von Detektor auf Innenmantelfläche). Der Betrag des jeweiligen schrittweisen Vorschubs kann dabei auch individuell insbesondere in Abhängigkeit vom gekuppelten Detektor bzw. dessen Detektionslänge eingestellt bzw. automatisch während des Kuppelvorgangs durch Erkennen und Auslesen des Detektortyps und dessen Abmessungen von der Trageinrichtung übernommen werden. Vorteilhaft kann der jeweils ausgewählte Detektor mittels der Steuerungssoftware über eine/die Benutzerschnittstelle parametrisiert werden, z.B. anhand einer vorgegebenen Liste in einem Dropdown-Menü. Bevorzugt werden die entsprechenden Daten bzw. Angaben auf Administrator-Ebene eingegeben. Die maximal einstellbare Vorschublänge entspricht dann der jeweils verfügbaren Detektorkristalllänge. Die Überlappung wird in der Steuerungssoftware mit einem Default-Wert von z.B. 5% hinterlegt, kann jedoch durch den Nutzer/Anwender geändert werden. Dabei kann auch anwendungsspezifisch festgelegt werden, welche Nutzer(typ) mit welchen Berechtigungen Zugang zur Steuerungssoftware bzw. zu den jeweiligen Parametrisierungsoptionen haben soll. Auf diese Weise kann einerseits die Nutzerfreundlichkeit gesteigert werden und andererseits auch eine Fehlbedienung vermieden werden, insbesondere hinsichtlich systemseitig vorgegebenem Vorschub bzw. Axialverlagerung in Abhängigkeit vom jeweils gekuppelten Detektortyp (wahlweise systemseitig implementierter Automatismus, z.B. umfassend maximale Vorschubschwellwerte systemseitig vordefiniert in Abhängigkeit von kuppelbaren Detektortypen).

Gemäß einem Ausführungsbeispiel erstreckt sich das Innenvolumen axial entlang einer Längserstreckungsachse (und ist wahlweise auch in sich geschlossen), insbesondere mit dem Innenvolumen mit zumindest annähernd kreisrundem Querschnittsprofil, wobei die (Szintillations-/Strahlungs-)Detektion bezüglich eines vordefinierten/vordefinierbaren Längsabschnitts des Innenvolumens entlang der Längserstreckungsachse mit der Strahlungsdetektionseinheit in einer koaxial an der Trageinrichtung befestigten/gekuppelten Anordnung erfolgt. Dies liefert auch einen guten Kompromiss aus vergleichsweise einfachem messtechnischem Aufbau und effizientem Messvorgang in allen Umfangsrichtungen. Die koaxiale Ausrichtung kann dabei vorteilhaft durch die hier ebenfalls beschriebene Abstützkinematik sichergestellt werden, insbesondere auf selbstregulierende Weise dank wenigstens eines zentralen Stellglieds, was vorliegend an anderer Stelle noch detaillierter beschrieben ist. Insbesondere wird die an der Trageinrichtung abgestützte Strahlungsdetektionseinheit innerhalb des Innenvolumens zentriert, insbesondere indem Antriebselemente einer/der Antriebs-/Führungseinheit der Trageinrichtung mit dergleichen Kraft auf die Innenmantelfläche einer/der das Innenvolumen umgebenden Wandung gedrückt werden.

Bevorzugt weist die Szintillationsdetektoreinheit einen zylindrischen Aufbau auf. Vorteilhaft weist die Szintillationsdetektoreinheit eine zylindrische Querschnittsgeometrie auf und ist für die jeweilige messtechnische Aufgabe möglichst großvolumig gewählt. Beispielsweise werden vereinzelte Detektoren genutzt, z.B. drei Detektorgrößen "klein/mittel/groß" je Messvorrichtungs-Set, von denen mehrere als Ersatzteil vorhanden sind.

Gemäß einem Ausführungsbeispiel wird die an der Trageinrichtung verbaute bzw. daran gekuppelte Strahlungsdetektionseinheit bzw. deren wenigstens eine Szintillationsdetektoreinheit innerhalb des Innenvolumens zentriert, insbesondere selbstregulierend mechanisch, insbesondere mittels der Trageinrichtung, insbesondere indem Antriebselemente einer/der Antriebs-/Führungseinheit der Trageinrichtung mit der gleichen Kraft (bevorzugt zentral aufgebracht, insbesondere durch Federvorspannung und/oder Pneumatik, wahlweise auch durch eine Aktuierung) auf die Innenmantelfläche einer/der das Innenvolumen umgebenden Wandung gedrückt werden. Dies ermöglicht nicht zuletzt auch eine exakte Einhaltung eines einheitlichen/konstanten Radialabstands zwischen Detektionsfläche und Messfläche bzw. Wandung, wodurch auch eine exakte vollumfängliche Detektion begünstigt wird.

Als Federvorspannung ist dabei auch eine auf mechanische Art und Weise realisierte Vorspannung zu verstehen.

Je nach Platzverhältnissen kann es besonders vorteilhaft sein, die insbesondere für Reibschluss gewünschte/erforderliche Vorspannung der Abstützkinematik durch pneumatische Mittel zu realisieren, insbesondere da diese im Vergleich zu mechanischen Federsystemen vergleichsweise schlank bauen und auch vergleichsweise differenziert angesteuert bzw. wahlweise auch geregelt werden können.

Gemäß einem Ausführungsbeispiel wird die wenigstens eine an die Trageinrichtung gekuppelte Strahlungsdetektionseinheit innerhalb des Innenvolumens zentriert, insbesondere mittels der Trageinrichtung, insbesondere durch eine Scherenkinematik mit Scherenschenkeln, insbesondere indem an der die Wandung kontaktierenden Seite (bzw. Abschnitt, Ende) der Scherenschenkel jeweils ein Antriebselement verbaut ist, und indem die seitens eines Grundkörpers der Trageinrichtung angeordnete Seite der Scherenschenkel mit wenigstens einer Zugfeder verbunden ist, wobei die Enden von wenigstens drei Schenkeln bevorzugt über einen in axialer Richtung gleitend gelagerten Ring oder dergleichen Stellglied verbunden bzw. gekoppelt/gekuppelt sind. Dies ermöglicht nicht zuletzt auch die Übertragung von Vortriebskräften an wirksam/effektiv über den Umfang und wahlweise auch an unterschiedlichen Axialpositionen verteilten Kontaktpunkten, wobei auch die Ausrichtung innerhalb des Innenvolumens effektiv reguliert werden kann, insbesondere auf mechanische selbstregulierende Weise. Bevorzugt sind die einzelnen Antriebselemente individuell ansteuerbar und unabhängig voneinander aktuierbar. Ein Zentrieren der Trageinrichtung bzw. deren Grundkörper (und damit auch des Detektors, welcher bevorzugt konzentrisch bzw. koaxial an den Grundkörper gekuppelt ist) kann dabei z.B. auch im Rahmen einer vordefinierbaren Toleranz erfolgen, z.B. bei +/- 1mm. Eine/die Verortungssystemkomponente ist dabei vorteilhaft eingerichtet, die Position des Detektors mit einer Längentoleranz von max. +/- 3mm und einer Winkeltoleranz von max. +/- 3° zu bestimmen.

Vorteilhaft wird ein/der axiale Vorschub der Trageinrichtung schrittweise unter Bezugnahme auf eine/die bauformbedingt vorgegebene axiale Detektionslänge der wenigstens einen Strahlungsdetektionseinheit in einen darauffolgenden vordefinierten/vordefinierbaren Abschnitt, der maximal so groß ist wie die axiale Detektionslänge, zeitlich und in Abhängigkeit vom Überschreiten des entsprechenden Sensitivitätsschwellwerts vorgegeben, beispielsweise um jeweils 95% der axialen Detektionslänge der Strahlungsdetektionseinheit oder 95% der gesamten verfügbaren axialen Detektionslänge mehrerer Strahlungsdetektionseinheiten.

Vorteilhaft wird der Bewegungspfad durch das Innenvolumen im Start-Stopp-Betrieb von der Trageinrichtung abgefahren, und der entsprechende schrittweise Abschnitt des Bewegungspfades beträgt etwas weniger als die wirksame Detektionslänge der wenigstens einen Szintillationsdetektoreinheit.

Vorteilhaft wird die wenigstens eine an die Trageinrichtung gekuppelte Strahlungsdetektionseinheit innerhalb des Innenvolumens zentriert, insbesondere durch eine Scherenkinematik, indem an einer Seite der Scherenschenkel jeweils ein Antriebselement verbaut ist und die andere Seite der Scherenschenkel mit wenigstens einer Zugfeder verbunden ist, wobei die Enden von wenigstens drei Schenkeln bevorzugt über einen in axialer Richtung gleitend gelagerten Ring oder dergleichen Stellglied verbunden sind.

Gemäß einem Ausführungsbeispiel greift an einem axial relativ zu einem/zum Grundkörper der Trageinrichtung gelagerten Ring oder dergleichen Stellglied, welcher/welches axial vorgespannt (insbesondere durch wenigstens eine Zugfeder) Scherenschenkel einer/der Abstützkinematik der Trageinrichtung anlenkt, wenigstens ein Zugmittel an, welches durch Aufbringen einer Zugkraft gegen die axiale Vorspannkraft wirkt und die Abstützkinematik radial zurückzieht, insbesondere derart dass ein Kontakt zwischen Abstützkinematik und einer/der das Innenvolumen umgrenzenden Wandung an zumindest einer Umfangsposition getrennt wird. Dies erleichtert nicht zuletzt auch ein Zurückverlagern bzw. Herausziehen der Trageinrichtung bzw. der gesamten Messvorrichtung, zum Bergen der Messvorrichtung heraus aus dem Innenvolumen (Interventionskonzept).

Gemäß einem Ausführungsbeispiel umfasst das Verfahren das Bestimmen wenigstens eines Messobjektmerkmals (insbesondere Innendurchmesser, Material, Wandstärke) mittels der Trageinrichtung, insbesondere zumindest eines/des jeweiligen Innendurchmessers des Innenvolumens (Korrelation Messobjekt und Art und Weise der Messung, insbesondere Zeit- bzw. Sensitivitätsschwellwert), wobei das Messobjektmerkmal als messtechnisch bestimmte Randbedingung zur Charakterisierung einer/der entsprechenden Messanordnung bei einer/der Auswertung detektierter (Szintillations)Signale berücksichtigt wird. Dies ermöglicht nicht zuletzt auch eine unmittelbare Korrektur z.B. einer nicht koaxialen Ausrichtung, welche z.B. mittels mehrerer axial versetzt zueinander angeordneter Radialabstandssensoren erkannt/erfasst werden kann. Derartige Messobjektmerkmale können von einer/der Recheneinheit berücksichtigt werden und z.B. auch als Steuerungs-/Regelungsvorgabe für wenigstens ein Antriebselement verarbeitet werden.

Vorteilhafterweise wird eine/die Wandstärke des Messobjekts (z.B. Rohrwandung) als extern verfügbare Randbedingung bereitgestellt (z.B. Wandstärke im Bereich von 2-3mm); wahlweise kann dieses Messobjektmerkmal jedoch auch messtechnisch bestimmt werden, z.B. zu Beginn einer Messung, insbesondere indem der Außendurchmesser des Messobjekts ermittelt oder als vorbekannter Wert eingepflegt oder ausgelesen/ausgegeben wird, und indem der Innendurchmesser ermittelt wird, und indem die Wandstärke daraus als indirekt bestimmter Messwert ermittelt wird.

Gemäß einem Ausführungsbeispiel wird mittels der Trageinrichtung wenigstens ein Messobjektmerkmal erfasst, insbesondere eine/die radiale Entfernung zwischen Strahlungsdetektionseinheit bzw. Detektor und Messfläche (insbesondere erfasst über eine axiale Relativposition wenigstens eines mit einer Abstützkinematik der Trageinrichtung zusammenwirkenden gleitend gelagerten Rings relativ zu einem/zum Grundkörper der Trageinrichtung), wobei das wenigstens eine Messobjektmerkmal für die zeitlich dynamische Vorgabe der Verlagerung bzw. Position der Trageinrichtung berücksichtigt wird, insbesondere indem eine/die positionsbezogene Messzeit in Abhängigkeit vom (bzw. als Funktion vom) Messobjektmerkmal vordefiniert wird. Dies ermöglicht z.B. auch, die Mess-/Detektionszeit in Abhängigkeit von einem momentan an der jeweiligen Axialposition tatsächlich vorliegenden Innendurchmesser vorzugeben, z.B. bei sich verjüngenden Rohrleitungen.

Gemäß einem Ausführungsbeispiel werden Haltepunkte bzw. axiale Sollpositionen für die Trageinrichtung basierend auf Messdaten wenigstens einer Verortungssystemkomponente (insbesondere Positionssensor) axialpositionsspezifisch vorgegeben, insbesondere geregelt vorgegeben. Dies ermöglicht nicht zuletzt auch eine Plausibilitätsprüfung basierend auf einer Ist-Positionsüberwachung. Anders ausgedrückt: Ein/der Vorschub kann einerseits relativ in Bezug auf einen vorhergehenden untersuchten Abschnitt des Innenvolumens vorgegeben werden, z.B. durch Vorgabe einer axialen Verlagerung entsprechend 95% der nutzbaren Detektionslänge, andererseits kann auch eine absolute Soll-Position vorgegeben werden, insbesondere zwecks Verifikation, dass die Messvorrichtung nicht auswandert. Vorteilhaft erfolgen die einzelnen positionsspezifischen Messungen aufeinanderfolgend, d.h., die Verlagerung bzw. der Vorschub bzw. die nächste einzunehmende Axialposition wird relativ zur vorherigen Messposition vorgegeben. Dabei kann auch eine Verlagerung bzw. ein Vorschub hin zu einer parametrisierbare Position als ersten Messort (initiale Messposition) implementiert sein, z.B. für messtechnische Aufgabenstellungen, bei welchen erst ab einer gewissen Längendistanz, z.B. ab dem ersten Meter einer Rohrleitung, gemessen werden soll, z.B. aufgrund bereits anderweitig erfolgter Messungen im Anfangsbereich.

Gemäß einem Ausführungsbeispiel werden insbesondere während des Messvorgangs und/oder während eines/des Vorschubs Kamerabilddaten vom Innenvolumen oder einer das Innenvolumen umgebenden Wandung, insbesondere von der jeweiligen Messfläche, in Echtzeit generiert. Dies ermöglicht auch einen Abgleich zwischen einer tatsächlichen Ausgestaltung des Innenvolumens (bzw. einer/der entsprechenden Wandung) und einer z.B. durch Rohrleitungspläne dokumentierten Ausgestaltung, wobei für den Fall einer Abweichung auch eine Sicherheitsabfrage oder zusätzliche Steuervorgabe implementiert sein kann, welche z.B. eine Nutzereingabe erfordert (insbesondere Entscheidung über den weiteren Verlauf der Messung), oder welche systemseitig z.B. einer Berücksichtigung der tatsächlichen Situation den Vorzug gibt. Anders ausgedrückt: An der Trageinrichtung kann eine Kameraeinheit verbaut sein, mittels welcher insbesondere etwaige Hindernisse oder Unebenheiten innerhalb des Innenvolumens (bzw. innerhalb einer Wanddurchführung) erfassbar bzw. visualisierbar sind (zumindest annähernd in Echtzeit), wodurch z.B. Wanddurchbrüche erkannt werden können.

Gemäß einem Ausführungsbeispiel wird eine Abstützung der Trageinrichtung an einer das Innenvolumen umgebenden Wandung selbstregulierend (insbesondere radialkraftreguliert) insbesondere durch federmechanische und/oder pneumatisch generierte Vorspannung vorgegeben, insbesondere zentral vorgegeben und über den Umfang verteilt bezüglich wenigstens dreier Kontakt-/Abstützpunkte an der Wandung wirkend. Dies verbessert nicht zuletzt auch die Möglichkeiten, die Messung bzw. den Messvorgang auf autarke Weise durch eine sich autonom z.B. entlang eines durch den Verlauf des Innenvolumens vordefinierten Bewegungspfades verlagernde Trageinrichtung vornehmen zu lassen (insbesondere mit für den jeweiligen Anwendungsfall vorgegebener Endposition, z.B. definiert durch absolute Positionsdaten entsprechend einem Rohrende/-anfang).

Gemäß einem Ausführungsbeispiel umfasst das Verfahren das Bestimmen der absoluten und/oder relativen Position der Trageinrichtung bzw. der Strahlungsdetektionseinheit, insbesondere mittels wenigstens einer an der Trageinrichtung vorgesehenen Verortungssystemkomponente, wobei die absolute und/oder relative Position als messtechnisch bestimmte Randbedingung bei einer/der Auswertung von detektierten Szintillationssignalen berücksichtigt wird. Dies ermöglicht nicht zuletzt eine noch belastbarere/sicherere Freigabemessung bezüglich der einzelnen Axialabschnitte des vermessenen Innenvolumens.

Gemäß einem Ausführungsbeispiel wird das Detektieren der Strahlung auf passive Weise durchgeführt, indem etwaige auftretende Strahlung ohne irgendeine Emission seitens der Trageinrichtung detektiert wird (also ohne energetische Aktivierung eines das Innenvolumen umgebenden Materials). Dies grenzt die vorliegende Erfindung auch von solchen messtechnischen Anordnungen ab, bei welchen eine aktive Anregung bzw. Emission erfolgen soll.

Das Detektieren der Strahlung kann insbesondere auf passive Weise durchgeführt werden, indem die Strahlung ohne irgendeine Emission seitens der Trageinrichtung detektiert wird. Anders ausgedrückt: Es wird die ionisierende Strahlung detektiert, welche durch den Zerfall von gegebenenfalls am Messort vorhandenen Radioisotopen bedingt wird, ohne diese Radioisotope im Zuge der Messung zu erzeugen z.B. durch irgendeine Emission seitens der Rohrsonde.

Gemäß einem Ausführungsbeispiel ist/wird die jeweilige Messfläche der entsprechenden (momentanen) Messanordnung durch die axialen Enden der Detektionsfläche der Strahlungsdetektionseinheit projiziert auf eine das Innenvolumen umgrenzende Wandung definiert, insbesondere als axialer Innenzylindermantelflächenabschnitt (zunächst bei rotationssymmetrischen Rohren). Dies ermöglicht nicht zuletzt auch einen effizienten Messvorgang, insbesondere skalierbar basierend auf der installierten Detektionslänge und vorteilhaft auch richtungsunabhängig.

Gemäß einem Ausführungsbeispiel ist/wird die Detektionsfläche der Strahlungsdetektionseinheit durch wenigstens einen Szintillationskristall definiert. Dies begünstigt nicht zuletzt auch eine effiziente und raumrichtungsunabhängige Detektion über die gesamte Mantelfläche.

Gemäß einem Ausführungsbeispiel wird das jeweilige Szintillationssignal durch einen Vervielfacher detektiert und verstärkt, insbesondere durch einen Silizium-Photomultiplier (SiPM). Dies begünstigt eine vorteilhafte Detektion bzw. Auswertung auch dahingehend, dass eine hohe Empfindlichkeit bzw. Sensitivität in Kombination mit der Fähigkeit der Detektion bzw. Auswertung auch vergleichsweise hoher Strahlungsleistungen sichergestellt werden kann. Ein SiPM liefert dabei auch den Vorteil eines vergleichsweise kleinen Volumens und hoher Robustheit sowie eines geringeren Signal-Untergrund-Verhältnisses und auch einer geringen Hochspannung bzw. Leistungsaufnahme, wodurch auch z.B. die Verwendung eines MCA in Kombination mit einem/dem Detektor in Kombination mit z.B. USB-Kabel und Power-over-Ethernet erleichtert wird. Die Gesamtlänge des Detektors ist dabei vergleichsweise kurz. Der Detektor kann vorteilhaft drahtgebunden Kabel an einem/dem MCA verbunden sein, wobei das MCA als separates Gerät außerhalb des Innenvolumens bzw. außerhalb der Rohrleitung verbleiben kann. In diesem Kontext ist zu verstehen, dass in prozessualer Hinsicht die Signale vor dem AD-Wandler als analoge Signale verarbeitet werden und als digitale Signale weitergegeben werden, wobei der MCA digitale Signale ausgibt, die zudem (codierte) digitale Daten enthalten.

Mittels Szintillator (Szintillationsdetektor) lassen sich insbesondere im Vergleich zu HalbleiterDetektoren vorteilhaft Messungen bei hohe Zählraten durchführen (höhere Ortsdosisleistungen), wenngleich diese bei Freigabemessungen eher nicht zu erwarten sind.

Gemäß einem Ausführungsbeispiel wird die positionsbezogene massen- und/oder oberflächenspezifische Aktivität basierend auf einer Gesamt-Impulsraten-Bestimmung (MCS) und/oder einer gammaspektrometrischen Bestimmung (PHA) gemessen (insbesondere in Ausgestaltung als Entscheidungsmessung). Dies begünstigt jeweils auch die Implementierung der erfindungsgemäßen sensitivitätsschwellwertsabhängigen Steuerung/Regelung. Eine gammaspektrometrische Bestimmung liefert dabei auch den Vorteil einer eindeutigen Identifizierung vorhandener Radionuklide, basierend auf einer möglichst umfangreichen Detektionsdatengrundlage.

Gemäß einem Ausführungsbeispiel erfolgt die Auswertung erfasster Szintillationsdetektionssignale insbesondere durch bzw. mittels der folgenden Komponenten: Photomultiplier, PreAmp, ADC, MCA, PC mit Gammaspektrometriesoftware (Auswertesoftware) sowie entsprechenden Kabeln und Stromquellen.

Gemäß einem Ausführungsbeispiel umfasst die Szintillationsmessung eine gammaspektrometrische Bestimmung (PHA), insbesondere indem Positionen von Photopeaks zur Identifizierung von Radionukliden ausgewertet werden. Dies erleichtert nicht zuletzt auch die Bestimmung eines Grades der Ausschöpfung. Die Auswertung der Photopeak-Positionen erfolgt dabei bevorzugt durch vorherige Energiekalibrierung, der Photopeak-Suche in einem aufgenommen Gammaspektrum, dem Peak-Fit und einem Abgleich mit bzw. Zuordnung der detektieren Photopeaks mit einer Gamma-Linien-Datenbank.

Gemäß einem Ausführungsbeispiel werden die Strahlungsmessdaten für eine quantitative Aktivitätsbestimmung ausgewertet, insbesondere indem Nettopeakflächen von Gamma-Peaks ausgewertet werden. Dies ermöglicht nicht zuletzt auch eine vergleichsweise exakte Analyse, welche weitgehend unabhängig von der Ausgestaltung der jeweiligen Messanordnung, insbesondere unabhängig von einer/der spezifischen Materialzusammensetzung, implementiert werden kann. Die Auswertung der Nettopeakflächen erfolgt dabei bevorzugt durch die Bestimmung des messtechnischen Untergrundes, der Peak-Suche, der Approximation der Peak-Form und der Berechnung der Bruttosowie Nettopeakfläche.

Gemäß einem Ausführungsbeispiel wird eine Photopeakeffizienz-Kalibrierung durchgeführt, insbesondere indem die Photopeakeffizienz entweder vor einer Messung anhand bekannten Rohr-/Messobjekt- bzw. Detektorparametern bestimmt wird oder während der Messung in Echtzeit bestimmt wird. Hierdurch kann nicht zuletzt auch die Güte der Messung verbessert werden. Eine/die Kalibrierung liefert nicht zuletzt hinsichtlich möglichst exakter quantitativer Aktivitätsbestimmung eine noch vorteilhaftere Implementierung. Vorteilhaft erfolgt eine experimentelle, simulative und/oder deterministische Effizienzkalibrierung, insbesondere indem auf eine Datenbank von Effizienzen zurückgegriffen wird, aus denen ein jeweils passender Datensatz ausgewählt wird. Hierbei wird darauf geachtet, dass im Falle von zwei möglichen bzw. passenden Datensätzen der jeweils konservative Datensatz ausgewählt wird. Vorteilhaft wird zunächst eine/die Energiekalibrierung und dann eine/die Halbwertsbreitenkalibrierung durchgeführt, wenngleich diese Kalibrierungs-Reihenfolge auch abgewandelt werden kann. Die Photopeakeffizienz-Kalibrierung kann entweder experimentell oder rechnerisch durchgeführt werden, wobei rechnerisch hier entweder simulativ oder deterministisch bedeutet.

Die zuvor genannte Aufgabe wird auch gelöst durch ein Computerprogrammprodukt umfassend Befehle, die bei Ausführung des Computerprogrammproduktes auf einem Computer diesen dazu veranlassen, Schritte eines Verfahrens gemäß der vorliegenden Offenbarung auf dem Computer oder mittels des Computers auszuführen, insbesondere mit dem Computerprogrammprodukt eingerichtet zum gesteuerten/geregelten Vorgeben einer Verlagerung oder Soll-Position einer/der Strahlungsdetektionseinheit mittels einer/der Trageinrichtung (10) einer/der Messvorrichtung basierend auf wenigstens einem in Abhängigkeit von positionsbezogen durch Szintillationsmessung erfassten Strahlungsmessdaten generierten Steuerungs-/Regelungsparameter, insbesondere in Abhängigkeit von einer Überschreitung von Freigabewerten. Dies ermöglicht basierend auf den zuvor genannten Vorteilen auch eine besonders effiziente Messung, insbesondere bei Automatisierung der Initiierung einer/der jeweiligen axialen Verlagerung innerhalb des Innenvolumens. Insbesondere können dabei folgende Automatisierungsaspekte betreffend den Vortrieb implementiert werden: Berechnung von Erkennungsgrenzen, Nachweisgrenzen und Aktivitäten in regelmäßigen Abständen sowie Entscheidung über den erfolgreichen Abschluss einer Messung insbesondere noch vor einem/dem Ende der jeweils parametrisierten maximalen Messzeit sowie Ausgabe wenigstens einer Steuerungs-/Regelungsvorgabe zum Verfahren bzw. Verlagern bzw. Positionieren der Rohrsonde.

Die zuvor genannte Aufgabe wird auch gelöst durch ein Computerprogrammprodukt umfassend Befehle, die bei Ausführung des Computerprogrammproduktes auf einem Computer diesen dazu veranlassen, Schritte eines Verfahrens gemäß der vorliegenden Offenbarung auf dem Computer oder mittels des Computers auszuführen, wobei mittels des Computerprogrammproduktes eine Visualisierung einer über eine/die grafische Benutzerschnittstelle der Messvorrichtung erfolgt von durch Freigabemessung freigegebenen Längsabschnitten und messtechnisch noch nicht freigegebenen Längsabschnitten erfolgt, insbesondere in Kombination mit einer Visualisierung der Ausschöpfung der Freigabewerte oder der radionuklidspezifischen Aktivitäten. Dies ermöglicht basierend auf den zuvor genannten Vorteilen auch eine besonders nutzerfreundliche Auswertung der Messung, beispielsweise auch hinsichtlich Dokumentation und der Messung als solcher nachgelagerter Logistik. Dabei können im Zusammenhang mit einer Auswertung einer/der Sensitivitätsmessung vorteilhaft insbesondere die folgenden Schritte computerimplementiert sein bzw. computerimplementierbar ausgestaltet sein:
Bestimmung von Nettopeak-Flächen;
Bestimmung von Untergrundfläche(n) bei Peak(s);
Berechnung von Erkennungs- und Nachweisgrenzen für Peaks;
Bestimmung der Aktivität aus Nettopeak-Flächen und Photopeak-Effizienzen;
Ausgabe "Entscheidungsmessung positiv" bzw. "Entscheidungsmessung negativ";

Die zuvor genannte Aufgabe wird auch gelöst durch eine Messvorrichtung gemäß dem entsprechenden nebengeordneten Vorrichtungsanspruch, nämlich durch eine Messvorrichtung, eingerichtet zum Ausführen eines Verfahrens gemäß der vorliegenden Offenbarung, aufweisend eine/die Trageinrichtung mit wenigstens einer Antriebs-/Führungseinheit umfassend wenigstens ein Antriebselement und mit einer Recheneinheit eingerichtet zum Auswerten von Detektionssignalen sowie wenigstens eine insbesondere mittels einer Kupplung stirnseitig befestigte Strahlungsdetektionseinheit mit wenigstens einer Szintillationsdetektoreinheit, wobei die Strahlungsdetektionseinheit bevorzugt axial versetzt zu einer mit wenigstens einer das für die Szintillationsmessung vorgesehene Innenvolumen umgebenden Wandung interagierenden Abstützkinematik der Trageinrichtung angeordnet ist. Hierdurch ergeben sich zuvor genannte Vorteile, insbesondere auch in Hinblick auf eine (zeit-)effiziente und automatisierbare Anwendung im Feld und eine hohe Datengüte.

Es ist zu erwähnen, dass die hier beschriebene konstruktive Ausgestaltung auch eine Skalierung der Strahlungsdetektionseinheit bzw. der Szintillationsdetektoreinheit(en) in Anzahl und Größe auf einfache Weise realisierbar machen lässt, insbesondere indem mehrere Szintillationsdetektoreinheiten axial in Reihe nebeneinander angeordnet werden, z.B. zwei Szintillationsdetektoreinheiten, welche jeweils einseitig stirnseitig an eine/die Trageinrichtung gekuppelt sind und an der anderen Stirnseite aneinander gekuppelt sind oder durch eine entsprechende Kupplung miteinander verbunden sind. Abgesehen davon, dass sich dadurch die nutzbare Detektionsfläche vergrößern und demnach die momentan untersuchte Messfläche vergrößern und dabei auch die (absolute) Messzeit verringern lässt, kann dies auch die Ausrichtung und Zentrierung der Szintillationsdetektoreinheiten noch weiter optimieren. Insofern ist es auch vorteilhaft, wenn die Strahlungsdetektionseinheit bzw. Szintillationsdetektoreinheit nicht nur einseitig stirnseitig eine Kupplungskomponente zur (ersten) Trageinheit aufweist, sondern beidseitig stirnseitig. Bei mehreren Trageinheiten kann eine steuerungs-/regelungstechnische Kopplung z.B. dadurch erfolgen, dass eine der Trageinheiten die Masterfunktion übernimmt, z.B. was den Vorschub betrifft, und die wenigstens eine weitere Trageinheit erhält nur eine davon abhängige Funktion (in früheren Zeiten noch so genannte Master/Slave-Abhängigkeit), also eine steuerungs-/regelungstechnische Kopplung, die synonym auch als Primary/Secondary-Abhängigkeit oder als Client-Server-Konzept beschrieben werden kann. Ein solcher Ansatz einer zumindest für redundante Trageinheiten und Szintillationsdetektoreinheiten sorgenden Skalierung kann auch durch die Motivation begründet sein/werden, eine möglichst (zeit-)effiziente Messung bzw. einen zeiteffizienten Messvorgang realisieren zu können, jedoch ergeben sich dadurch auch Vorteile hinsichtlich System-/Ausfallsicherheit oder auch in Hinblick auf eine optionale Plausibilitätsprüfung hinsichtlich möglichst hoher Messdatengüte.

Vorteilhaft ist auch eine Ausfallerkennung implementiert (z.B. Ausfall von Komponenten oder unvorhergesehene Änderung der Einsatzbedingungen), insbesondere indem eine Blockade von Antriebskomponenten erkannt und durch wenigstens ein Signal oder eine Information an einen Nutzer ausgegeben wird, beispielsweise bezüglich eines Blockierens oder Verklemmens von Antriebsrädern oder einer/der Abstützkinematik. Dies kann z.B. basierend auf einer Drehmomentüberwachung an einzelnen Rädern/Rollen der (jeweiligen) Antriebseinheit erfolgen.

Vorteilhaft ist auch eine für eine (manuelle) Intervention eingerichtete Ausfallsicherung implementiert (insbesondere bei einem Verklemmen der Rohrsonde in der Messumgebung), insbesondere indem mittels mechanischer Ausfallsicherungsmittel (z.B. Zugseil) eine Verspannung des Trägersystems im Rohr bzw. in der Wanddurchführung gelöst wird, so dass die Rohrsonde durch Ziehen am Zugseilmechanismus geborgen werden kann.

Es ist zu verstehen, dass die Trageinrichtung auch als manuell bedienbare/betätigbare Trageinrichtung ausgestaltet sein kann, zumindest insoweit als eine Abstützfunktion manuell eingestellt oder zumindest nachjustiert wird, beispielsweise im Rahmen der Initiierung einer Messung beim ersten Einsetzen der Trageinrichtung in das Innenvolumen, z.B. indem die Radialposition bzw. der Radialabstand von Kontakt-/Abstützpunkten einer/der Abstützkinematik in einer Anordnung der Trageinrichtung innerhalb des entsprechend zu untersuchenden Innenvolumens manuell justiert bzw. eingestellt wird, z.B. mittels einer Spindel oder dergleichen stirnseitig gut zugänglicher Axialverstellung/-betätigung. Diese Ausgestaltung kann z.B. dann vorteilhaft sein, wenn der Innendurchmesser eines Innenvolumens als konstanter (Rohr-)Innendurchmesser klar definiert werden kann und nicht mit Unebenheiten oder dergleichen zu rechnen ist. Auch kann ein Umpositionieren der Trageinrichtung nach jeweils erhaltener Vorgabe für eine neu anzufahrende Axialposition wahlweise zumindest teilweise auf manuelle Weise erfolgen.

Im Folgenden werden im Detail beispielhafte Ausgestaltungen einer Messvorrichtung gemäß der vorliegenden Erfindung dargestellt. Die Erfindung betrifft unter anderem eine Messvorrichtung, welche wenigstens eine Strahlungsdetektionseinheit und wenigstens eine Trageinrichtung beispielsweise in der Art oder gemäß dem Konzept eines (Rohrinnen-)Manipulators aufweist, sowie ein entsprechendes Messverfahren. Die Strahlungsdetektionseinheit weist wenigstens eine Szintillationsdetektoreinheit auf. Es hat sich gezeigt, dass die hier beschriebenen Szintillationsdetektoren einerseits eine hinreichende Spektralauflösung und Detektionsempfindlichkeit zur Durchführung der hier betrachteten Art von Messungen bieten (insbesondere basierend auf gammaspektrometrischer Bestimmung und/oder Gesamt-Impulsraten-Bestimmung), und andererseits auch in baulicher Hinsicht vorteilhaft implementiert werden können. Zudem besteht der insbesondere in situ spürbare Vorteil, dass diese Detektoren nicht gekühlt werden müssen. Des Weiteren sind die hier beschriebenen Szintillationsdetektoren bzw. Szintillationsdetektoreinheiten hinreichend robust und können in einem vertretbaren wirtschaftlichen Rahmen ein ausreichend großes Detektionsvolumen für die ionisierende Strahlung zur Verfügung stellen. Vorteilhaft weisen die hier beschriebenen Detektoren wenigstens einen Kristall auf. Mögliche Szintillationskristalle der Szintillationsdetektoreinheiten bestehen z.B. aus NaI, BGO, CeBr₃ oder CsI. Die der jeweiligen Entscheidungsmessung zugrunde zu legende Messfläche ergibt sich aus der inneren und/oder äußeren Mantelfläche der Rohrleitung vorzugsweise geschnitten mit den (bzw. projiziert auf die) stirnseitigen Enden bzw. Ebenen des zylindrischen Szintillationskristalls (insbesondere orthogonal geschnitten zu einer Mittenlängsachse der Ausrichtung der Strahlungsdetektionseinheit). Die axiale Länge des Szintillationskristalls wird vorteilhaft derart ausgewählt, dass die Messfläche kleiner ist als die zugelassenen Mittelungsflächen im Freigabeverfahren gemäß der jeweils einschlägigen Verordnung, wobei die zugelassene Mittelungsfläche z.B. 1.000cm² beträgt, wobei diese möglichst auch voll ausgeschöpft bzw. abgedeckt ist/wird. Für den Fall, dass beispielsweise ein 150mm langer Szintillationskristall in einem Rohr mit einem Innendurchmesser von 100mm und einer Wandstärke von 5mm eingesetzt wird, beträgt die Messfläche (Innen- und Außenoberfläche des Rohrs) ca. 990cm² und ist somit nur geringfügig kleiner als die max. Mittelungsfläche von 1000cm² (gemäß einer beispielhaften Verordnungsbezugnahme).

Die hier beschriebene erfindungsgemäße Trageinrichtung ermöglicht, den Detektor möglichst exakt innerhalb des Rohres zu positionieren und axial gemäß einem vordefinierbaren Bewegungspfad zu verlagern; dafür weist die Trageinrichtung wenigstens eine Antriebs-/Führungseinheit mit wenigstens einem Antriebselement auf (z.B. basierend auf antreibenden/vortreibenden Rollen/Reifen/Rädern oder Ketten bzw. Raupen), vorzugsweise wenigstens drei Antriebselemente. Die Antriebselemente der Antriebs-/Führungseinheit (im Folgenden auch als "Antriebseinheit" bezeichnet) werden gegen die innere Oberfläche (Innenmantelfläche) der Rohre bzw. Wanddurchbrüche oder dergleichen das Innenvolumen umgebende Wandabschnitte gedrückt, insbesondere basierend auf einem selbstregulierenden Mechanismus bzw. einer bevorzugt autonom kraftregulierenden Kinematik, die hier als Abstützkinematik beschrieben wird. Die Anpressung bzw. das radiale Andrücken der Antriebselemente (oder zumindest eines oder einiger der Antriebselemente) kann durch ein Scherenprinzip der Abstützkinematik realisiert werden, welches z.B. dadurch realisiert ist, dass an einem Ende eines Schenkels eines Scherenhebels das jeweilige Antriebselement montiert ist, und das andere Ende des entsprechenden Scherenschenkels ist mit wenigstens einer Zugfeder oder dergleichen Vorspannmechanismus oder -aktuation verbunden, wahlweise auch pneumatisch aktuiert. Die wenigstens eine Zugfeder bzw. ein gleichwirkender Vorspannmechanismus bewirkt (insbesondere zentral für mehrere Schenkel), dass die Schenkel des entsprechenden Scherenhebels in axialer Richtung zusammengezogen werden, wodurch insbesondere basierend auf der Federrate (Federkonstante, Federsteifigkeit) und in Abhängigkeit des Rohrdurchmessers und der Schenkellänge die von den Antriebselementen auf die Rohrinnenoberfläche (also in radialer Richtung) ausgeübte Kontaktkraft eingestellt werden kann. Dabei kann je nach Anwendungsfall frei vorgegeben werden, wie viele Scherenheben über den Umfang verteilt die Trageinrichtung bzw. den daran befestigten wenigstens einen Detektor lagern sollen, und wie viele davon als federgelagerter beweglicher Scherenhebel ausgeführt sind. Vorteilhaft sind an wenigstens drei Umfangspositionen, insbesondere gleichverteilt über den Umfang, einer oder mehrere Scherenhebel vorgesehen. Vorteilhaft kann der jeweilige Scherenhebel sowohl federgelagert als auch starr festgestellt zum Einsatz kommen, insbesondere in Abhängigkeit von der Ausrichtung des Detektors relativ zur Innenwand, und/oder in Abhängigkeit von der Ausgestaltung der Geometrie oder Oberflächenbeschaffenheit der Innenwandung. Vorteilhaft sind die Schenkel des jeweiligen Antriebselements bzw. des jeweiligen Scherenhebels an einen Ring oder dergleichen (zentralem) Stellglied angebunden. Vorteilhaft ist der jeweilige Ring um einen (bevorzugt zylindrischen) Grundkörper der Trageinrichtung gelagert, nämlich translatorisch in axialer Richtung. Vorteilhaft werden die Antriebselemente der Antriebs-/Führungseinheiten derart angelenkt, dass die Antriebselemente zumindest annähernd dieselbe Radialkraft auf die Mantelinnenfläche ausüben, zumindest bei geometrisch konformer (erwartungsgemäßer) Ausgestaltung der das Innenvolumen umgrenzenden Wandung (insbesondere keine besonders bedeutenden Ablagerungen, keine großen oder über einen großen Umfangswinkel vorliegenden Aussparungen). Wahlweise kann dabei auch ein jeweiliger Arm (Schenkel), welcher ein einzelnes die Wandung kontaktierendes Rad oder dergleichen Kontaktmittel zwischen Arm und Wand lagert, auch federgelagert sein, insbesondere mit einer Federvorspannung kleiner jener, die zur Vorgabe der über den Umfang verteilten radialen Andrückkraft der gesamten Abstützkinematik insbesondere auf wenigstens einen Ring oder dergleichen axial translatorisches Stellglied ausgeübt wird. Wahlweise kann auch eine Pneumatik zur Realisierung der hier beschriebenen Vorspannung und Zentrierung realisiert sein. Dadurch, dass die Antriebselemente der Antriebs-/Führungseinheiten zumindest annähernd mit gleicher Radialkraft gegen die innere Oberfläche drücken, wird die bevorzugt konzentrisch bzw. koaxial an den Grundkörper der Trageinrichtung gekuppelte Strahlungsdetektionseinheit bzw. die Szintillationsdetektoreinheit im Inneren der Rohrleitung bzw. des Durchbruchs zentriert bzw. ausgerichtet. Beispielsweise sind zwei Ringe um den bevorzugt mit zylindrischer Außenmantelfläche ausgestalteten Grundkörper der Trageinrichtung gelagert, jeweils oder zumindest einer davon translatorisch in axialer Richtung relativ dazu verlagerbar, nämlich ein erster in axialer Bewegungsrichtung Ring (z.B. vorderer Ring), welches fest mit der Trageinrichtung verbunden ist und ein zweiter Ring (z.B. hinterer Ring), welcher entlang der Trageinrichtung gleitend gelagert ist. Bevorzugt wird der gleitend gelagerte Ring mit in Richtung des Detektors wirkender Vorspannkraft vorgespannt gelagert; dies bewirkt eine vorteilhafte Art und Weise der Abstützung auch bei größer werdenden Innenabmessungen des Innenvolumens. Die das jeweilige Antriebselement lagernden Schenkel bzw. die jeweiligen Scherenhebel sind an diesen Ringen angelenkt. Der hintere Ring verbindet die Zugfedern der Schenkel der Antriebselemente. Vorteilhaft ist am hinteren Ring, ein Anschlagpunkt für ein Zugmittel, insbesondere Seil (Drahtseil) angebracht. Durch Ziehen am Zugmittel können die Federn gestreckt und die wenigstens eine Trageinrichtung zusammen mit der wenigstens einen Strahlungsdetektionseinheit aus dem Rohr geborgen werden (Interventionskonzept).

Als Antriebselemente können beispielsweise Radnabenmotoren oder je Antriebsrad ein Elektromotor vorgesehen sein, welcher z.B. mittels Kegelstirnradgetriebe das jeweilige Antriebsrad antreibt.

Es ist zu erwähnen, dass die hier gewählte Bezeichnung "Antriebs-/Führungseinheit" nicht einschränkend dahingehend zu verstehen ist, dass eine Führungsfunktion und eine Antriebsfunktion jedenfalls in Kombination miteinander erfüllt sein müssten; vielmehr geht aus der Gesamtoffenbarung der vorliegenden Erfindung hervor, dass die Antriebselemente der Antriebs-/Führungseinheit wahlweise auch eine Führungsfunktion oder nur eine Antriebsfunktion erfüllen können; insofern kann von der Antriebs-/Führungseinheit auch eine Steuervorgabe an einzelne Antriebselemente in Abhängigkeit von einer momentanen Situation bzw. Position anderer Antriebselemente ausgegeben werden. In weiterem Sinne können auch nicht angetriebene Kontaktpunkte als Komponente der Antriebs-/Führungseinheit aufgefasst werden, so dass durch den entsprechenden Kontaktpunkt nur eine Führungsfunktion erfüllt wird. Bevorzugt werden durch einen angetriebenen Kontaktpunkt sowohl eine Führungs- als auch eine Antriebsfunktion erfüllt. Der Fachmann erkennt, dass diese Auswahl individuell je Umfangsposition und in Abhängigkeit von der Anzahl und Verteilung der Antriebselemente erfolgen kann, insbesondere auch in Abhängigkeit von der Ausrichtung des zu untersuchenden Rohres. Vorteilhaft ist freilich eine Ausgestaltung mit wenigstens drei über den Umfang gleichverteilten Antriebselementen der Antriebs-/Führungseinheit, die allesamt auch zumindest eine Antriebsfunktion und wahlweise auch eine Führungsfunktion erfüllen, dies ist jedoch nicht zwingend erforderlich, beispielsweise kann der hier beschriebene Funktionsumfang auch bereits dann sichergestellt werden, wenn z.B. ein in Gravitationswirkungsrichtung untenliegendes Antriebselement eine Antriebsfunktion erfüllt und weitere Antriebselemente nur eine Führungsfunktion erfüllen. Andererseits bei vertikaler bzw. geneigter Ausrichtung des zu untersuchenden Rohres/Innenvolumens kann es in Hinblick auf eine gleichbleibend exakte Positionierung und Ausrichtung des Detektors besonders vorteilhaft sein, wenn wenigstens drei über den Umfang verteilte Kontaktpunkte mit Antriebselementen ausgestattet sind und allesamt auch eine Antriebsfunktion erfüllen, wahlweise in derselben Axialposition bzw. mittels desselben Rings/Stellglieds angelenkt, wahlweise an unterschiedlichen Axialpositionen.

Es ist zu verstehen, dass die hier beschriebenen Vorrichtungen und Verfahren auch für solche Innenvolumina zur Anwendung kommen können, deren Längserstreckung gegenüber der Horizontalebene geneigt ist, insbesondere auch bei lotrechter/vertikaler Erstreckung. Beispielsweise ein Neigungswinkel im Bereich von 30 bis 45Grad kann basierend auf Kraftschluss bzw. Reibung an den Mantelflächen bzw. Kontaktpunkten zwischen Abstützkinematik und Wandung des Innenvolumens problemlos durchfahren werden, und ein Verrutschen oder gar Herabfallen kann dabei effektiv verhindert werden. Sogar ein Winkelbereich von plus/minus 90° in Bezug auf die horizontale Ausrichtung kann insbesondere durch kraft-/reibschlüssige Interaktion mit der Innenwandung realisiert werden, beispielsweise über eine (lotrechte) Rohrlänge von 10m. Eine messtechnische Überprüfung eines sich zumindest annähernd lotrecht erstreckenden Innenvolumens kann dabei z.B. durch Lage-/Ausrichtungssensoren erfolgen. Beispielsweise wird eine/die Anpresskraft der Abstützkinematik axialpositionsspezifisch in Abhängigkeit von einem momentanen Neigungswinkel vordefiniert.

Als "Führung" oder "Führen" ist dabei insbesondere ein axiales Führen auch durch entsprechende Maßnahmen im Zusammenhang mit der Art und Weise der Kontaktierung an der Innenwandung zu verstehen, beispielsweise durch bestimmte Ausgestaltung von Rädern, Rollen, Raupen oder dergleichen Kontaktmitteln. Ein eher punktförmiger Kontakt eines Rades an einer Wandoberfläche ermöglicht noch keinen richtungsspezifischen Vortrieb. Die vorliegende Erfindung ermöglicht bevorzugt auch, die Trageinrichtung axial vergleichsweise exakt auszurichten. Ein axiales Führen kann demnach insbesondere auch durch mehrere axial relativ zueinander ausgerichtete Kontaktpunkte sichergestellt werden, insbesondere Kontaktpunkten von einzelnen Antriebselementen, welche an unterschiedlichen Ringen der Trageinrichtung angelenkt sind. Wahlweise kann ein insbesondere axiales Führen auch dadurch sichergestellt sein/werden, dass mittels der Antriebs-/Führungseinheit Steuervorgaben an mehrere Antriebselemente ausgegeben werden, die derart in Abhängigkeit voneinander generiert werden, dass die Antriebselemente den Vorschub aktiv geregelt in Abhängigkeit von deren momentaner Relativposition vorgeben. Die Zentrierung des Trägersystems und somit des Detektors ist dabei vorteilhaft selbstregulierend durch die Kinematik sichergestellt, insbesondere ohne dass eine sensorische Überprüfung der Zentrierung erforderlich wäre. Nichtsdestotrotz können zusätzliche mit der Kinematik korrelierte Sensoren vorgesehen sein, welche z.B. den Durchmesser des untersuchten Innenvolumens bzw. Rohres erfassen (z.B. indirekt unter Bezugnahme auf Scherenschenkelwinkel der Abstützkinematik oder Sensorik zur Erfassung der räumlichen Ausrichtung), sodass dieser automatisch überprüft und dokumentiert werden kann, insbesondere in der Art einer Plausibilitätsprüfung. Hierdurch kann nicht zuletzt auch die Güte der ermittelten Daten verbessert werden.

Durch die vergleichsweise sowohl in Größe als auch in der Art der Abstützung und des Antriebs variable Ausgestaltung der Antriebs-/Führungseinheit der Trageinrichtung und der hieran gekuppelten wenigstens einen Strahlungsdetektionseinheit kann die für den jeweiligen Anwendungsfall konzipierte Trageinrichtung bzw. das gesamte Detektionssystem (Vorrichtung umfassend wenigstens eine Trageinrichtung und wenigstens eine Detektionseinheit sowie entsprechende informationstechnische Ausstattung) für einen spezifizierten Bereich von Innendurchmessern besonders geeignet ausgestaltet sein, insbesondere in Abhängigkeit vom jeweils (erwartungsgemäßen) maximalen radialen Verlagerungsweg der Antriebsräder, also von der überbrückbaren Durchmesserdifferenz. Beispielsweise ist eine Trageinrichtung für Rohre mit einem Rohrinnendurchmesser von 40mm bis 60mm, von 60mm bis 100mm oder von 100mm bis 300mm besonders geeignet.

Vorteilhaft ist die Strahlungsdetektionseinheit nicht fest an der Trageinrichtung verbaut oder darin integriert, sondern durch eine Kupplung, insbesondere mittels Schnellverschluss (z.B. Klick-/Anklips-Konzept), mit wenig Zeit- und Arbeitsaufwand an die Trageinrichtung montierbar, z.B. an einer stirnseitigen Front oder Rückseite, wobei an der Kupplung wahlweise auch ein (Größen-)Adapter vorgesehen sein kann. Hierdurch können die beiden hier beschriebenen vorrangigen Systemkomponenten (Trageinrichtung und Strahlungsdetektionseinheit) auch unabhängig voneinander gehandhabt und insbesondere auch gewartet werden. Dies ist auch insofern vorteilhaft, als sich die Detektionssystemkomponente nicht nur durch die variabel ausfahrbaren Antriebselemente der Antriebs-/Führungseinheit an die Rohrleitungen oder Durchbrüche anpassen kann, sondern auch die jeweils optimale Szintillationsdetektoreinheit für die jeweilige Konfiguration ausgewählt bzw. angepasst werden kann. Für verschiedene Rohrinnendurchmesser kann dann jeweils die für die jeweilige Messanordnung optimal geeignete Szintillationsdetektoreinheit angeschlossen werden. Beispielsweise würde für ein Rohr mit einem Rohrinnendurchmesser von 60mm eine Szintillationsdetektoreinheit mit einem Außendurchmesser von 50mm angekoppelt werden. Bei einem Rohr mit einem Rohrinnendurchmesser von 100mm würde beispielsweise eine Szintillationsdetektoreinheit mit einem Außendurchmesser von 80mm angekoppelt werden, also jeweils mit möglichst kleiner Durchmesserdifferenz, insbesondere um in Hinblick auf die hier relevanten herausfordernden Sensitivitätsschwellwerte möglichst wenig Detektionszeit ansetzen zu müssen.

Die hier beschriebene Kupplung erleichtert nicht zuletzt auch eine Optimierung der messtechnischen Ausstattung für den jeweiligen Anwendungsfall, insbesondere in Hinblick auf den Durchmesser des zu befahrenden Innenvolumens. So kann die Größe der Szintillationsdetektoreinheit vorteilhaft an den Innendurchmesser angepasst werden, insbesondere möglichst maximal groß gewählt werden, speziell was den Detektordurchmesser betrifft.

Erwähnenswert ist, dass die hier beschriebene mechanische Kupplung in Kombination mit einer messtechnischen Koppelung realisiert werden kann, insbesondere zwecks Kopplung von momentanem messtechnischem Fortschritt und Vorgabe einer momentanen Position und/oder einer Verlagerungsgeschwindigkeit der Trageinrichtung bzw. des Manipulators. Vorteilhaft werden die Messsignale durch den (jeweiligen) Detektor registriert bzw. erfasst, durch einen ADC digitalisiert und mittels MCA in energiespezifischen Kanälen aufsummiert. Der MCA erstellt dabei das energieaufgelöste Gammaspektrum, welches in regelmäßigen zeitlichen Abständen automatisiert ausgewertet wird (PC). Anhand der fortlaufenden Auswertung wird vorteilhaft auf automatisierte Weise bewertet, ob die Messdaten genügen und eine Messung abgeschlossen ist. Nach dem Abschluss einer Messung kann z.B. über einen Steuerungs-PC ein Leistungsverstärker (Endstufe) angesteuert werden, welcher Antriebsräder des Trägersystems bzw. der Trageinrichtung ansteuert. Anhand der Daten zum Verfahrweg wird (bei Erreichen/Absolvieren der vorgegebenen Mess-Strecke) der Antrieb gestoppt.

Vorteilhaft ist die hier beschriebene mechanische Kupplung eine auf Formschluss basierende Kupplung, welche zudem auch eingerichtet ist, wenigstens ein Kabel des entsprechenden Detektors aufzunehmen bzw. weiter zu führen. Beispielsweise ist/wird als Kupplung eine Kupplung mit Bajonettverschluss implementiert. Vorteilhaft ist die Kupplung eine im Durchmesser tolerante Kupplung eingerichtet zum Kuppeln von im Durchmesser unterschiedlich großen Szintillationsdetektoreinheiten.

Die Trageinrichtung weist vorzugweise auch einen Adapter (insbesondere bereitgestellt als Komponente einer Schnellverschlusskupplung) zur Montage der jeweiligen Strahlungsdetektionseinheit auf. Ein solcher Adapter ermöglicht auch eine größenvariable Montage solcher Strahlungsdetektionseinheiten bzw. Szintillationsdetektoreinheiten, welche keine normierte Kupplung aufweisen mögen, oder welche in Einzelfällen besonders klein oder groß sein mögen, insbesondere auch was deren Durchmesser betrifft. Beispielsweise weist der Adapter eine in Größe variierende Redundanz von Kupplungselementen auf. Vorteilhaft weist die Schnellverschlusskupplung wenigstens zwei unterschiedliche Typen von (Kupplungs-)Teilen auf, von denen eines/einer am Trägersystem montiert ist. Von dem Gegenstück (Adapter) werden vorteilhaft unterschiedliche Größen (insbesondere hinsichtlich unterschiedlicher Detektordurchmesser) bereitgestellt, oder aber das Gegenstück ist eingerichtet, an unterschiedliche Detektorgrößen montiert bzw. angepasst zu werden. Beispielsweise kann ein jeweiliger Detektor an den jeweiligen Adapter geklebt sein bzw. stoffschlüssig damit verbunden sein. Beispielsweise sind angeschweißte Stehbolzen vorgesehen, mittels welchen der Adapter fixiert wird.

Die Trageinrichtung weist vorteilhaft wenigstens einen Sensor auf, welcher die Positionsbestimmung der Trageinrichtung vereinfacht (absolute und/oder relative Positionsbestimmung). Die Ermittlung des Verfahrweges kann alternativ oder zusätzlich zu einer solchen Positionsbestimmung mittels Drehzahlmessung bzw. Umdrehungszählung an nicht angetriebenen Rollen/Reifen/Rädern oder Ketten bzw. Raupen erfolgen. Mögliche Sensoren hierfür sind Beschleunigungssensoren, Gyroskope, GPS, Bluetooth, Laser oder dergleichen. Diese Sensoren erleichtern auch die Bestimmung der Fahrstrecke bzw. des axialen Vorschubs innerhalb der Rohrleitung. Beispielsweise ist der wenigstens ein Sensor auf dem Grundkörper der Trageinrichtung angeordnet oder darin verbaut und mit einem Kommunikationsmodul gekoppelt (wahlweise drahtlose oder drahtgebundene Kommunikation). Somit steht auch eine von einem entsprechenden Betrag eines Antriebs/Vorschubs der Trageinrichtung unabhängige Verortungssystemkomponente zur Verfügung. Die erfindungsgemäße messtechnische Auswertung stützt sich dabei bevorzugt sowohl auf über die Antriebseinheit erfasste (Positions-)Daten als auch auf Daten einer solchen Verortungssystemkomponente, so dass auch ein messtechnischer Abgleich beispielsweise in der Art einer Plausibilitätsprüfung oder Fehlersuche erfolgen kann. Würde z.B. eine Antriebssystemkomponente eine zurückgelegte Fahrstrecke von 90cm glaubhaft machen und hingegen die Verortungssystemkomponente nur eine gefahrene Strecke von 88cm ausgeben, so wird der für das messtechnische Verfahren konservativere Wert von 88cm genutzt (in diesem Fall Priorisierung der Messwerte der Verortungssystemkomponente). Eine Abweichung der Fahrstreckeninformation seitens der Antriebseinheit und seitens der Verortungssystemkomponente kann z.B. durch Schlupf beim Vorschub oder Rutschen innerhalb des Innenvolumens erfolgen.

Die Trageinrichtung kann ferner wenigstens eine Kamera(einheit) aufweisen, insbesondere in Kombination mit wenigstens einer Lichtquelle bzw. mit Beleuchtung, beispielsweise vorne an der in axialer Bewegungsrichtung vorderen Front verbaut, mittels welcher etwaige Hindernisse oder Rohrdurchbrüche erfasst werden können. Dabei kann die jeweilige Kamera statisch oder beweglich bezüglich der Kameralinse ausgeführt sein. Die grafische Auflösung liegt vorteilhaft im Bereich von mind. 1920x1080 Pixel (nativ), der vorteilhaft einstellbare Lichtstrom beträgt vorteilhaft mind. 50lm, die Bildwiederholrate beträgt vorteilhaft mind. 30fps.

Vorteilhaft sind die Oberflächen bzw. Lackierungen/Versiegelungen der Messvorrichtung, soweit technisch möglich, eingerichtet für eine vergleichsweise einfache (pragmatische) Dekontaminierbarkeitsmaßnahme, insbesondere in Hinblick auf dafür vorgesehene Normen oder Richtlinien, z.B. DIN ISO 8690:2022-10.

Auch kann die Strahlungsdetektionseinheit bei dieser Ausgestaltung unabhängig von der Trageinrichtung für validierende Messungen von Simulationsmodellen gehandhabt werden kann. Für diese validierenden Messungen von Simulationsmodellen wird die Strahlungsdetektionseinheit bzw. die jeweilige Szintillationsdetektoreinheit z.B. auf einer Kalibriereinrichtung positioniert und in definierten Abständen werden radioaktive Kalibrierquellen positioniert. Die Kalibriereinrichtung wird z.B. in Ausgestaltung als Tisch bereitgestellt, auf welchem eine Aluminiumplatte befestigt ist, in welcher an definierten Positionen Löcher vorgesehen sind, in welche Kalibrierquellen-Halterungen eingestellt werden können. Die Halterungen haben unterschiedliche Höhen bzw. sind verstellbar. Der Detektor wird für die Kalibriermessungen an einer definierten Stelle positioniert. Diese Position wird nicht mehr verändert. Mit Hilfe der Kalibriervorrichtungen lassen sich in definierten Abständen im Raum um den Detektor herum Kalibierquellen positionieren und Messungen von diesen durchführen. Anhand der bei der Auswertung dieser Messungen bestimmten Nettopeakflächen lassen sich Photopeakeffizienzen bestimmen. Als Kalibierquellen kommen zertifizierte umschlossene radioaktive Stoffe mit bekannten Aktivitäten (zu einem Bezugszeitpunkt) und Halbwertszeiten (Eigenschaft des jeweiligen Radionuklids) zum Einsatz. Die radioaktiven Kalibrierquellen werden bei diesen Messungen vorteilhaft jeweils axial, lateral und in definierten Winkeln zur Szintillationsdetektoreinheit positioniert und für jede Position wird eine Messung vorgenommen. Diese Kalibriermessungen werden im Simulationsmodell zur mathematischen Photopeak-Effizienzberechnung abgebildet, und daraufhin werden die Ergebnisse der experimentellen Messungen und der Simulationsstudien verglichen. Wird eine hinreichende Übereinstimmung bei der simulativ bestimmten energieabhängigen Photopeak-Effizienzberechnung erreicht (z. B kleiner 4%), so gelten die Simulationsmodelle der entsprechenden Szintillationsdetektoreinheiten als validiert. Mit diesen validierten Simulationsmodellen der Szintillationsdetektoreinheiten können energieabhängige Photopeak-Effizienzberechnungen für erforderliche Abstände und Abschirmungen mit hinreichender Genauigkeit berechnet werden. Wäre hingegen die jeweilige Szintillationsdetektoreinheit an der oder im Inneren der Trageinrichtung fest verbaut, wäre die Kalibrierung viel aufwändiger, insbesondere auch da mehr Masse gehandhabt und mit komplexeren technischen Komponenten umgegangen werden müsste.

Erwähnenswert ist, dass die vorliegende Erfindung speziell im Zusammenhang mit einer Messung steht, bei welcher das Messobjekt nicht durch aktive Bestrahlung insbesondere mittels Neutronen energetisch aktiviert werden soll (z.B. zwecks Bestimmung einer Materialzusammensetzung), dass sich die vorliegende Erfindung also auf Messungen bezieht, bei welchen (passiv) lediglich ein Detektieren eventuell vorhandener Strahlung erfolgt.

Die vorliegende Erfindung umfasst auch Ausgestaltungen, bei welchen mehrere Szintillationsdetektoreinheiten an der Trageinrichtung, beispielsweise hintereinander, angebracht werden und z.B. gleichzeitig messen/detektieren. Jede Szintillationsdetektoreinheit detektiert dann bezüglich einer individuellen Messfläche, insbesondere bezüglich eines benachbarten Axialabschnitts des Innenvolumens, wodurch die Messzeit pro axialem Längenabschnitt weiter reduziert werden kann, so dass auch die Effizienz des gesamten messtechnischen Untersuchungsvorgangs auch bei sehr großen bzw. langgestreckten Innenvolumina weiter gesteigert werden kann. Die vorliegende Erfindung umfasst auch eine Ausgestaltung, bei welcher ein oder mehrere Szintillationsdetektoreinheiten zwischen zwei miteinander gekoppelten Trageinrichtungen angebracht sind.

Die vorliegende Erfindung umfasst auch eine Ausgestaltung, bei welcher an wenigstens einer Stirnfläche der Szintillationsdetektoreinheit ein abschirmender Zylinder oder dergleichen Abschirmungselement montiert ist, insbesondere in der Art einer Kollimation (Abschirmung von störenden Messsignalen aus momentan nicht zu untersuchenden Raumbereichen) zwecks exakterer Lokalisierung etwaiger Quellterme. Da die hier beschriebenen Szintillationsdetektoreinheiten keine Richtungsabhängigkeit bei der Detektion ionisierender Strahlung aufweisen und somit einfallende Strahlung raumwinkelunabhängig messen können, ist es zielführend, nicht von der entsprechend untersuchten Messfläche emittierte Strahlung möglichst effektiv abzuschirmen. Durch eine solche stirnseitig abschirmende Ausgestaltung wird beim jeweiligen Messvorgang Strahlung abgeschirmt, welche von vorne (axial oder schräg einfallend) und nicht radial von der Mantelfläche der das Innenvolumen umgrenzenden Wandung emittiert wird, so dass nur vergleichsweise schwache Störsignale in die Auswertung eingehen. Durch diese Ausgestaltung kann auch die Position einer Strahlungsquelle exakter lokalisiert werden, wodurch nachfolgende Dekontaminationsmaßnahmen (z.B. abrasive Dekontaminationsverfahren) zielgerichteter und (kosten-)effizienter eingesetzt werden können. Als Kollimation sind hier dabei allgemein Maßnahmen zu verstehen, welche dazu führen, dass die Richtungsunabhängigkeit der Detektion nicht zum Nachteil wird aufgrund irgendwelcher Quellterme außerhalb der momentan jeweils untersuchten Messfläche, eine (bessere) Kollimation durch Abschirmungs-Maßnahmen an einer/der Stirnseite des Detektors bedeutet hier also im Effekt eine vorteilhafterweise streng radiale Projektion der wirksamen/detektierenden Detektorlänge bzw. Detektorfläche auf die Innenmantelfläche, so dass die Länge der jeweils momentan erfassten Messfläche durch die wirksam detektierende Detektorlänge definiert ist.

Zum Betrieb der wenigstens einen Trageinrichtung und der wenigstens einen Szintillationsdetektoreinheit (bzw. des wenigstens einen Strahlungsdetektors) kann eine Strom-/Spannungsversorgung vorgesehen sein, welche z.B. durch ein oder mehrere Kabel (bzw. Kabelbaum) sichergestellt werden kann, welche die Trageinrichtung z.B. hinter sich herschleppt, oder welche im Bereich des wenigstens einen Detektors mit der Messvorrichtung gekoppelt sind. Die Datenübertragung zwischen Trageinrichtung und Szintillationsdetektoreinheit(en) und wahlweise auch einer Recheneinheit (MCA und/oder PC/Tablet) erfolgt bevorzugt durch ein Kabel, welches die Detektionssystemkomponente mitschleppen/-ziehen kann. Zwar kann alternativ oder ergänzend jeweils auch eine drahtlose (energetische und/oder kommunikative) Verbindung vorgesehen sein, die drahtgebundene Anbindung jedoch liefert nicht zuletzt auch eine hohe Übertragungssicherheit. Der Fachmann kann die Optimierung einer drahtlosen und/oder drahtgebundenen Ausgestaltung insbesondere anwendungsspezifisch vornehmen. Als MCA (Multi-Channel-Analyzer) ist hier ein Vielkanalzähler bzw. Vielkanal-Analysator zu verstehen.

Wahlweise können auch eine energetische Autarkie und eine vollständig drahtlose Betriebsweise implementiert sein/werden, insbesondere indem am Grundkörper der Trageinrichtung wenigstens ein Energiespeicher vorgesehen wird, jedoch ergeben sich dadurch Gewichtsnachteile. Der Fachmann kann je nach Anwendungsfall insbesondere auch in Abhängigkeit vom von der Trageinrichtung zu absolvierenden Bewegungspfad entscheiden, ob es vorteilhafter ist, derartige Gewichtsnachteile in Kauf zu nehmen oder die entsprechenden kabelgebundenen Versorgungs-/Verbindungs- und/oder Übertragungsmittel mitzuführen.

Vorteilhaft ist ein Kabelbaum mit integriertem Zugmittel (Seil) vorgesehen, insbesondere in einer vergleichsweise großen Länge von z.B. 20m, mittels welchem die Messvorrichtung manuell oder zumindest teilweise automatisiert aus dem Innenvolumen geborgen werden kann, z.B. in einer Ausfallsituation.

Ein Nutzer kann durch Signalübertragungen den Messvorgang der Messvorrichtung nachverfolgen. Die vorliegende Erfindung umfasst auch eine Ausgestaltung, bei welcher eine/die Strom- und Spannungsversorgung sowie eine/die Recheneinheit (MCA/PC oder sonstige Art von für den hier betrachteten Anwendungsfall adäquater Datenauswerteeinheit) in die Trageinrichtung integriert sind. Die Messung kann dann auch ohne Rückkopplung zum Nutzer und ohne Kabelanschluss durchgeführt werden (autarker Betrieb insbesondere mit vorgegebener Endposition für die Trageinrichtung).

Der Fachmann kann je nach Messanordnung, messtechnischem Ansatz und/oder verfügbaren Ressourcen eine adäquate Recheneinheit auswählen bzw. deren Leistung und etwaige Algorithmen vordefinieren, sei es in einer integrierten Anordnung an der Trageinrichtung, sei es drahtlos und/oder drahtgebunden gekoppelt an die Trageinrichtung bzw. an die Detektionseinheit.

Gemäß einer Ausführungsform ist die Strahlungsdetektionseinheit modular an die Trageinrichtung montierbar/kuppelbar, insbesondere in zumindest einseitig stirnseitig abschirmender Anordnung. Dies ermöglicht nicht zuletzt auch die hier beschriebene vorteilhaft variable Anpassung der Messvorrichtung an bestimmte Messanordnungen bzw. Geometrien der zu untersuchenden Innenvolumina, insbesondere zwecks Verbesserung der erzielbaren Genauigkeit.

Gemäß einer Ausführungsform sind mehrere Szintillationsdetektoreinheiten axial hintereinander angeordnet, wobei die Messvorrichtung eingerichtet ist für unabhängige detektorspezifische Detektion einer jeweiligen Szintillationsdetektoreinheit zur detektorspezifischen Bestimmung von massen- und oberflächenspezifischen Aktivitätsinventaren. Dies ermöglicht einerseits eine Größen- bzw. Längenskalierung der verfügbaren Detektionslänge, andererseits kann die verfügbare messtechnische Kapazität auch skaliert werden, beispielsweise auch bei beidseitig stirnseitiger Abstützung mittels einer ersten und einer zweiten Trageinrichtung, bei welcher eine der Trageinrichtungen die steuerungs-/regelungstechnische Master-Funktion übernimmt.

Es ist zu verstehen, dass die vorliegende Erfindung insbesondere im Zusammenhang mit dem Erfordernis kurzer Rüstzeiten eine (Freigabe-)Messung auch in nur vergleichsweise kleinen Innenvolumina bzw. über nur vergleichsweise kurze Wegstrecken erleichtert, z.B. in Wanddurchführungen/-durchbrüchen. Diesbezüglich liefert auch die hier beschriebene Kupplung für den (jeweiligen) Detektor den Vorteil einer einfachen/schnellen Adaptierung bzw. Individualisierung der gesamten Messvorrichtung für den jeweiligen Anwendungsfall. Dazu kann z.B. ein Set umfassend mehrere Detektoren und/oder Kupplungen bereitgestellt sein, je nach Größenspektrum der zu untersuchenden Innenvolumina wahlweise auch umfassend unterschiedlich große Trageinrichtungen. Somit kann ausgehend von einer konkreten messtechnischen Aufgabe, z.B. betreffend den Rückbau einer bestimmten kerntechnischen Anlage oder eines bestimmten kerntechnischen Kraftwerks, insbesondere unter Angabe des Größenspektrums der zu analysierenden Innenvolumina das jeweils adäquate Set aus Detektoren und gegebenenfalls unterschiedlich großen Trageinrichtungen zusammengestellt werden, z.B. eine erste für bis ca. 4cm Innendurchmesser optimierte Trageinrichtung, eine zweite für ca. 4cm bis 6cm Innendurchmesser optimierte Trageinrichtung, eine dritte für ca. 6cm bis 12cm Innendurchmesser optimierte Trageinrichtung.

Dabei kann die Strahlungsdetektionseinheit modular an die Trageinrichtung montierbar/kuppelbar sein, insbesondere in zumindest einseitig stirnseitig abschirmender Anordnung.

Wahlweise können mehrere Szintillationsdetektoreinheiten axial hintereinander angeordnet sein, wobei die Messvorrichtung eingerichtet ist für unabhängige detektorspezifische Detektion einer jeweiligen Szintillationsdetektoreinheit zur detektorspezifischen Bestimmung von massen- und oberflächenspezifischen Aktivitätsinventaren.

Gemäß einer Ausführungsform ist die vordefinierbare Verlagerung der Strahlungsdetektionseinheit in Abhängigkeit vom Überschreiten eines für die jeweilige Detektion insbesondere basierend auf radionuklidspezifischen Freigabewerten vordefinierten/vordefinierbaren Sensitivitätsschwellwerts vorgebbar, indem in Abhängigkeit von wenigstens einem auf erfassten positionsbezogenen Strahlungsmessdaten basierenden Steuerungs-/Regelungsparameter eine vordefinierte Verlagerung der Strahlungsdetektionseinheit mittels der Trageinrichtung vorgebbar ist, insbesondere durch eine Steuerungs-/Regelungseinheit der Messvorrichtung, welche in steuerungstechnischer Kommunikation mit wenigstens einem Antriebselement einer/der Antriebs-/Führungseinheit der Trageinrichtung steht. Dies begünstigt auch einen für die jeweilige Messanordnung optimierten Vortrieb insbesondere auch hinsichtlich guter Zeiteffizienz. Beispielsweise wird eine wirksam nutzbare axiale Detektorlänge im Bereich von max. 20cm gewählt. Wahlweise können mehrere Detektoren vorgesehen sein, wobei bei einer messtechnisch implementierten Untersuchung basierend auf wenigstens zwei Detektoren der Vorteil realisiert werden kann, dass separate Gammaspektren aufgezeichnet werden können.

Es ist zu verstehen, dass eine/die Steuerungs-/Regelungseinheit auch systemkomponentenspezifisch bereitgestellt werden kann, also indem insbesondere die Trageinrichtung mit einer ersten Steuerungs-/Regelungseinheit ausgestattet ist/wird und wenigstens eine weitere Systemkomponente mit einer zweiten Steuerungs-/Regelungseinheit ausgestattet ist/wird. Wahlweise kommunizieren mehrere Steuerungs-/Regelungseinheiten mit einer/der (Haupt-)Steuerungs-/Regelungseinheit der Messvorrichtung. Eine entsprechende (Software-)Architektur kann für die hier bezeichneten Computerprogrammprodukte realisiert sein. Beispielsweise werden folgende Daten durch eine Steuerungssoftware der Trageinrichtung an die (Haupt-)Steuerungs-/Regelungseinheit der Messvorrichtung transmittiert: Fahrweg, Neigung, Innendurchmesser, Bilddaten insbesondere einer/der Kameraeinheit der Messvorrichtung. Beispielsweise werden folgende Steuerungs-/Regelungsvorgaben durch die (Haupt-)Steuerungs-/Regelungseinheit der Messvorrichtung an eine/die Steuerungs-/Regelungseinheit der Trageinrichtung transmittiert: Start(zeitpunkt), Stopp(zeitpunkt), Fahrweg (Strecke). Der Fachmann kann den Typ erfasster bzw. transmittierter und ausgewerteter Daten jeweils auch anwendungsspezifisch anpassen, z.B. in Hinblick auf einen messaufgabenspezifischen Autarkie-Grad.

Gemäß einer Ausführungsform ist die vordefinierbare Verlagerung ein axialer Vorschub, welcher in Abhängigkeit von einer/der Längserstreckung der wenigstens einen Szintillationsdetektoreinheit und in Abhängigkeit vom Überscheiten eines/des Sensitivitätsschwellwerts vordefiniert wird. Dies ermöglicht nicht zuletzt auch in Abhängigkeit von der verfügbaren implementierten Detektionslänge einen möglichst großen Vorschub bei unverändert guter/belastbarer Detektionsdatengrundlage.

Gemäß einer Ausführungsform ist die Messvorrichtung mittels einer Abstützkinematik an einer/der das Innenvolumen umgebenden Wandung abstützbar, welche sich unabhängig von deren radialer Erstreckung in einem axial separaten axialen Längenabschnitt erstreckt, also den von der Strahlungsdetektionseinheit abgedeckten Axialabschnitt nicht überlappt. Diese axial räumliche Trennung von Abstützkinematik und Detektionsbereich ermöglicht auch eine Minimierung etwaiger die Messung/Detektion beeinflussender Randbedingungen.

Vorteilhaft ist die Messvorrichtung mittels einer Abstützkinematik an einer/der das Innenvolumen umgebenden Wandung abstützbar, welche sich unabhängig von deren radialer Erstreckung in einem axial separaten axialen Längenabschnitt erstreckt, also den von der Strahlungsdetektionseinheit abgedeckten Axialabschnitt nicht überlappt.

Gemäß einer Ausführungsform ist die Messvorrichtung eingerichtet zur regelungstechnischen zeitlich dynamischen Vorgabe der Verlagerung oder Position der Trageinrichtung basierend auf wenigstens einem mittels der Trageinrichtung erfassten Messobjektmerkmal, insbesondere basierend auf einer/der radialen Entfernung zwischen Strahlungsdetektionseinheit bzw. Detektor und Messfläche (insbesondere erfassbar über eine axiale Relativposition wenigstens eines mit einer Abstützkinematik der Trageinrichtung zusammenwirkenden gleitend gelagerten Rings relativ zu einem/zum Grundkörper der Trageinrichtung). Dies ermöglicht nicht zuletzt auch, die jeweilige Messanordnung bzw. möglicherweise momentan schwankende diesbezügliche Parameter zu kontrollieren und etwaige Änderungen gegebenenfalls bei der Auswertung zu berücksichtigen oder den entsprechenden Messvorgang alternativ zu wiederholen (insbesondere falls eine zu erwartende Messunsicherheit aufgrund der erkannten Parameterabweichungen bzw. geänderten Randbedingungen zu groß werden sollte).

Gemäß einer Ausführungsform weist die Messvorrichtung wenigstens eine grafische Benutzerschnittstelle eingerichtet zur Visualisierung von durch Freigabemessung freigegebenen Längsabschnitten und messtechnisch noch nicht freigegebenen Längsabschnitten auf.

Gemäß einer Ausführungsform ist die Messvorrichtung eingerichtet, den Vorschub der Trageinrichtung steuerungs-/regelungstechnisch als Funktion von momentanen Detektionssignalen vorzugeben, derweil die Abstützung der Trageinrichtung innerhalb des Innenvolumens selbstregulierend insbesondere durch federmechanische und/oder pneumatische Vorspannung vorgegeben wird. Dies liefert nicht zuletzt eine voreilhafte Symbiose aus Abstützung/Ausrichtung im Innenvolumen einerseits und effizienter und möglichst auch exakter messtechnischer Ausführung der Messaufgabe andererseits.

Gemäß einer Ausführungsform weist die Szintillationsdetektoreinheit wenigstens einen anorganischen Szintillationsdetektor auf bzw. umfasst diesen (umfasst also wenigstens einen anorganischen Szintillator). Dieser Detektortyp begünstigt nicht zuletzt dank mittlerweile verfügbarer großer Kristalllängen auch eine vorteilhaft exakt und über eine große Detektionslänge einheitlich auswertbare Detektion auch von vergleichsweise niedrigen Schwellwerten. Anorganische Szintillationsdetektoren basieren auf (Ein-)Kristallen; dotierte Aktivatorzentren fallen vom angeregten Zustand unter Emission von sichtbarem Licht (Photonen) in den Grundzustand zurück; dabei kann die Anzahl der im Kristall erzeugten Photonen mit dem Ionisationsverlust der Teilchen korreliert werden. Insbesondere im Zusammenhang mit der hier beschriebenen messtechnischen Aufgabe haben sich anorganische Szintillatoren als vorteilhaft robust erwiesen und ermöglichen dabei auch insbesondere für höhere Gamma-Energien gute Nachweisgrenzen. Wahlweise können auch andere/weitere Arten von (Szintillations-)Detektoren vorgesehen sein.

Beispielsweise ragt die Strahlungsdetektionseinheit stirnseitig frei von der Trageinrichtung axial hervor.

Vorteilhaft weist die Strahlungsdetektionseinheit stirnseitig wenigstens eine Abschirmeinheit auf, insbesondere eine metallische Abschirmeinheit in die Stirnseite der Strahlungsdetektionseinheit zumindest überdeckenden und wahlweise auch vollumfänglich überragenden Ausgestaltung.

Gemäß einer Ausführungsform ragt die Strahlungsdetektionseinheit stirnseitig frei von der Trageinrichtung axial hervor. Dies ermöglicht nicht zuletzt auch eine möglichst störungsfreie Detektion, insbesondere vollumfänglich, insbesondere mittels nur einer Strahlungsdetektionseinheit zumindest bezüglich des jeweils überdeckten Axialabschnitts.

Gemäß einer Ausführungsform weist die Strahlungsdetektionseinheit stirnseitig wenigstens eine Abschirmeinheit auf, insbesondere eine metallische Abschirmeinheit in die Stirnseite der Strahlungsdetektionseinheit zumindest überdeckenden und wahlweise auch vollumfänglich überragenden Ausgestaltung. Hierdurch lassen sich auch Streustrahlung oder dergleichen eine saubere Detektion bzw. eine exakte Auswertung der Messung erschwerende Effekte wie z.B. so genannte Cross Talk-Effekte vermeiden oder zumindest verringern. Dies ermöglicht nicht zuletzt auch eine einfachere Lokalisation (bzw. eine entsprechende örtliche/geometrische Eingrenzung) etwaiger Strahlungsquellen.

Eine Abschirmung bringt den Nachteil zusätzlichen Gewichts mit sich. Der Fachmann kann je nach messtechnischem Anwendungsfall abwägen, ob und in welchem Umfang eine Abschirmung zweckdienlich ist.

Gemäß einer Ausführungsform wird eine/die Abschirmung durch eine Kupplungskomponente bereitgestellt, insbesondere durch eine Kupplungskomponente in einer Ausgestaltung gemäß jener einer/der Kupplungskomponente stirnseitig seitens der Trageinrichtung. Dies erleichtert nicht zuletzt auch ein Verschalten mehrerer Strahlungsdetektionseinheiten, bei vorteilhafter funktionaler Integration einer Abschirmfunktion in die Kupplungskomponente. Die entsprechende Kupplungskomponente kann demnach auch metallisch ausgestaltet sein.

Vorteilhaft weist eine/die abschirmende Schnellverschlusskupplung trägersystemseitig und/oder detektorseitig eine möglichst dicke Platte (wenige cm) aus einem Material mit möglichst hoher Ordnungszahl auf, beispielsweise Blei (bzw. Hartblei), Bismut, Wolfram oder abgereichertes Uran.

Gemäß einer Ausführungsform sind die radialen Abmessungen der Szintillationsdetektoreinheit größer als die radialen Abmessungen einer/der Kupplung zwischen Strahlungsdetektionseinheit und Trageinrichtung, und bevorzugt auch größer als die radialen Abmessungen eines/des Grundkörpers der Trageinrichtung. Dies begünstigt nicht zuletzt auch eine größentechnische und messtechnische Optimierung hinsichtlich Messgenauigkeit und messtechnischer Effizienz, bei minimierten Störeinflüssen und gleichzeitig auch noch vergleichsweise guter Beweglichkeit der Messvorrichtung innerhalb des Innenvolumens auch bei Krümmungen. Beispielsweise ist der Grundkörper der Trageinrichtung, an welchem die Abstützkinematik gelagert ist, mindestens 30%, weiter bevorzugt mindestens 40% schmaler im Durchmesser bzw. in den radialen Abmessungen als der Szintillationsdetektor.

Gemäß einer Ausführungsform wird die Abstützkinematik der Trageinrichtung in radialer Richtung zumindest teilweise mittels wenigstens eines bevorzugt gleitend in axialer Richtung gelagerten Rings oder dergleichen Stellglied selbstregulierend positioniert und/oder aktiv aktuiert, insbesondere zentral bezüglich wenigstens dreier Umfangspositionen an der Trageinrichtung bzw. bezüglich wenigstens dreier Umfangspositionen oder Kontakt-/Abstützpunkten an einer das Innenvolumens umgrenzenden Wandung. Dies erleichtert nicht zuletzt auch ein Zentrieren der Trageinheit und damit auch ein Zentrieren der Strahlungsdetektionseinheit, insbesondere in rotationssymmetrischen oder sich zumindest annähernd konzentrisch (bei vergleichsweise kleiner Ovalität) um eine Mittenlängsachse erstreckenden Innenvolumina.

Gemäß einer Ausführungsform wird die Abstützkinematik der Trageinrichtung in radialer Richtung mittels wenigstens eines bevorzugt gleitend in axialer Richtung gelagerten Rings oder dergleichen Stellglied selbstregulierend positioniert und/oder aktiv aktuiert (bzw. ist entsprechend positionierbar/aktuierbar), welcher zum radialen Ausfahren/Verlängern der Abstützkinematik axial vorgespannt axial verlagerbar ist, insbesondere in Richtung Strahlungsdetektionseinheit (näher zur Strahlungsdetektionseinheit hin). Dies ermöglicht nicht zuletzt auch eine gute Abstützung bei möglichst minimal kleinen Hebelkräften auch dann, wenn der Rohrinnendurchmesser bzw. die radialen Innenabmessungen des entsprechenden Innenvolumens z.B. abschnittsweise größer werden (z.B. Verjüngung/Aufweitung eines Rohres). Wahlweise können auch mehrere gleitende Ringe vorgesehen sein, z.B. beidseitig axial von einem feststehenden Ring angeordnet. Vorteilhaft verlagert sich ein/der gleitende Ring bei größer werdendem Rohrdurchmesser axial in Richtung Detektor; dies stellt sicher, dass in dem Maße, in dem die Abstützhebelfläche der Kontaktpunkte an der Rohrwandung kleiner wird, auch der Hebel des Detektors auf den Grundkörper der Trageinrichtung kleiner wird, wodurch eine vergleichsweise stabile Abstützung sichergestellt werden kann.

Es ist zu erwähnen, dass ein/das mittels der Trageinrichtung sichergestellte Zentrieren der Strahlungsdetektionseinheit bzw. des jeweiligen Detektors insbesondere auch dahingehend von Vorteil sein kann, dass eine potentielle Strahlungsquelle nicht exakt lokalisiert werden kann. Unter der Annahme, dass eine/die Wandung (bei radioaktiver Belastung) über den Umfang zumindest annähernd gleichverteilt strahlt, mag das Zentrieren weniger relevant erscheinen. Möglicherweise jedoch ist die Aktivität bzw. das Aktivitätsinventar im entsprechenden Abschnitt des Innenvolumens ungleich über den Umfang verteilt; dann ist eine möglichst exakt zentrische Anordnung von noch größerem Vorteil.

Die vorliegende Erfindung erleichtert somit, auch solche Situationen einer Ungleichverteilung messtechnisch möglichst exakt abzubilden, also eine möglichst exakte Strahlungsverifikation (Strahlenbelastungsquantifizierung) zu realisieren.

Die zuvor genannte Aufgabe wird auch gelöst durch ein Set umfassend eine Messvorrichtung gemäß der vorliegenden Offenbarung und wenigstens zwei Detektor-Kupplungen und wenigstens zwei Szintillationsdetektoreinheiten. Dies ermöglicht eine noch individuellere Anpassung an die jeweilige messtechnische Aufgabe. Dabei kann die jeweilige Detektor-Kupplung z.B. in Ausgestaltung als im Wesentlichen formschlüssige Schnellverschlusskupplung mit Adaptern bereitgestellt sein/werden.

Die zuvor genannte Aufgabe wird auch gelöst durch Verwendung wenigstens einer Szintillationsdetektoreinheit in einer an eine verlagerbare Trageinrichtung gekuppelten Anordnung zum Bereitstellen einer Messvorrichtung eingerichtet zum Ausführen eines Verfahrens gemäß der vorliegenden Offenbarung in einer mittels einer Abstützkinematik der Trageinrichtung in einem Innenvolumen abgestützten messtechnischen Anordnung, insbesondere zentriert im Innenvolumen mit zumindest annähernd axial ausgerichteter Längserstreckungsachse der Szintillationsdetektoreinheit. Hierdurch lassen sich zuvor genannte Vorteile realisieren, insbesondere in Hinblick auf einen funktional vorteilhaften Aufbau insbesondere zwecks anwendungsspezifischer Implementierung.

Die zuvor genannte Aufgabe wird auch gelöst durch Verwendung wenigstens einer verlagerbaren Trageinrichtung mit daran gekuppelter Szintillationsdetektoreinheit zum Bereitstellen einer innerhalb eines Innenvolumens mittels einer Abstützkinematik abstützbaren Messvorrichtung eingerichtet zum Ausführen eines Verfahrens zur Szintillationsstrahlungsdetektion durch Positionieren und vordefiniertes Verlagern der Szintillationsdetektoreinheit bezüglich einer Messfläche in Abhängigkeit von wenigstens einem auf erfassten Strahlungsmessdaten basierenden Steuerungs-/Regelungsparameter, insbesondere eines Verfahrens gemäß der vorliegenden Offenbarung, wobei die Abstützkinematik durch wenigstens ein zentrales Stellglied bezüglich der Radialposition einer Mehrzahl von Kontakt-/Abstützpunkten aktuierbar ist, wahlweise selbstregulierend vorgespannt gelagert oder durch aktive Aktuation (z.B. durch eine von momentanem Kontakt an den jeweiligen Kontakt-/Abstützpunkten oder einer Teilmenge der Kontakt-/Abstützpunkte abhängigen Regelung). Hierdurch lassen sich zuvor genannte Vorteile realisieren, insbesondere in Hinblick auf eine vorteilhafte Ausrichtung der wenigstens einen Szintillationsdetektoreinheit relativ zur Messfläche.

Somit lässt sich die vorliegende Erfindung auch allgemein durch die folgende Bezugnahme erläutern: Die vorliegende Erfindung betrifft ein Verfahren zur Strahlungsdetektion (insbesondere in der Art eines Sondierens) insbesondere innerhalb eines Rohres, einer Leitung oder einer Wanddurchführung, wobei eine Analyse (ionisierender) Strahlung mittels (wenigstens) eines Strahlungsdetektors erfolgt, insbesondere basierend auf Gammaspektrometrie. Diese(r) Strahlungsdetektor(en) können vorteilhaft von einem Trägersystem positioniert bzw. in der Messumgebung automatisiert verfahren werden. Ein in diesem Zusammenhang vorteilhaft implementierbarer messtechnischer Prozess lässt sich wie folgt skizzieren: Starten der Software, Positionieren der Trageinrichtung bzw. Rohrsonde, Starten der ersten Messung, Ende der Messung, Verfahren bzw. Umpositionieren der Rohrsonde zur nächsten Messposition und erneutes Starten einer Messung oder Ende der Sondierung. Vorteilhaft werden die Messdaten während der Messung(en) regelmäßig automatisch ausgewertet und für vorteilhaft auch für eine/die Steuerung bzw. Regelung des Trägersystems genutzt. Im Speziellen wird die Nachweisgrenze ermittelt, insbesondere für spezifizierte Radionuklide entsprechend deren Gamma-Energien. Sofern eine auch durch den Nutzer vorgegebene/vorgebbare Nachweisgrenze erreicht wurde, wird die Messung an der entsprechenden Position vorzeitig beendet und die Rohrsonde kann verfahren bzw. umpositioniert werden. Auf diese Weise kann insbesondere bei kerntechnischen Anlagen, insbesondere im Zusammenhang mit deren Rückbau, eine Charakterisierung von Anlagenteilen hinsichtlich deren Freigabe bezüglich radioaktiver Stoffen erfolgen, insbesondere indem der Nachweis erbracht wird, dass die betreffenden Anlagenteile nicht radioaktiv sind (insbesondere in juristischem Sinne gemäß der jeweils geltenden Jurisdiktion). Die Rohrsonde kann für Entscheidungsmessungen zur Freigabe genutzt werden, so dass eine Demontage der entsprechenden Anlagenteile/-komponenten und deren Vor-/Aufbereitung für eine Messung durch z.B. Zerlegen/Aufschneiden vermieden werden kann.

Zusammenfassung: Bei der Erfassung von Aktivitätsinventaren potentiell radioaktiver Materialien müssen Messeinrichtungen innerhalb von Innenvolumina wie z.B. solchen von Rohrleitungen positioniert werden. Bereitgestellt wird ein Verfahren zur Strahlungsdetektion innerhalb eines Innenvolumens mittels wenigstens einer Strahlungsdetektionseinheit, welche mittels einer Trageinrichtung innerhalb des Innenvolumens positioniert und verlagert wird, wobei positionsbezogen Strahlungsmessdaten bezüglich einer vordefinierten Messfläche einer Messanordnung erfasst werden. Erfindungsgemäß erfolgt die Strahlungsdetektion mittels der Strahlungsdetektionseinheit in einer bevorzugt koaxial an der Trageinrichtung befestigten/gekuppelten Anordnung durch Szintillationsmessung, wobei das Verfahren das Vorgeben einer vordefinierbaren Verlagerung der Strahlungsdetektionseinheit mittels der Trageinrichtung in Abhängigkeit von wenigstens einem auf den erfassten Strahlungsmessdaten basierenden Steuerungs-/Regelungsparameter umfasst, insbesondere auf zeitlich dynamische Weise. Hierdurch kann einerseits eine vorteilhafte und insbesondere auch zeiteffiziente Art und Weise der messtechnischen Überprüfung bereitgestellt werden, andererseits kann auch eine exakte Korrelation von potentiellen Strahlungsquellen und deren (Relativ-)Position erfolgen. Die Erfindung betrifft ferner eine entsprechend ausgestaltete/ausgestatte Messvorrichtung aufweisend die Trageinrichtung und eine bevorzugt stirnseitig daran gekuppelte Strahlungsdetektionseinheit umfassend wenigstens einer Szintillationsdetektoreinheit.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
**Figur 1** in einer Seitenansicht in schematischer Darstellung eine Messvorrichtung gemäß einem Ausführungsbeispiel;
**Figur 2** in einer Seitenansicht in schematischer Darstellung eine Messvorrichtung gemäß einem weiteren Ausfiihrungsbeispiel;
**Figur 3** in einer Seitenansicht in schematischer Darstellung eine Messvorrichtung gemäß einem weiteren Ausfiihrungsbeispiel;
**Figur 4** in schematischer Darstellung Schritte eines Verfahrens gemäß einem Ausfiihrungsbeispiel;
**Figur 5** in schematischer Darstellung vorbereitende Schritte insbesondere zwecks Kalibrierung einer/der Messvorrichtung zur Durchführung eines Verfahrens gemäß Ausführungsbeispielen,
**Figur 6** in schematischer Darstellung weitere Schritte insbesondere zur Anpassung der Messvorrichtung an eine spezifische messtechnische Aufgabenstellung, die im Zusammenhang mit einem Verfahrens gemäß Ausführungsbeispielen implementiert werden können;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine Messvorrichtung 100 (Rohrsonde) aufweisend eine Steuerungs-/Regelungseinheit 50, eine Recheneinheit/Logikeinheit 60 mit Datenspeicher 61, optional eine Energiespeichereinheit 70 und eine Kommunikationseinheit 80 (insbesondere für Drahtloskommunikation), und Datentransfermittel 90 (insbesondere Datenkabel). Die Messvorrichtung 100 weist auch wenigstens eine Strahlungsdetektionseinheit 20 (Detektionssystemkomponente) auf. Die Messvorrichtung 100 ist eingerichtet zum Abstützen und Ausrichten der Strahlungsdetektionseinheit 20 in einem Innenvolumen 1, nämlich mittels einer bezüglich der Abmessungen des Innenvolumens in einem gewissen Bereich einstellbaren Abstützkinematik 14, insbesondere auch eingerichtet zum Verlagern bzw. Positionieren der Strahlungsdetektionseinheit 20 innerhalb des Innenvolumens 1. Dazu weist die Messvorrichtung 100 wenigstens eine verlagerbare Trageinrichtung 10 (Trägersystemkomponente) auf, an welche die Strahlungsdetektionseinheit 20 gekuppelt ist. Vorteilhaft werden mehrere Detektionseinheiten für das Kuppeln mit der Trageinrichtung 10 bereitgestellt, wodurch ein Set 110 gebildet wird. Über eine Benutzerschnittstelle 200, insbesondere gekoppelt an Recheneinheit, können Daten ausgegeben und/oder Nutzereingaben erfasst werden. Die Trageinrichtung 10 weist wenigstens eine Antriebs-/Führungseinheit 17 umfassend wenigstens ein Antriebselement 17.1 auf, wobei die Recheneinheit 60 Detektionssignale wenigstens einer Szintillationsdetektoreinheit 20.1 der Strahlungsdetektionseinheit 20 auswertet. Dabei ist die (jeweilige) Strahlungsdetektionseinheit 20 vorteilhaft mittels wenigstens einer Kupplung 19, 29 stirnseitig an der Trageinrichtung befestigt. Seitens der Trageinrichtung 10 ist beispielsweise ein Kupplungsteil 19 vorgesehen, insbesondere ein Schnellverschlusskupplungsteil, insbesondere stirnseitig, wahlweise mit Adapter bzw. Schnellverschlusskupplungssegment 19.1, und seitens der Detektionseinheit 20 ist beispielsweise ein Kupplungsteil 29 vorgesehen, insbesondere ein Schnellverschlusskupplungsteil, insbesondere stirnseitig, wahlweise mit Schnellverschlusskupplungssegment 29.1.

Die Abstützkinematik 14 und deren Lagerung an einem Grundkörper 13 der Trageinrichtung können beispielsweise wie folgt realisiert sein: Am Grundkörper 13 lagern sowohl ein erster Ring 11 (oder dergleichen Abstützelement), insbesondere fest/fixiert angeordnet, als auch ein zweiter Ring 12 oder dergleichen zentrales Stellglied, gleitend gelagert. Die Ringe sind mit wenigstens einem ersten Schenkel 14.1 und wenigstens einem zweiten Schenkel 14.2 (Abstützsystemkomponenten) verbunden, insbesondere über Gelenke 14.3. Eine axiale Relativbewegung der Ringe relativ zueinander führt zu einer radialen Stellbewegung, und bei vordefinierter axialer Vorspannkraft kann eine radiale Andrückkraft vordefiniert werden. Beispielsweise sind Vorspannmittel 15 in Ausgestaltung als (Zug-)Federeinheit und/oder pneumatische Mittel vorgesehen, z.B. umfassend wenigstens ein Federelement 15.1 und/oder pneumatische Mittel 15.3 in Ausgestaltung als druckbeaufschlagte Leitungen oder Aktuatoren. Auf diese Weise kann eine vordefinierte Art und Weise einer Abstützung an den Kontaktpunkten der Innenmantelfläche über Räder, Rollen, Raupen 16 oder dergleichen Innenwandung-Kontaktmittel der Abstützkinematik erfolgen.

Beispielsweise auch für eine manuelle Intervention können Zugmittel 18 vorgesehen sein, die z.B. an wenigstens einem Zugpunkt 18.1 im Bereich des Grundkörpers und/oder eines der Ringe angreifen, insbesondere am Heck der Vorrichtung. Es ist zu verstehen, dass eine solche manuelle Intervention vornehmlich für ein zeiteffizientes Zurückziehen bzw. Bergen der Vorrichtung nach erfolgter Messung vorgesehen sein soll, wahlweise jedoch auch für ein Verlagern in Vorschubrichtung während der Messung implementiert sein kann, also im Bereich eines Bugs der Vorrichtung bzw. an einer in Vorschubrichtung weisenden Stirnseite von Grundkörper und/oder Detektor (wahlweise auch an der Kupplung).

Vorteilhaft ist der Durchmesser der Kristallmantelfläche 22 des Detektors vergleichsweise groß im Vergleich zum Innendurchmesser des Innenvolumens, bevorzugt größer als die radialen Abmessungen der Kupplung und die radialen Abmessungen des Grundkörpers der Trageinrichtung, insbesondere derart, dass nur die Abstützkinematik der Trageinrichtung radial über die Kristallmantelfläche 22 hinausragt.

Vorteilhaft ist der Detektor mit einer Vervielfacher-Komponente 20.2, insbesondere einem Silizium-Photomultiplier (SiPM) ausgestattet. Durch die vorteilhafte stirnseitige Anordnung des Detektors lässt sich eine vergleichsweise große Detektionsfläche bzw. axiale Detektionslänge 21 realisieren.

Die Messvorrichtung 100 kann insbesondere die folgenden weiteren Komponenten umfassen: Kameraeinheit 30 (bildgebende Systemkomponente), Lichtquelle 31, Positionserfassungseinheit 40 z.B. umfassend wenigstens einen Positionssensor 41 bezüglich absoluter insbesondere axialer Position (Verortungssystemkomponente) und/oder wenigstens einen Positionssensor 42 bezüglich relativer insbesondere radialer Position, insbesondere auch bezüglich Stellglied der Abstützkinematik, und/oder wenigstens einen weiteren Sensor 43 insbesondere aus der folgenden Gruppe: Radialabstandssensor, Metallsensor, Beschleunigungssensor.

Zur Beschreibung einer jeweiligen Messanordnung 9 können insbesondere die folgenden Merkmale herangezogen werden, insbesondere zur Definition der Messanordnung zumindest basierend auf der Messfläche, dem Abstand zum Detektor, eines Materialvolumens bzw. einer Materialdichte: das Innenvolumen 1 insbesondere eines Rohres oder einer Leitung mit dessen Innenmantelfläche 3, von welcher jeweils eine Messfläche 3.1 bzw. Innenmantelflächenabschnitt abschnittsweise untersucht werden kann; eine/die die Innenmantelfläche umgebende Innenwandung 5, z.B. eine Rohrwandung mit einer gewissen Wanddicke; ein jeweiliger Kontakt-/Abstützpunkt 5.1 an der Innenwandung, an welchen die Trageinrichtung sich im Innenvolumen abstützt; das Messobjekt 7 als solches (Untersuchungsgegenstand, z.B. Wanddurchbruch oder Rohr in seiner Gesamtheit);

Im Folgenden werden messtechnische Aspekte erläutert, die im Zusammenhang mit der Auswertung einer jeweiligen Messung insbesondere in Abhängigkeit von Messobjektmerkmalen M stehen (z.B. Innendurchmesser bzw. Radius bzw. radiale Entfernung zwischen Detektor und Messfläche, Außendurchmesser, Material, Wandstärke bzw. Dichte, Neigungswinkel, axialer Verlagerungsweg): Strahlungsmessdaten D werden aus Nettopeakflächen Da und Untergrundflächen Db der ausgewerteten Peaks gewonnen (mit *live time*-Anteil Dc, und mit *dead time*-Anteil Dd der Messzeit), wobei Berechnungsdaten D` generiert werden, insbesondere unter Einbezug einer/der Gesamt-Impulse De und Erkennungsgrenzen D'f und Nachweisgrenzen D'g der Peaks, wobei eine durch Typ A-Unsicherheiten begründete Messunsicherheit D'h berücksichtigt werden kann, wobei ein Schätzwert D`i für die Aktivität generiert werden kann, insbesondere zur Bestimmung einer/der Aktivität D'j mit einseitigem Überdeckungsintervall von z.B. 95%.

Es ist zu verstehen, dass ein Überdeckungsintervall von 95% als besonders zweckdienlich erachtet wird; gleichwohl kann das Überdeckungsintervall im Rahmen der vorliegenden Erfindung auch individuell je Messaufgabe spezifiziert werden, z.B. in einem Bereich von 92 bis 98% (bzw. 2 bis 8%), insbesondere auf den Wert 97,5% bzw. 2,5%. Der Fachmann kann basierend auf der vorliegenden Offenbarung eine anwendungsspezifische Implementierung des Überdeckungsintervalls vornehmen.

Dabei können insbesondere die folgenden Randbedingungen R im Auswerteverfahren berücksichtigt werden: **R1** Alpha-Wert und Beta-Wert für die Bestimmung von EG/NWG (mit dem Alpha-Wert entsprechend der Wahrscheinlichkeit für einen/den Fehler erster Art, und mit dem Beta-Wert entsprechend der Wahrscheinlichkeit für einen/den Fehler zweiter Art); **R2** Messunsicherheit durch Typ B-Unsicherheiten; **R3** Messfläche; **R4** zulässige Mittelungsfläche der Entscheidungsmessung; **R5** Energiekalibrierung; **R6** Halbwertsbreiten-Kalibrierung; R7 Photopeak-Effizienzkalibrierung;

Dabei kann das Mess- und Auswerteverfahren in prozessualer Hinsicht insbesondere in die folgenden vorbereitenden Schritte vor einer jeweiligen Messung im Feld unterteilt werden: Schritt **S01** Energiekalibrierung (zumindest teilweise computerimplementierbar); Schritt **S02** Halbwertsbreitenkalibrierung (zumindest teilweise computerimplementierbar); Schritt **S03** Modellierung Strahlungsdetektor im Simulationsmodell (zumindest teilweise computerimplementierbar); Schritt **S04** experimentelle Strahlungsdetektion (Szintillationsdetektion); Schritt **S05** Validierung des Simulationsmodells (zumindest teilweise computerimplementierbar); Schritt **S06** Montage Strahlungsdetektionseinheit an Trageinrichtung; Schritt **S07** Erfassen des Strahlungsdetektortyps (computerimplementierbar); Schritt **S08** Einführen Trageinrichtung mit Strahlungsdetektionseinheit in Test-/Kalibierrohr; Schritt **S09** Referenzierung der Kalibrierung (zumindest teilweise computerimplementierbar);

Dabei kann das Mess- und Auswerteverfahren in prozessualer Hinsicht insbesondere in die folgenden im Feld für den jeweiligen Anwendungsfall durchzuführenden Schritte unterteilt werden:

| | |
|---|---|
| S1 | Einführen der Messvorrichtung |
| S2 | Eingabe/Vorgabe Bewegungspfad |
| S3 | Messung starten |
| S4 | Vorgabe Auswertesequenz |
| S4a | Bestimmung von Nettopeak-Flächen (computerimplementierbar) |
| S4b | Bestimmung von Untergrundfläche(n) bei Peak(s) (computerimplementierbar) |
| S4c | Berechnung von Erkennungs- und Nachweisgrenzen für Peaks (computerimplementierbar) |
| S4d | Bestimmung der Aktivität aus Nettopeak-Flächen und Photopeak-Effizienzen (computerimplementierbar) |
| S4e | Messvorgang fortführen, sofern bestimmte Erkennungsgrenze > geforderte Erkennungsgrenze (computerimplementierbar) |
| S4f | Ausgabe "Entscheidungsmessung positiv", Detektion beenden (computerimplementierbar) |
| S4g | Ausgabe "Entscheidungsmessung negativ", Detektion beenden (computerimplementierbar) |
| S5 | Vorschub der Messvorrichtung, gegebenenfalls zurück zu Schritt S4 (computerimplementierbar) |
| S6 | Messung beenden, Messvorrichtung zurück verlagern (computerimplementierbar) |

Dabei können auch die folgenden den Messvorgang überprüfende Zwischenschritte vorgesehen sein, gegebenenfalls mit steuernder/regelnder Auswirkung auf den Ablauf der Messung:
**SR1** Abstützen bzw. Überprüfen der Abstützfunktion; **SR2** Anfahren bzw. Einnahme Initialposition; **SR3** Prüfen des Erreichens entweder eines Sensitivitätsschwellwerts oder Zeitmaximums; **SR4** Generieren eines axialabschnittsspezifischen Zwischenmessergebnisses; **SR5** Berücksichtigung einer standardgemäß oder nutzerspezifisch vorgegebenen Axialüberlappung
Dabei können Maßnahmen zur vorrichtungstechnischen Anpassung der Messvorrichtung an die jeweilige messtechnische Aufgabe oder Maßnahmen zur Anpassung von sich in diesem Zusammenhang ändernden Randbedingungen insbesondere in die folgenden Schritte unterteilt werden: Schritt **S11** Austauschen einer Strahlungsdetektionseinheit durch (Ent-)Kuppeln mit der Trageinrichtung; Schritt **S12** Erfassen des neuen Strahlungsdetektortyps (computerimplementierbar); Schritt **S13** Übernahme hinterlegter Kalibrierung, oder Aufforderung zur Neukalibrierung (computerimplementierbar); Schritt **S14** Erweitern der Messvorrichtung durch wenigstens einen weiteren Szintillationsdetektor; Schritt **S15** Erweitern der Messvorrichtung durch wenigstens eine weitere Trageinrichtung;
Dabei können die folgenden geometrischen Größen das Verständnis der Messung bzw. das Einrichten der jeweiligen Messanordnung erleichtern: Längserstreckungsachse X1; entsprechender (Längs-)Abschnitt x1, x2, ..., xn des Innenvolumens; Stützhebel x14 definiert durch Scherenspreizwinkel (Auslenkung) der Abstützkinematik; (gegebenenfalls kollimiertes) Sichtfeld x21 der Strahlungsdetektionseinheit; Vorschub Δx; Längsrichtung (x), radiale Richtung (r);
Im Folgenden werden Besonderheiten der Erfindung unter Bezugnahmen auf einzelne Figuren bzw. Ausführungsbeispiele erläutert.

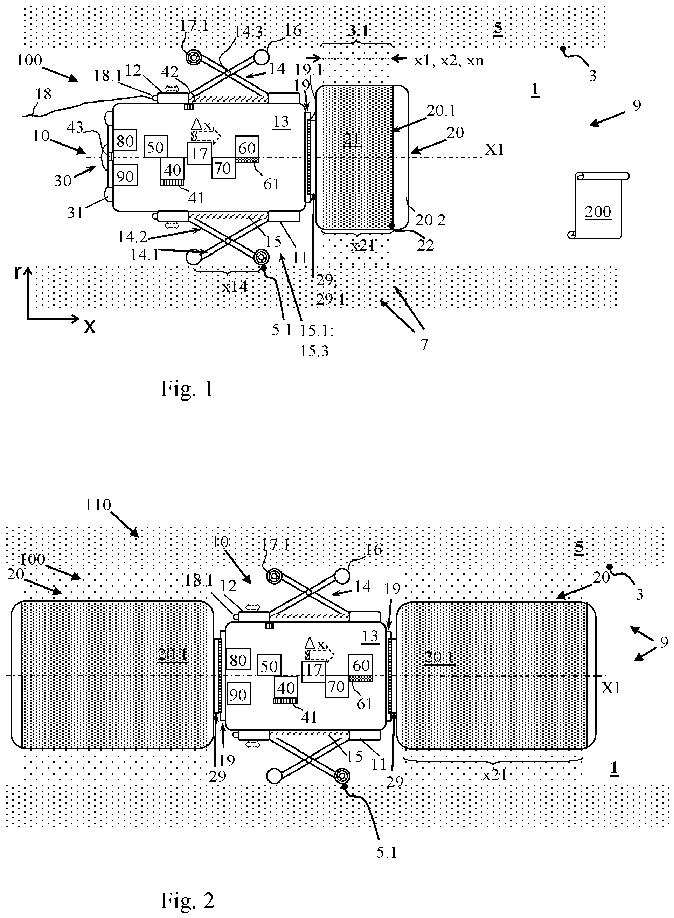

In **Fig. 1** ist exemplarisch eine Messvorrichtung 100 aufweisend die hier beschriebenen Merkmale illustriert. Die Trageinrichtung 10 ist im Innenvolumen positioniert und stützt sich autonom selbstregulierend zentrisch darin ab. Es wird in Abhängigkeit vom Fortschreiten der axialpositionsspezifischen Messung wenigstens eine Steuerungs-/Regelungsvorgabe insbesondere betreffend den Vorschub oder eine zukünftige axiale Messposition, basierend auf welcher die nächste Axialposition für den nächstfolgend zu messenden Axialabschnitt des Innenvolumens eingenommen werden kann, wahlweise vollautomatisch, wahlweise auch zumindest teilweise unterstützt durch Nutzerinteraktion. Die Benutzerschnittstelle 200 kann dabei auch drahtlos bzw. remote zugänglich bereitgestellt werden, beispielsweise auch mittels einer App auf einem Smartphone. Freilich kann die Benutzerschnittstelle 200 auch in Verbindung mit den weiteren in den Figuren dargestellten Ausführungsbeispielen bereitgestellt sein/werden.

In **Fig. 2** ist beispielhaft veranschaulicht, auf welche Weise die hier beschriebene kuppelnde Verbindung zwischen Strahlungsdetektionseinheit und Trageinrichtung für eine Anpassung der messtechnischen Randbedingungen bzw. für eine Skalierung der Größe und/oder Anzahl der implementierten Detektoren genutzt werden kann, insbesondere durch Vorsehen von wenigstens zwei Strahlungsdetektionseinheiten 20 bzw. Szintillationsdetektoreinheiten 20.1, welche beidseitig stirnseitig der Trageinrichtung 10 gekuppelt sind/werden. Im in Fig. 2 gezeigten Beispiel weisen die beiden Szintillationsdetektoreinheiten 20.1 eine Detektionslänge bzw. ein Sichtfeld x21 auf (gegebenenfalls kollimiert bzw. abgeschirmt), welches jeweils zumindest annähernd der axialen Längserstreckung der Trageinrichtung entspricht bzw. diese z.B. um mindestens 10% überragt, so dass wahlweise ein Messmodus implementiert werden kann, bei welchem ein Vorschub/Vortrieb wahlweise der halben oder der vollständigen verfügbaren Detektionslänge entspricht, je nachdem, ob eine Überprüfung der Messung/Detektion selbst oder eine möglichst hohe (zeitliche) Effizienz als Kriterium der entsprechenden messtechnischen Situation priorisiert werden soll. Mittels dieser Anordnung können dann z.B. durch schrittweisen Vorschub zwei separate Messfelder/Messflächen simultan erfasst werden, und bei/nach Verlagerung bzw. Positionierung der Trageinrichtung um ca. die Detektionslänge eines der Detektoren werden die beiden in Vorschubrichtung benachbarten Messfelder überprüft, um daraufhin einen Vorschub von ca. der dreifachen Detektionslänge eines der Detektoren vorzunehmen (diese Sequenz kann beliebig oft wiederholt werden, bis die gesamte zu überprüfende Länge, z.B. 12m, abgefahren ist). Wahlweise können beide Szintillationsdetektoreinheiten 20.1 auch stirnseitig nebeneinander angeordnet sein/werden, was jedoch größere Hebelkräfte auf die Abstützkinematik generiert. Strenggenommen erstreckt sich das Sichtfeld von der Detektionsfläche auch schräg zur Seite (Richtungsunabhängigkeit bei Szintillationsdetektion), jedoch ist das Sichtfeld x21 hier für eine Implementierung skizziert, bei welcher stirnseitige Abschirmungen für eine Detektion nur im Bereich der von der Detektionsfläche auf die Wandung projizierten (Mess-)Fläche sorgen. Wahlweise kann die Detektorlänge bzw. das Sichtfeld x21 bzw. die die Kristallmantelfläche 22 auch deutlich größer in der Länge gewählt werden, insbesondere auch in Abhängigkeit von etwaigen Krümmungen im Verlauf der zu durchfahrenden Messstrecke, insbesondere auch länger als die Länge der Trageinrichtung.

Das in Fig. 2 gezeigte Ausführungsbeispiel kann auch als Messvorrichtungs-Set 110 bereitgestellt sein, insbesondere umfassend mehrere Detektoren 20, die sich insbesondere im Durchmesser unterscheiden. Insofern sind auch die in den weiteren Figuren gezeigten Ausführungsbeispiele dahingehend zu verstehen, dass der jeweils gezeigte Detektor 20 über eine (Schnellverschluss-)Kupplung 19, 29 ausgetauscht bzw. größentechnisch optimiert für das jeweilige Innenvolumen bereitgestellt werden kann.

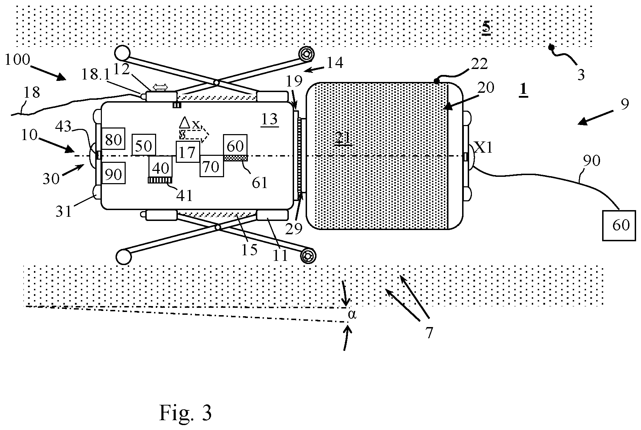

In **Fig. 3** ist eine Ausgestaltung veranschaulicht, mittels welcher vorteilhaft Innenvolumina mit Abmessungen bzw. Durchmessern im Bereich von z.B. 4cm bis 10cm messtechnisch untersucht werden können.

Beispielsweise kommen Strahlungsdetektionseinheiten bzw. Detektoreinheiten mit den folgenden Abmessungen zum Einsatz (insbesondere bei einer Masse im Bereich von ca. 500g bis 2.000g), bei bevorzugt zumindest annähernd zylindrischem Aufbau: Durchmesser ca. 30mm, Länge ca. 200mm, oder Durchmesser ca. 60mm, Länge ca. 150mm. Dabei ergibt sich z.B. eine Gesamtlänge der Messvorrichtung (Trageinrichtung mit gekuppeltem Detektor) im Bereich von 300mm.

Vorteilhaft stellt die Mantelfläche des Detektors den größten Außendurchmesser der Messvorrichtung dar, d.h., zumindest der Grundkörper der Trageinrichtung und auch die Kupplungskomponenten sind vorteilhaft kleiner im Durchmesser bzw. in den radialen Abmessungen dimensioniert. Lediglich Abstützarme oder dergleichen Bestandteile der Abstützkinematik überragen den Detektor in radialer Richtung.

Es ist zu verstehen, dass die hier beschriebenen Systemkomponenten auch den für den Anwendungsbereich der Freigabemessung vorgesehenen Normen und Richtlinien und Schutzarten genügen bzw. speziell dafür eingerichtet bzw. optimiert sein können.

Auch in Fig. 3 ist der vergleichsweise große Durchmesser des Detektors bzw. der Kristallmantelfläche 22 im Vergleich zu den Abmessungen des Grundkörpers der Trageinrichtung und auch im Vergleich zu den radialen Innenabmessungen des Innenvolumens zu erkennen. Sofern es der Streckenverlauf des Innenvolumens erlaubt (z.B. bei sehr geradlinigen Rohren), kann der Durchmesser der Kristallmantelfläche 22 maximiert werden bis hin zu nur wenige Prozent kleiner als der Innendurchmesser des Innenvolumens, so dass die Genauigkeit und Effizienz der Messung weiter verbessert werden kann.

Was eine zumindest für einige Anwendungen vorteilhafte drahtgebundene Datenübertragung betrifft, so kann zwischen Kabeln für eine (Bild-)Datenübertragung einerseits und wenigstens einem Kabel für die Strahlungsdatenübertragung andererseits unterschieden werden; letzteres ist vergleichsweise stark/dick und wird vorteilhaft mittig/zentrisch geführt. Das in Fig. 3 angedeutete Datenkabel 90 kann demnach auch zentrisch entlang der Messvorrichtung (zurück)geführt sein/werden, also auch an/auf der anderen Stirnseite der Messvorrichtung abgehen, insbesondere in Abhängigkeit von der gewünschten Verlagerungsrichtung der Messvorrichtung.

In Fig. 3 ist zudem ein Neigungswinkel α angedeutet, um welchen eine Längsausrichtung der Detektionseinheit bzw. der Trageinrichtung relativ zur Horizontalebene geneigt sein kann, falls das Innenvolumen (z.B. Rohr) sich nicht in horizontaler Richtung erstrecken sollte. Der Neigungswinkel α kann dabei bis zu 90° betragen, insbesondere bei lotrechten Wanddurchbrüchen oder Rohren. Die erfindungsgemäße Messung kann weitgehend unabhängig von einer räumlichen Ausrichtung des Innenvolumens implementiert werden.

Es ist zu verstehen, dass die in den Figuren gezeigten Komponenten der Abstützkinematik, insbesondere die gelenkig gelagerten Scherenschenkel, auch in größerer axialer Ausladung und/oder in größerer Anzahl realisiert sein können, beispielsweise in Reihe axial hintereinander zweifach. Der Fachmann kann ausgehend vom hier beschriebenen Abstützkonzept eine größentechnische Optimierung derart vornehmen, dass sich insbesondere in Bezug auf den Innendurchmesser des Innenvolumens und die axiale Erstreckung der Messvorrichtung bzw. des Detektors eine vorteilhafte Situation insbesondere betreffend die Abstützhebel(kräfte) ergibt.

Auch ist zu verstehen, dass in den Figuren gezeigte mechanische Vorspann-Komponenten alternativ auch als Pneumatik-Komponenten ausgestaltet werden können. Es hat sich gezeigt, dass eine pneumatisch generierte Vorspannung der Abstützkinematik einerseits vergleichsweise sensibel, andererseits auch mit sehr hoher Systemsicherheit implementiert werden kann.

Nicht zuletzt ist zu verstehen, dass in den Figuren gezeigte Befestigungsposition der Kamera auch andersartig gewählt werden kann, insbesondere in Abhängigkeit von der Verlagerungsrichtung bei fortschreitender Messung, z.B. dahingehend, dass die wenigstens eine Kamera wahlweise an der Stirnseite der Trageinrichtung und/oder an der Stirnseite der Detektoreinheit montierbar bzw. kuppelbar ist (vergleiche Fig. 3, angedeutete zweite Kamera stirnseitig des Detektors). Insofern kann die Messvorrichtung auch Kupplungskomponenten zum Kuppeln der Kamera an wenigstens zwei unterschiedlichen bevorzugt stirnseitigen Positionen aufweisen.

Was eine/die zumindest für manche Anwendungen besonders vorteilhafte drahtgebundene Anbindung der einzelnen Komponenten der Messvorrichtung insbesondere mittels Kabeln betrifft, so kann unterschieden werden zwischen einem vergleichsweise starken/dicken Kabel für die Übertragung der Detektionssignale bzw. Strahlungsmesswerte einerseits (Anbindung an den Detektor) und einem vergleichsweise schwachen/dünnen Kabel (z.B. Flachband) für die Übertragung von Bilddaten andererseits. Ersteres kann vorteilhaft mittig/zentrisch im Bereich der Kupplung und des Grundkörpers weitergeführt werden. Letzteres kann z.B. auch außen um die Komponenten der Messvorrichtung herum vorbeigeführt bzw. zurückgeführt werden.

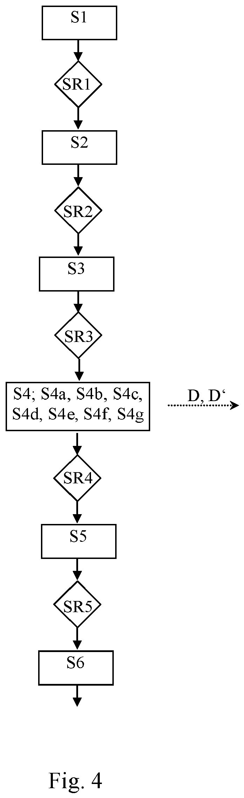

In den **Fig. 4****,** **Fig. 5****,** **Fig. 6** werden einzelne Verfahrensschritte erläutert, wobei auf die folgenden Strahlungsmessdaten D, Berechnungsdaten D` und Randbedingungen R Bezug genommen wird:
Strahlungsmessdaten **D** (insbesondere auch positionsbezogen); Messdaten Da betreffend Nettopeakflächen der Peaks; Db betreffend Untergrundflächen der Peaks; De betreffend einen Messzeitanteil (aktive Detektion) beim Detektionsvorgang (live time); Dd betreffend einen Totzeitanteil beim Detektionsvorgang (dead time); De betreffend Gesamt-Impulse; Berechnungsdaten **D'** insbesondere berechnet aus Strahlungsmessdaten; Berechnungsdaten D'f betreffend Erkennungsgrenzen der Peaks; Berechnungsdaten D'g betreffend Nachweisgrenzen der Peaks; Berechnungsdaten D'h betreffend eine Messunsicherheit durch Typ A-Unsicherheiten; Berechnungsdaten D'i betreffend einen (besten) Schätzwert für die Aktivität; Berechnungsdaten D'j betreffend eine/die Aktivität mit einseitigem Überdeckungsintervall von z.B. 95%;
Randbedingungen **R** im Auswerteverfahren; Randbedingung R1 betreffend einen Alpha-Wert und einen Beta-Wert für die Bestimmung EG/NWG (Erkennungsgrenze/Nachweisgrenze); Randbedingung R2 betreffend eine/die Messunsicherheit durch Typ B-Unsicherheiten; (geometrische) Randbedingung R3 betreffend die Messfläche; Randbedingung R4 betreffend eine/die zulässige Mittelungsfläche der Entscheidungsmessung; Randbedingung R5 betreffend eine/die Energiekalibrierung; Randbedingung R6 betreffend eine/die Halbwertsbreiten-Kalibrierung; Randbedingung R7 betreffend eine/die Photopeak-Effizienzkalibrierung;
Dabei werden die einzelnen Randbedingungen insbesondere im Zusammenhang mit den folgenden Schritten berücksichtigt: Randbedingung R2 in Schritt S1, Randbedingungen R3, R4 in Schritt S2, Randbedingungen R5, R6, R7 in Schritt S3, Randbedingungen R5, R6, R7 in Schritt S4a, Randbedingungen R1, R2, R3, R4, R7 in Schritt S4c, Randbedingungen R1, R2, R3, R4, R7 in Schritt S4d, Randbedingung R2 in Schritt S4e, Randbedingungen R1, R2, R3, R4, R5, R7 in Schritt S4f, Randbedingungen R1, R2, R3, R4, R5, R7 in Schritt S4g, Randbedingungen R1, R2, R3, R4 in Schritt S5;

Die in **Fig. 4** angedeuteten Strahlungsmessdaten D, D' werden im Wesentlichen im Zusammenhang mit den Schritten S4 generiert und können die hier jeweils spezifisch bezeichneten Daten Da bis D3 bzw. D'f bis D'j umfassen (Platzhalter "D" bzw. "D'").

Die Schritte S1 bis S6 sind als im Feld (vor Ort, in situ) vorgenommene messtechnische Schritte für eine jeweilige (Einzel-)Messung zu verstehen, welche den jeweiligen Messvorgang als solchen betreffen. Speziell die Schritte S4, S4a bis S4g sind zur (Daten-)Auswertung der jeweiligen (Einzel-)Messung vorgesehen und können demnach auch iterativ durchgeführt werden. Erwähnenswert ist, dass die hier skizzierte Reihenfolge dieser Schritte nicht notwendiger Weise eingehalten werden muss, insofern können auch einzelne Schritte isoliert durchgeführt werden, und/oder deren chronologische Position kann variieren, beispielsweise bezüglich der einzelnen Teilschritte Schritt S4a bis S4g. Schritt **S1** Einführen der Messvorrichtung (also der Trageinrichtung mit daran gekuppelter Strahlungsdetektionseinheit) in das Innenvolumen bzw. in eine/die Rohrleitung, wobei die Strahlungsdetektionseinheit auch in nicht vollständiger Überdeckung mit der das Innenvolumen umgebenden Wandung angeordnet sein kann; Schritt **S2** Eingabe/Vorgabe eines vordefinierten/vordefinierbaren Bewegungspfades (Fahrweg, Fahrstrecke) innerhalb des Innenvolumens; Schritt **S3** Messung starten, insbesondere bei positionsfester Messvorrichtung (stillstehend, kein Vorschub); Schritt **S4** Vorgabe der gewünschten Auswertesequenz, z.B. alle fünf Sekunden; Schritt **S4a** Bestimmung von Nettopeak-Flächen, insbesondere von Co-60-Peaks, Cs-137-Peaks, ...; Schritt **S4b** Bestimmung von Untergrundfläche(n) bei Peak(s); Schritt **S4c** Berechnung von Erkennungs- und Nachweisgrenzen für Peaks; Schritt **S4d** Bestimmung der Aktivität aus Nettopeak-Flächen und simulativ bestimmten Photopeak-Effizienzen; Schritt **S4e** Messvorgang fortführen, insbesondere in vordefinierter/momentaner Axialposition, sofern bestimmte Erkennungsgrenze größer > als geforderte Erkennungsgrenze; Schritt **S4f** Ausgabe "Entscheidungsmessung positiv", sofern berechnete Erkennungsgrenze kleiner < als geforderte Erkennungsgrenze und sofern berechnete Aktivitäten kleiner < als zulässige Aktivitäten abgeleitet aus FGW, dann messtechnische Maßnahme: Detektion insbesondere für die betreffende (Axial)Position beenden; Schritt **S4g** Ausgabe "Entscheidungsmessung negativ", sofern bestimmte Aktivitäten größer > als zulässige Aktivitäten abgeleitet aus FGW, dann messtechnische Maßnahme: Detektion insbesondere für die betreffende Position beenden; Schritt **S5** Vorschub der Messvorrichtung, insbesondere um z.B. 95% der Detektionslänge (bzw. Szintillationskristalllänge), sofern Entscheidungsmessung insbesondere für momentanen (Axial-)Abschnitt abgeschlossen und gefahrene (axiale) Strecke kleiner < als vorgegebener Bewegungspfad, Schritt S4 wiederholen; Schritt **S6** sofern gefahrene (axiale) Strecke größer gleich ≥ vorgegebener Bewegungspfades (Messreihe für den zu untersuchenden gesamten Bewegungspfad beendet), wird der Messvorgang beendet und die Messvorrichtung zum Ausgangspunkt der Messung zurück verlagert bzw. bewegt (motorisch oder wahlweise auch manuell). Wahlweise kann zum Herausziehen eines/des Kabelbaums eine automatisierte Kabeltrommel implementiert sein, also eine Einrichtung, mittels welcher das (jeweilige) Kabel bei sich überlagerndem Vorschub auf zumindest teilweise automatisierte Weise wieder geborgen bzw. eingeholt werden kann. Alternativ wird dem Nutzer systemseitig mitgeteilt, dass die Rohrsonde bzw. Messvorrichtung bereit ist zum Herausfahren bzw. zur Entnahme, was durch den Nutzer bestätigt werden kann, so dass im Zuge eines Herausfahrens manuell am Kabelbaum gezogen werden kann, synchron zu einer gegebenenfalls automatisierten motorischen Verlagerung.

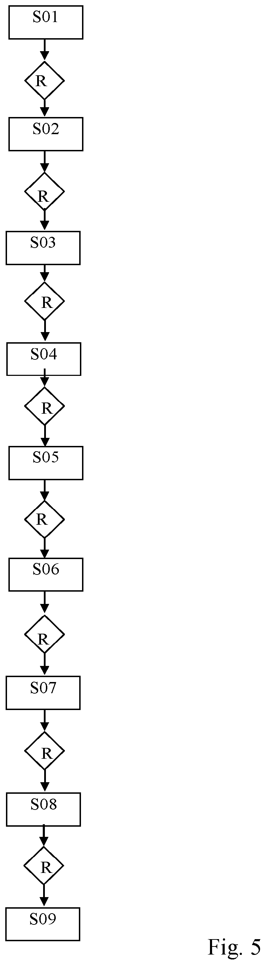

Aus **Fig. 5** sind Maßnahmen ersichtlich, welche im Zusammenhang mit einer anwendungsspezifischen Optimierung der Datengüte stehen. Die Schritte S01 bis S09 sind insbesondere als vorbereitende Schritte zu verstehen, die spezifisch je Messanordnung insbesondere zur Kalibrierung durchgeführt werden können; gleichwohl können zumindest einige dieser Schritte auch während einer Messung erfolgen, insbesondere bei einem Austausch eines Szintillationsdetektors, z.B. bei sich änderndem Innendurchmesser, insbesondere die Schritte S06, S07, S09. Zudem ist erwähnenswert, dass die hier skizzierte Reihenfolge dieser Schritte nicht notwendiger Weise eingehalten werden muss, insofern können auch einzelne Schritte isoliert durchgeführt werden, und/oder deren chronologische Position kann variieren. Schritt **S01** Energiekalibrierung, insbesondere durch Handhabung nur des Strahlungsdetektors (bzw. der Szintillationsdetektoreinheit) mittels radioaktiver Kalibrierquellen; Schritt **S02** Halbwertsbreitenkalibrierung, insbesondere durch Handhabung nur des Strahlungsdetektors (nicht der Trageinrichtung) mittels radioaktiver Kalibrierquellen; Schritt **S03** Modellierung des Strahlungsdetektors (bzw. der Szintillationsdetektoreinheit) im Simulationsmodell, beispielsweise basierend auf einem MCNP-Ansatz (so genannter Monte Carlo N-Particle Transport Code), TRACER (spezieller Typ eines Monte Carlo-Simulators), oder dergleichen; Schritt **S04** Durchführung experimenteller Strahlungsdetektionen (bzw. Szintillationsdetektionen) mit radioaktiven Kalibrierquellen, insbesondere in einer relativen Anordnung lateral zum Strahlungsdetektor auf Höhe der abschließenden Kristallmantelfläche des Detektors; Schritt **S05** Validierung des Simulationsmodells durch Vergleich von Simulation zu Experiment, insbesondere durch Vergleich simulierter Photopeak-Effizienzen zu experimentell bestimmten Photopeak-Effizienzen; Schritt **S06** Montage der wenigstens einen Strahlungsdetektionseinheit an der Trageinrichtung, insbesondere durch Kuppeln der Strahlungsdetektionseinheit zentrisch stirnseitig mit dem Grundkörper der Trageinrichtung; Schritt **S07** Erfassen insbesondere des Typs des verwendeten Strahlungsdetektors in Auswertesoftware, insbesondere durch entsprechende automatische/autarke Erkennung oder durch manuelle Eingabe über eine/die Benutzerschnittstelle (wahlweise an der Trageinrichtung oder remote bzw. per App); Schritt **S08** Einführen Trageinrichtung mit Strahlungsdetektionseinheit in Test-/Kalibierrohr, insbesondere zwecks Überprüfung des in der Software ausgewählten Strahlungsdetektors, wobei das Testrohr z.B. durch Rohr mit verbauter radioaktiver Kalibrierquelle gebildet ist, wobei eine Überprüfung insbesondere unter Bezugnahme auf Aktivitätsparameter betreffend Co-60 und Cs-137 erfolgen kann; Schritt **S09** vorgenommene Kalibrierung für den jeweiligen Messvorgang als Referenz hinterlegen, insbesondere durch Bestätigung/Korrelation von Kalibiervorgang und tatsächlicher Messanordnung; der Schritt S09 kann auch ein Abrufen einer von mehreren detektorspezifisch hinterlegten Kalibrierungen umfassen, z.B. für messtechnische Projekte, bei welchen unterschiedliche Szintillationsdetektoren für einzelne Abschnitte des zu untersuchenden Innenvolumens vorteilhafterweise genutzt werden können/sollen.

Die Schritte S01 bis S08 liefern als Ergebnis eine Energie- und Halbwertsbreitenkalibrierung, die unabhängig von einer spezifischen Messordnung ist, und eine Photopeak-Effizienzkalibrierung, die abhängig von der jeweiligen Messordnung ist, wobei durch diese Schritte ein validiertes/validierbares Verfahren zur Bestimmung der Photopeak-Effizienzen im Wertebereich der jeweiligen Messanordnungen bereitgestellt werden kann.

In Fig. 5 ist zwischen den einzelnen Schritten jeweils ein Platzhalter "R" als zu berücksichtigende Randbedingung angegeben; in der Beschreibung wird näher erläutert, welche Randbedingung R1 bis R7 im Zusammenhang mit welchem Schritt jeweils besonders beachtlich sein kann.

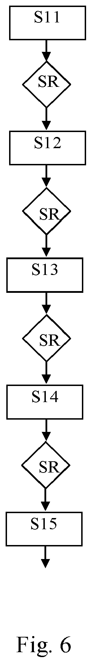

In **Fig. 6** sind Schritte S11 bis S15 veranschaulicht, welche im Zusammenhang mit einer individuellen Ausstattung/Anpassung/Einrichtung der Messvorrichtung stehen, wahlweise durch Austausch oder Ergänzung einer Szintillationsdetektoreinheit, wahlweise durch Austausch oder Ergänzung einer (zusätzlichen) Trageinrichtung. Derartige Maßnahmen haben beispielsweise auch Bedeutung im Zusammenhang mit messtechnischen Fehlern oder dem Vorsehen von Redundanz, was insbesondere hinsichtlich kurzer Begehungszeitfenster für kerntechnische Anlagen von Vorteil sein kann. Beispielsweise wird eine Szintillationsdetektoreinheit mit größerer Detektionslänge und/oder größerem Durchmesser verbaut. Beispielsweise wird eine zweite Trageinrichtung vorgesehen, insbesondere in einer stirnseitigen Anordnung an einer/der bereits an einer ersten Trageinrichtung montierten Strahlungsdetektionseinheit, insbesondere in einer Primary/Secondary-Abhängigkeit. Gemäß Schritt **S11** erfolgt ein Austauschen einer Strahlungsdetektionseinheit durch (Ent-)Kuppeln mit der Trageinrichtung; gemäß Schritt **S12** erfolgt ein Erfassen des neuen Strahlungsdetektortyps; gemäß Schritt **S13** erfolgt eine Übernahme hinterlegter Kalibrierung, oder eine Aufforderung zur Neukalibrierung; gemäß Schritt S14 erfolgt ein Erweitern der Detektionskapazität der Messvorrichtung durch wenigstens einen weiteren Szintillationsdetektor; gemäß Schritt **S15** erfolgt ein Erweitern der Abstütz- und/oder Vortriebskapazität der Messvorrichtung durch Kuppeln wenigstens einer weiteren Trageinrichtung.

In Fig. 6 ist zwischen den einzelnen Schritten jeweils ein Platzhalter "SR" als gegebenenfalls durchzuführende Maßnahme (auch manuell) im Zusammenhang mit der Implementierung der Messanordnung angegeben; die in der Beschreibung erläuterten Maßnahmen SR1 bis SR5 können je nach Konstellation jeweils relevant sein/werden. Dabei kann eine "SR"-Maßnahme auch eine Nutzerinteraktion betreffend das Kuppeln eines Detektors und/oder eine Eingabe über die Benutzerstelle umfassen, insbesondere in Kombination mit den Schritten S11 bis S15.

### Bezugszeichenliste

- 1: Innenvolumen insbesondere eines Rohres oder einer Leitung
- 3: Innenmantelfläche
- 3.1: Messfläche bzw. Innenmantelflächenabschnitt
- 5: Innenwandung, z.B. Rohrwandung
- 5.1: Kontakt-/Abstützpunkt
- 7: Messobjekt (Untersuchungsgegenstand)
- 9: Messanordnung insbesondere definiert durch Messfläche, Abstand zu Detektor, Materialvolumen/-dichte
- 10: verlagerbare Trageinrichtung (Trägersystemkomponente)
- 11: erster Ring, insbesondere fest/fixiert angeordnet
- 12: zweiter Ring, gleitend gelagert
- 13: Grundkörper
- 14: Abstützkinematik, insbesondere Scherenkinematik
- 14.1: erster Schenkel (Abstützsystemkomponente)
- 14.2: zweiter Schenkel (Abstützsystemkomponente)
- 14.3: Gelenk
- 15: Vorspannmittel, insbesondere (Zug-)Federeinheit und/oder pneumatische Mittel, insbesondere eingerichtet zur Vorspannung in axialer Richtung
- 15.1: Federelement
- 15.3: pneumatische Mittel
- 16: Rad, Rolle, Raupe oder dergleichen Innenwandung-Kontaktmittel der Abstützkinematik
- 17: Antriebs-/Führungseinheit bzw. Antriebseinheit
- 17.1: Antriebselement (Antriebssystemkomponente)
- 18: Zugmittel
- 18.1: Zugpunkt
- 19: Kupplung(steil), insbesondere Schnellverschlusskupplung(steil), insbesondere stirnseitig
- 19.1: Adapter bzw. Schnellverschlusskupplungssegment
- 20: Strahlungsdetektionseinheit (Detektionssystemkomponente)
- 20.1: Szintillationsdetektoreinheit
- 20.2: Vervielfacher-Komponente, insbesondere Silizium-Photomultiplier (SiPM)
- 21: Detektionsfläche bzw. axiale Detektionslänge
- 22: Kristallmantelfläche
- 29: Kupplung(steil), insbesondere Schnellverschlusskupplung(steil), insbesondere stirnseitig
- 29.1: Schnellverschlusskupplungssegment
- 30: Kameraeinheit (bildgebende Systemkomponente)
- 31: Lichtquelle
- 40: Positionserfassungseinheit
- 41: Positionssensor bezüglich absoluter insbesondere axialer Position (Verortungssystemkomponente)
- 42: Positionssensor bezüglich relativer insbesondere radialer Position, insbesondere auch bezüglich Stellglied der Abstützkinematik
- 43: wenigstens ein weiterer Sensor insbesondere aus der folgenden Gruppe: Radialabstandssensor, Metallsensor, Beschleunigungssensor
- 50: Steuerungs-/Regelungseinheit
- 60: Recheneinheit/Logikeinheit, insbesondere Datenauswerteeinheit
- 61: Datenspeicher
- 70: Energiespeichereinheit
- 80: Kommunikationseinheit (insbesondere für Drahtloskommunikation)
- 90: Datentransfermittel, insbesondere Datenkabel
- 100: Messvorrichtung (Stichwort: Rohrsonde)
- 110: Set umfassend die Messvorrichtung und mehrere Kupplungen und Detektoren
- 200: Benutzerschnittstelle, insbesondere gekoppelt an Recheneinheit
- D: Strahlungsmessdaten
- Da: Nettopeakflächen der Peaks
- Db: Untergrundflächen der Peaks
- Dc: live time
- Dd: dead time
- De: Gesamt-Impulse
- D': Berechnungsdaten insbesondere aus Strahlungsmessdaten
- D'f: Erkennungsgrenzen der Peaks
- D'g: Nachweisgrenzen der Peaks
- D'h: Messunsicherheit durch Typ A-Unsicherheiten
- D'i: Schätzwert für Aktivität
- D'j: Aktivität mit einseitigem Überdeckungsintervall von z.B. 95%
- M: Messobjektmerkmal, z.B. Innendurchmesser (bzw. Radius bzw. radiale Entfernung zwischen Detektor und Messfläche), Außendurchmesser, Material, Wandstärke (bzw. Dichte, gegebenenfalls daraus ermittelt), Neigungswinkel, axialer Verlagerungsweg
- R: Randbedingung im Auswerteverfahren
- R1: Alpha-Wert und Beta-Wert für Bestimmung EG/NWG
- R2: Messunsicherheit durch Typ B-Unsicherheiten
- R3: Messfläche (geometrische Randbedingung)
- R4: Zulässige Mittelungsfläche der Entscheidungsmessung
- R5: Energiekalibrierung (computerimplementierbar)
- R6: Halbwertsbreiten-Kalibrierung (computerimplementierbar)
- R7: Photopeak-Effizienzkalibrierung (zumindest teilweise computerimplementierbar)
- S01: Energiekalibrierung (zumindest teilweise computerimplementierbar)
- S02: Halbwertsbreitenkalibrierung (zumindest teilweise computerimplementierbar)
- S03: Modellierung Strahlungsdetektor im Simulationsmodell (zumindest teilweise computerimplementierbar)
- S04: experimentelle Strahlungsdetektion (Szintillationsdetektion)
- S05: Validierung des Simulationsmodells (zumindest teilweise computerimplementierbar)
- S06: Montage Strahlungsdetektionseinheit an Trageinrichtung
- S07: Erfassen des Strahlungsdetektortyps (computerimplementierbar)
- S08: Einführen Trageinrichtung mit Strahlungsdetektionseinheit in Test-/Kalibierrohr
- S09: Referenzierung der Kalibrierung (zumindest teilweise computerimplementierbar)
- S1: Einführen der Messvorrichtung
- SR: Maßnahmen (auch manuell) im Zusammenhang mit der Implementierung der Messanordnung
- SR1: Abstützen bzw. Überprüfen der Abstützfunktion (zumindest teilweise computerimplementierbar)
- S2: Eingabe/Vorgabe Bewegungspfad (zumindest teilweise computerimplementierbar)
- SR2: Anfahren bzw. Einnahme Initialposition (zumindest teilweise computerimplementierbar)
- S3: Messung starten (computerimplementierbar)
- SR3: Prüfen des Erreichens entweder eines Sensitivitätsschwellwerts oder Zeitmaximums (computerimplementierbar)
- S4: Vorgabe Auswertesequenz (computerimplementierbar)
- SR4: Generieren eines axialabschnittsspezifischen Zwischenmessergebnisses (computerimplementierbar)
- S4a: Bestimmung von Nettopeak-Flächen (computerimplementierbar)
- S4b: Bestimmung von Untergrundfläche(n) bei Peak(s) (computerimplementierbar)
- S4c: Berechnung von Erkennungs- und Nachweisgrenzen für Peaks (computerimplementierbar)
- S4d: Bestimmung der Aktivität aus Nettopeak-Flächen und Photopeak-Effizienzen (computerimplementierbar)
- S4e: Messvorgang fortführen, sofern bestimmte Erkennungsgrenze > geforderte Erkennungsgrenze (computerimplementierbar)
- S4f: Ausgabe "Entscheidungsmessung positiv", Detektion beenden (computerimplementierbar)
- S4g: Ausgabe "Entscheidungsmessung negativ", Detektion beenden (computerimplementierbar)
- S5: Vorschub der Messvorrichtung, gegebenenfalls zurück zu Schritt S4 (computerimplementierbar)
- SR5: Berücksichtigung einer standardgemäß oder nutzerspezifisch vorgegebenen Axialüberlappung
- S6: Messung beenden, Messvorrichtung zurück verlagern (computerimplementierbar)
- S11: Austauschen einer Strahlungsdetektionseinheit durch (Ent-)Kuppeln mit der Trageinrichtung
- S12: Erfassen des neuen Strahlungsdetektortyps (computerimplementierbar)
- S13: Übernahme hinterlegter Kalibrierung, oder Aufforderung zur Neukalibrierung (computerimplementierbar)
- S14: Erweitern der Messvorrichtung durch wenigstens einen weiteren Szintillationsdetektor
- S15: Erweitern der Messvorrichtung durch wenigstens eine weitere Trageinrichtung
- X1: Längserstreckungsachse
- x1, x2, ..., xn: (Längs-)Abschnitt des Innenvolumens
- x14: Stützhebel definiert durch Scherenspreizwinkel (Auslenkung) der Abstützkinematik
- x21: (kollimiertes) Sichtfeld der Strahlungsdetektionseinheit
- Δx: Vorschub
- x: Längsrichtung
- r: radiale Richtung
- α: Neigungswinkel relativ zur Horizontalebene

## Patentansprüche

1. Verfahren zur Strahlungsdetektion innerhalb eines Innenvolumens (1) insbesondere eines Rohres, eines Wanddurchbruchs oder einer Leitung, wobei die Strahlungsdetektion mittels wenigstens einer Strahlungsdetektionseinheit (20) erfolgt, wobei die Strahlungsdetektionseinheit (20) mittels einer Trageinrichtung (10) innerhalb des Innenvolumens (1) verlagerbar positioniert wird, wobei positionsbezogen Strahlungsmessdaten (D) bezüglich einer Messfläche (3.1) erfasst werden;
**dadurch gekennzeichnet, dass** die Strahlungsdetektion bezüglich eines geometrisch vordefinierten/vordefinierbaren Abschnitts des Innenvolumens (1) durch Szintillationsmessung erfolgt, wobei das Verfahren das Vorgeben einer vordefinierbaren Verlagerung oder Position der Strahlungsdetektionseinheit (20) mittels der Trageinrichtung (10) in Abhängigkeit von wenigstens einem auf den erfassten Strahlungsme ssdaten basierenden Steuerungs-/Regelungsparameter umfasst, insbesondere relativ zum geometrisch vordefinierten und messtechnisch bereits erfassten Abschnitt.

2. Verfahren nach dem vorhergehenden Verfahrensanspruch, wobei das Verfahren auf geregelte Weise als positionsbezogene Entscheidungsmessung durchgeführt wird, indem messtechnisch bestimmte positionsbezogene massen- und/oder oberflächenspezifische Strahlungsaktivitäten erfasst werden und insbesondere durch Bezugnahme auf Freigabewerte und einen Grad der Ausschöpfung als Regelungsparameter für eine zeitabhängige Positionierung der Trageinrichtung (10) vorgegeben werden.

3. Verfahren nach einem der vorhergehenden Verfahrensansprüche, wobei das Verfahren das Vorgeben eines vordefinierbaren axialen Vorschubs (Δx) in Abhängigkeit von wenigstens einem Steuerungs-/Regelungsparameter betreffend radioaktive Kontaminations- oder Aktivierungsschwellwerte gemäß massen- und/oder oberflächenspezifischen Freigabewerten umfasst, wobei das Verfahren als eine oder mehrere Entscheidungsmessungen durchgeführt wird, indem die positionsbezogenen Strahlungsmessdaten (D) entweder als eine Ausschöpfung von 1 erreichend oder unterscheitend ausgewertet werden.

4. Verfahren nach einem der vorhergehenden Verfahrensansprüche, wobei die Verlagerung der Trageinrichtung mit der Strahlungsdetektionseinheit in einen entsprechenden vordefinierbaren Abschnitt des Innenvolumens (1) in Abhängigkeit vom Überschreiten eines vordefinierbaren Sensitivitätsschwellwerts vorgegeben wird; und/oder wobei das Verfahren eine aktive zeitabhängige Regelung eines/des axialen Vorschubs (Δx) in Abhängigkeit vom Überschreiten eines/des entsprechenden Sensitivitätsschwellwerts umfasst, insbesondere eines/des mittels der Trageinrichtung (10) ausgeübten axialen Vorschubs.

5. Verfahren nach einem der vorhergehenden Verfahrensansprüche, wobei eine positionsspezifische Mindestdetektionszeit in Abhängigkeit von der Sensitivität während des Messvorgangs zumindest annähernd in Echtzeit berechnet wird und ein/der Vorschub (Δx) basierend auf der Sensitivität und der messtechnisch bestimmten Aktivitätsinventare gesteuert/geregelt wird.

6. Verfahren nach einem der vorhergehenden Verfahrensansprüche, wobei eine Abstützung der Trageinrichtung (10) an einer das Innenvolumen (1) umgebenden Wandung (5) selbstregulierend insbesondere durch federmechanische und/oder pneumatisch generierte Vorspannung vorgegeben wird, insbesondere zentral vorgegeben und über den Umfang verteilt bezüglich wenigstens dreier Kontakt-/Abstützpunkte (5.1) an der Wandung wirkend.

7. Verfahren nach einem der vorhergehenden Verfahrensansprüche, wobei die Detektionsfläche (21) der Strahlungsdetektionseinheit (20) durch wenigstens einen Szintillationskristall definiert ist/wird; und/oder wobei das jeweilige Szintillationssignal durch einen Vervielfacher (20.2), insbesondere durch einen Silizium-Photomultiplier detektiert und verstärkt wird.

8. Computerprogrammprodukt umfassend Befehle, die bei Ausführung des Computerprogrammproduktes auf einem Computer diesen dazu veranlassen, ein Verfahren mit Schritten gemäß einem der Verfahrensansprüche 1 bis 9 mittels des Computers auszuführen, insbesondere Computerprogrammprodukt eingerichtet zum gesteuerten/geregelten Vorgeben einer Verlagerung oder Soll-Position einer/der Strahlungsdetektionseinheit (20) mittels einer/der Trageinrichtung (10) einer/der Messvorrichtung basierend auf wenigstens einem in Abhängigkeit von positionsbezogen durch Szintillationsmessung erfassten Strahlungsmessdaten generierten Steuerungs-/Regelungsparameter.

9. Messvorrichtung (100), eingerichtet zum Ausführen eines Verfahrens nach einem der Verfahrensansprüche 1 bis 7, aufweisend eine/die Trageinrichtung (10) mit wenigstens einer Antriebs-/Führungseinheit (17) umfassend wenigstens ein Antriebselement (17.1) und mit einer Recheneinheit (60) eingerichtet zum Auswerten von Detektionssignalen sowie wenigstens eine insbesondere mittels einer Kupplung (19, 29) stirnseitig an der Trageinrichtung befestigte Strahlungsdetektionseinheit (20) mit wenigstens einer Szintillationsdetektoreinheit (20.1), wobei die Strahlungsdetektionseinheit bevorzugt axial versetzt zu einer mit wenigstens einer das für die Szintillationsmessung vorgesehene Innenvolumen umgebenden Wandung interagierenden Abstützkinematik (14) der Trageinrichtung (10) angeordnet ist; und/oder wobei die radialen Abmessungen der Szintillationsdetektoreinheit größer sind als die radialen Abmessungen einer/der Kupplung zwischen Strahlungsdetektionseinheit und Trageinrichtung, und bevorzugt auch größer sind als die radialen Abmessungen eines/des Grundkörpers der Trageinrichtung.

10. Messvorrichtung (100) nach dem vorhergehenden Vorrichtungsanspruch, wobei die vordefinierbare Verlagerung der Strahlungsdetektionseinheit (20) in Abhängigkeit vom Überschreiten eines für die jeweilige Detektion insbesondere basierend auf radionuklidspezifischen Freigabewerten vordefinierten/vordefinierbaren Sensitivitätsschwellwerts vorgebbar ist, indem in Abhängigkeit von wenigstens einem auf erfassten positionsbezogenen Strahlungsmessdaten basierenden Steuerungs-/Regelungsparameter eine vordefinierte Verlagerung der Strahlungsdetektionseinheit (20) mittels der Trageinrichtung (10) vorgebbar ist, insbesondere mittels einer Steuerungs-/Regelungseinheit (50) der Messvorrichtung, welche in steuerungstechnischer Kommunikation mit wenigstens einem Antriebselement (17.1) einer/der Antriebs-/Führungseinheit (17) der Trageinrichtung steht.

11. Messvorrichtung (100) nach einem der vorhergehenden Vorrichtungsansprüche, wobei die vordefinierbare Verlagerung ein axialer Vorschub (Δx) ist, welcher in Abhängigkeit von einer/der Längserstreckung der wenigstens einen Szintillationsdetektoreinheit (20.1) und in Abhängigkeit vom Überscheiten eines/des Sensitivitätsschwellwerts vordefiniert wird.

12. Messvorrichtung (100) nach einem der vorhergehenden Vorrichtungsansprüche, wobei die Messvorrichtung wenigstens eine grafische Benutzerschnittstelle eingerichtet zur Visualisierung von durch Freigabemessung freigegebenen Längsabschnitten und messtechnisch noch nicht freigegebenen Längsabschnitten aufweist.

13. Messvorrichtung (100) nach einem der vorhergehenden Vorrichtungsansprüche, wobei die Messvorrichtung (100) eingerichtet ist, den Vorschub der Trageinrichtung (10) steuerungs-/regelungstechnisch als Funktion von momentanen Detektionssignalen vorzugeben, derweil die Abstützung der Trageinrichtung (10) innerhalb des Innenvolumens selbstregulierend insbesondere durch federmechanische und/oder pneumatisch generierte Vorspannung vorgegeben wird.

14. Set umfassend eine Messvorrichtung nach einem der vorhergehenden Vorrichtungsansprüche und wenigstens zwei Detektor-Kupplungen und wenigstens zwei Szintillationsdetektoreinheiten.

15. Verwendung wenigstens einer verlagerbaren Trageinrichtung (10) mit daran gekuppelter Szintillationsdetektoreinheit (10.1) zum Bereitstellen einer innerhalb eines Innenvolumens (1) mittels einer Abstützkinematik (14) abstützbaren Messvorrichtung (100) eingerichtet zum Ausführen eines Verfahrens zur Szintillationsstrahlungsdetektion durch Positionieren und vordefiniertes Verlagern der Szintillationsdetektoreinheit bezüglich einer Messfläche (3.1) in Abhängigkeit von wenigstens einem auf erfassten Strahlungsmessdaten basierenden Steuerungs-/Regelungsparameter, insbesondere eines Verfahrens gemäß einem der Ansprüche 1 bis 7, wobei die Abstützkinematik (14) durch wenigstens ein zentrales Stellglied (12) bezüglich der Radialposition einer Mehrzahl von Kontakt-/Abstützpunkten (5.1) aktuierbar ist, wahlweise selbstregulierend vorgespannt gelagert oder durch aktive Aktuation.
